# EUROPEAN PATENT APPLICATION

(11) **EP 4 471 562 A1**
(43) Date of publication of application: **04.12.2024**
(21) Application number: 23841983.2
(22) Date of filing: 16.06.2023
(51) Int. Cl.: G06F 3/04842

(54) **METHOD FOR DISPLAYING CALENDAR VIEW, AND ELECTRONIC DEVICE AND READABLE STORAGE MEDIUM**

(30) Priority: 19.07.2022 CN 202210848482
(71) Applicant: Honor Device Co., Ltd., Shenzhen, Guangdong 518040 (CN)
(72) Inventor: BAO, Xintong, Shenzhen, Guangdong 518040 (CN)
(74) Representative: Gill Jennings & Every LLP
(86) International application number: PCT/CN2023/100769
(87) International publication number: WO 2024/016917

(57) **Abstract**

This application discloses a calendar view display method, an electronic device, and a readable storage medium, and pertains to the field of terminal technologies. The method includes: starting a calendar application in response to a triggering operation on the calendar application; and displaying a first interface of the calendar application, where the first interface displays schedule information of at least two schedules, the schedule information of the at least two schedules is displayed in a form of a card, and for schedule information of each of the at least two schedules, an amount of information displayed in the form of the card is greater than an amount of information displayed in a list view. In this application, schedule information is displayed in a form of a card, to ensure that more detailed information of a schedule is displayed. A user can learn more information without performing a tap operation on the displayed card, thereby improving convenience and efficiency of viewing detailed information of a schedule by the user.

## Description

This application claims priority to Chinese Patent Application No. 202210848482.0, filed with the China National Intellectual Property Administration on July 19, 2022 and entitled "CALENDAR VIEW DISPLAY METHOD, ELECTRONIC DEVICE, AND READABLE STORAGE MEDIUM", which is incorporated herein by reference in its entirety.

### TECHNICAL FIELD

This application relates to the field of terminal technologies, and in particular, to a calendar view display method, an electronic device, and a readable storage medium.

### BACKGROUND

As frequency of using electronic devices increases, more users manage personal schedules by using a calendar application, and the user may manage the schedules based on schedule information displayed in any calendar view in the calendar application. However, as the pace of work and life quickens, more schedules are recorded in the calendar application. Therefore, schedule information of a plurality of schedules is usually displayed in a form of a list.

### SUMMARY

This application provides a calendar view display method, an electronic device, and a readable storage medium, to resolve a problem that content of displayed schedule information is relatively monotonous because relatively less schedule information is displayed in a calendar view in a related technology. The technical solutions are as follows:

According to a first aspect, a calendar view display method is provided, and the method includes:
starting a calendar application in response to a triggering operation on the calendar application; and
displaying a first interface of the calendar application, where the first interface displays schedule information of at least two schedules, the schedule information of the at least two schedules is displayed in a form of a card, and for schedule information of each of the at least two schedules, an amount of information displayed in the form of the card is greater than an amount of information displayed in a list view.

In this way, schedule information is displayed in a form of a card, to ensure that more detailed information of a schedule is displayed. A user can learn more information without performing a tap operation on the displayed card, thereby improving convenience and efficiency of viewing detailed information of a schedule by the user.

In an example of this application, the card displays basic information and target information that are of a corresponding schedule, the target information is information that cannot be displayed in the list view, and the target information includes one or more of a schedule source, a schedule classification, a schedule inviter, and a schedule participant.

In this way, the information that cannot be displayed in the list view can be displayed by using the card, so that when information about a schedule is displayed in a form of the card, a user can learn more information about the schedule to reduce operations of viewing information by the user, thereby improving information display efficiency and efficiency of viewing information by the user.

In an example of this application, a title region, a first operation region, an information display region, and a second operation region are disposed in the card.

The title region is used to display the schedule source, the first operation region is used to display an edit option for performing an editing operation on schedule information in the card, the information display region is used to display basic information and target information that are of a corresponding schedule, and the second operation region is used to display a dedicated operation option for schedule information displayed in the card.

In this way, different content can be displayed in different regions in the card, so that richness and beauty of information display are ensured, and convenience of information identification by a user is ensured.

In an example of this application, a hot card region is disposed in the card, a third-party interface can be displayed after information displayed in the hot card region is triggered, and the third-party interface is another interface different from the first interface in the calendar application, or the third-party interface is an interface of a third-party application.

In this way, the third-party interface can be linked to by using the hot card region, thereby improving display richness and interaction richness.

In an example of this application, the displaying a first interface of the calendar application includes:
displaying a second interface of the calendar application, where the second interface displays schedule information of at least two schedules that is displayed in a form of the list view; and
switching a display form of the schedule information of the at least two schedules from the list view to the form of the card in response to a triggering operation on a style switching option in the second interface, to display the first interface.

In this way, switching between the second interface and the first interface can be implemented by using the style switching option in the second interface, thereby improving interface switching efficiency.

In an example of this application, the displaying a first interface of the calendar application includes:
displaying a second interface of the calendar application, where the second interface displays schedule information of at least two schedules that is displayed in a form of the list view;
displaying a first editing box in response to a triggering operation on a first edit option in the second interface;
displaying a setting interface in response to a triggering operation on a set option in the first editing box; and
displaying the first interface in response to a setting operation in the setting interface.

In this way, a display form of schedule information is set in the setting interface, so that not only a schedule information display manner is switched, but also richness of setting the schedule information display form is increased.

In an example of this application, the displaying the first interface in response to a setting operation in the setting interface includes:
displaying a schedule view selection interface in response to a triggering operation on a schedule display style option in the setting interface;
switching a display form of the schedule information of the at least two schedules from the list view to the form of the card in response to a triggering operation on a card view option in the schedule view selection interface; and
displaying the first interface in response to a triggering operation on a return option in the setting interface.

In this way, the schedule view selection interface is displayed in the setting interface, so that interface display richness and interaction richness are increased.

In an example of this application, the method further includes:
receiving a first user operation when the setting interface is displayed;
determining a first important participant in response to the first user operation, and adding the first important participant to an important participant list; and
displaying a third interface of the calendar application in response to a second user operation, where if a first schedule whose participant includes the first important participant exists in the at least two schedules in the third interface, a card of the first schedule includes an important identifier.

In this way, schedule importance can be improved by setting an important participant. In addition, for a schedule including the important participant, a card of the schedule can include an important identifier, so that a user can learn importance of the schedule by using the important identifier, thereby improving schedule reminding efficiency.

In an example of this application, the method further includes:
after the third interface is displayed, deleting the first important participant from the important participant list in response to a third user operation; and
displaying a fourth interface in response to a fourth user operation, where in the fourth interface, the important identifier in the card of the first schedule disappears.

In this way, a deletion operation is performed on an important participant recorded in the important participant list, so that flexibility of setting an important participant is improved, and interaction with a user is improved.

In an example of this application, the method further includes:
after the third interface is displayed, displaying, in the third interface, a schedule other than the first schedule in the at least two schedules in response to a third user operation.

In this way, a corresponding schedule is displayed based on schedule importance, which helps a user quickly learn a specific important schedule from a plurality of displayed schedules, thereby improving schedule reminding efficiency.

In an example of this application, the method further includes:
displaying a schedule detail interface of the first schedule in response to a triggering operation on schedule information of the first schedule, where the first schedule is any one of the at least two schedules;
displaying a participant editing box in response to a triggering operation on a participant setting option in the schedule detail interface of the first schedule, where the participant editing box includes information about at least one participant participating in the first schedule;
in response to a selection operation on participant information in the participant editing box, setting a participant corresponding to the selected participant information as an important participant; and
displaying an important identifier in the schedule information of the first schedule in response to a triggering operation on a return option in the participant editing box, where the important identifier is used to identify that a corresponding schedule is an important schedule.

In this way, an important participant in a participant of any schedule is set, so that importance of the schedule can be improved, and richness of setting an important participant can be improved.

In an example of this application, the method further includes:
displaying a schedule detail interface of a second schedule in response to the fourth user operation on schedule information of the second schedule, where the second schedule is any one of the at least two schedules;
setting the second schedule as an important schedule in response to a triggering operation on an important option in the schedule detail interface of the second schedule; and
displaying an important identifier in the schedule information of the second schedule in response to a triggering operation on a return option in the schedule detail interface of the second schedule, where the important identifier is used to identify that a corresponding schedule is an important schedule.

In this way, schedule importance is set in the schedule detail interface, to provide a plurality of channels for setting schedule importance, thereby improving setting diversity.

In an example of this application, the method further includes:
displaying a second editing box in response to a triggering operation on a second edit button in schedule information of a second schedule, where the second schedule is any one of the at least two schedules; and
displaying an important identifier in the schedule information of the second schedule in response to a triggering operation on an important option in the second editing box, where the important identifier is used to identify that a corresponding schedule is an important schedule.

In this way, importance of the second schedule is set when the second schedule is displayed, thereby improving setting convenience.

In an example of this application, the method further includes:
displaying a quick schedule preview interface in response to a fifth user operation on schedule information of a second schedule, where the quick schedule preview interface displays a third editing box, and the second schedule is any one of the at least two schedules; and
displaying an important identifier in the schedule information of the second schedule in response to a triggering operation on an important option in the third editing box, where the important identifier is used to identify that a corresponding schedule is an important schedule.

In this way, schedule importance is set in different manners, thereby improving diversity of setting schedule importance.

In an example of this application, the method further includes:
displaying a schedule detail interface of the first schedule in response to a triggering operation on schedule information of the first schedule, where the first schedule is any schedule recorded in the calendar application;
displaying a classification interface in response to a triggering operation on a classify option in the schedule detail interface; and
in response to a selection operation on a type option in the classification interface, setting a schedule type corresponding to the selected type option as a schedule type of the first schedule.

In this way, a schedule type of a schedule is set through a user operation, so that setting flexibility is ensured.

In an example of this application, the method further includes:
receiving a selection operation on a schedule type control when the first interface or the second interface is displayed, where the second interface displays schedule information of at least two schedules that is displayed in a form of the list view; and
displaying, in the first interface or the second interface in response to the selection operation, a schedule in the at least two schedules that has a schedule type the same as that corresponding to the selection operation.

In this way, a corresponding schedule is displayed based on a schedule type selected by a user, thereby improving schedule display richness and interaction with the user.

According to a second aspect, a calendar view display apparatus is provided. The calendar view display apparatus has a function of implementing behavior in the calendar view display method in the first aspect. The calendar view display apparatus includes at least one module, and the at least one module is configured to implement the calendar view display method provided in the first aspect. The apparatus includes:
a start module, configured to start a calendar application in response to a triggering operation on the calendar application; and
a first display module, configured to display a first interface of the calendar application, where the first interface displays schedule information of at least two schedules, the schedule information of the at least two schedules is displayed in a form of a card, and for schedule information of each of the at least two schedules, an amount of information displayed in the form of the card is greater than an amount of information displayed in a list view.

In an example of this application, the card displays basic information and target information that are of a corresponding schedule, the target information is information that cannot be displayed in the list view, and the target information includes one or more of a schedule source, a schedule classification, a schedule inviter, and a schedule participant.

In an example of this application, a title region, a first operation region, an information display region, and a second operation region are disposed in the card.

The title region is used to display the schedule source, the first operation region is used to display an edit option for performing an editing operation on schedule information in the card, the information display region is used to display basic information and target information that are of a corresponding schedule, and the second operation region is used to display a dedicated operation option for schedule information displayed in the card.

In an example of this application, a hot card region is disposed in the card, a third-party interface can be displayed after information displayed in the hot card region is triggered, and the third-party interface is another interface different from the first interface in the calendar application, or the third-party interface is an interface of a third-party application.

In an example of this application, the first display module is configured to:
display a second interface of the calendar application, where the second interface displays schedule information of at least two schedules that is displayed in a form of the list view; and
switch a display form of the schedule information of the at least two schedules from the list view to the form of the card in response to a triggering operation on a style switching option in the second interface, to display the first interface.

In an example of this application, the first display module is configured to:
display a second interface of the calendar application, where the second interface displays schedule information of at least two schedules that is displayed in a form of the list view;
display a first editing box in response to a triggering operation on a first edit option in the second interface;
display a setting interface in response to a triggering operation on a set option in the first editing box; and
display the first interface in response to a setting operation in the setting interface.

In an example of this application, the first display module is configured to:
display a schedule view selection interface in response to a triggering operation on a schedule display style option in the setting interface;
switch a display form of the schedule information of the at least two schedules from the list view to the form of the card in response to a triggering operation on a card view option in the schedule view selection interface; and
display the first interface in response to a triggering operation on a return option in the setting interface.

In an example of this application, the apparatus further includes:
a receiving module, configured to receive a first user operation when the setting interface is displayed;
a first determining module, configured to: determine a first important participant in response to the first user operation, and add the first important participant to an important participant list; and
a second display module, configured to display a third interface of the calendar application in response to a second user operation, where if a first schedule whose participant includes the first important participant exists in the at least two schedules in the third interface, a card of the first schedule includes an important identifier.

In an example of this application, the apparatus further includes:
a deletion module, configured to: after the third interface is displayed, delete the first important participant from the important participant list in response to a third user operation; and
a third display module, configured to display a fourth interface in response to a fourth user operation, where in the fourth interface, the important identifier in the card of the first schedule disappears.

In an example of this application, the apparatus further includes:
a fourth display module, configured to: after the third interface is displayed, display, in the third interface, a schedule other than the first schedule in the at least two schedules in response to a third user operation.

In an example of this application, the apparatus further includes:
a fifth display module, configured to display a schedule detail interface of the first schedule in response to a triggering operation on schedule information of the first schedule, where the first schedule is any one of the at least two schedules;
a sixth display module, configured to display a participant editing box in response to a triggering operation on a participant setting option in the schedule detail interface of the first schedule, where the participant editing box includes information about at least one participant participating in the first schedule;
a first setting module, configured to: in response to a selection operation on participant information in the participant editing box, set a participant corresponding to the selected participant information as an important participant; and
a seventh display module, configured to display an important identifier in the schedule information of the first schedule in response to a triggering operation on a return option in the participant editing box, where the important identifier is used to identify that a corresponding schedule is an important schedule.

In an example of this application, the apparatus further includes:
an eighth display module, configured to display a schedule detail interface of a second schedule in response to the fourth user operation on schedule information of the second schedule, where the second schedule is any one of the at least two schedules;
a second setting module, configured to set the second schedule as an important schedule in response to a triggering operation on an important option in the schedule detail interface of the second schedule; and
a ninth display module, configured to display an important identifier in the schedule information of the second schedule in response to a triggering operation on a return option in the schedule detail interface of the second schedule, where the important identifier is used to identify that a corresponding schedule is an important schedule.

In an example of this application, the apparatus further includes:
a tenth display module, configured to display a second editing box in response to a triggering operation on a second edit button in schedule information of a second schedule, where the second schedule is any one of the at least two schedules; and
an eleventh display module, configured to display an important identifier in the schedule information of the second schedule in response to a triggering operation on an important option in the second editing box, where the important identifier is used to identify that a corresponding schedule is an important schedule.

In an example of this application, the apparatus further includes:
a twelfth display module, configured to display a quick schedule preview interface in response to a fifth user operation on schedule information of a second schedule, where the quick schedule preview interface displays a third editing box, and the second schedule is any one of the at least two schedules; and
a thirteenth display module, configured to display an important identifier in the schedule information of the second schedule in response to a triggering operation on an important option in the third editing box, where the important identifier is used to identify that a corresponding schedule is an important schedule.

In an example of this application, the apparatus further includes:
a fourteenth display module, configured to display a schedule detail interface of the first schedule in response to a triggering operation on schedule information of the first schedule, where the first schedule is any schedule recorded in the calendar application;
a fifteenth display module, configured to display a classification interface in response to a triggering operation on a classify option in the schedule detail interface; and
a third setting module, configured to: in response to a selection operation on a type option in the classification interface, set a schedule type corresponding to the selected type option as a schedule type of the first schedule.

In an example of this application, the apparatus further includes:
a receiving module, configured to receive a selection operation on a schedule type control when the first interface or the second interface is displayed, where the second interface displays schedule information of at least two schedules that is displayed in a form of the list view; and
a sixteenth display module, configured to display, in the first interface or the second interface in response to the selection operation, a schedule in the at least two schedules that has a schedule type the same as that corresponding to the selection operation.

According to a third aspect, an electronic device is provided. A structure of the electronic device includes a processor and a memory. The memory is configured to store a program that supports the electronic device in performing the calendar view display method provided in the first aspect, and store data used to implement the calendar view display method according to the first aspect. The processor is configured to perform the program stored in the memory. The electronic device may further include a communication bus, and the communication bus is configured to establish a connection between the processor and the memory.

According to a fourth aspect, a computer-readable storage medium is provided. The computer-readable storage medium stores instructions, and when the instructions are run on a computer, the computer is enabled to perform the calendar view display method according to the first aspect.

According to a fifth aspect, a computer program product including instructions is provided. When the computer program product runs on a computer, the computer is enabled to perform the calendar view display method according to the first aspect.

Technical effects achieved in the second aspect, the third aspect, the fourth aspect, and the fifth aspect are similar to the technical effects achieved by corresponding technical means in the first aspect. Details are not described herein again.

### BRIEF DESCRIPTION OF DRAWINGS

FIG. 1A and FIG. 1B are a schematic diagram of an application scenario according to an embodiment of this application;
FIG. 2 is a schematic diagram of a structure of an electronic device according to an example embodiment;
FIG. 3 is a schematic diagram of a software framework of an electronic device according to an example embodiment;
FIG. 4A to FIG. 4F are a schematic diagram of an application scenario of calendar view display according to another example embodiment;
FIG. 5A to FIG. 5G are a schematic diagram of an application scenario of calendar view display according to another example embodiment;
FIG. 6A to FIG. 6F are a schematic diagram of an application scenario of calendar view display according to another example embodiment;
FIG. 7A and FIG. 7B are a schematic diagram of an application scenario of calendar view display according to another example embodiment;
FIG. 8A to FIG. 8C are a schematic diagram of an application scenario of calendar view display according to another example embodiment;
FIG. 9A to FIG. 9C are a schematic diagram of an application scenario of calendar view display according to another example embodiment;
FIG. 10A to FIG. 10C are a schematic diagram of an application scenario of calendar view display according to another example embodiment;
FIG. 11A and FIG. 11B are a schematic diagram of an application scenario of calendar view display according to another example embodiment;
FIG. 12A and FIG. 12B are a schematic diagram of an application scenario of calendar view display according to another example embodiment;
FIG. 13A to FIG. 13C are a schematic diagram of an application scenario of calendar view display according to another example embodiment;
FIG. 14A to FIG. 14F are a schematic diagram of an application scenario of calendar view display according to another example embodiment;
FIG. 15A and FIG. 15B are a schematic diagram of an application scenario of calendar view display according to another example embodiment;
FIG. 16A to FIG. 16D are a schematic diagram of an application scenario of calendar view display according to another example embodiment;
FIG. 17A and FIG. 17B are a schematic diagram of an application scenario of calendar view display according to another example embodiment;
FIG. 18A to FIG. 18F are a schematic diagram of an application scenario of calendar view display according to another example embodiment;
FIG. 19A and FIG. 19B are a schematic diagram of an application scenario of calendar view display according to another example embodiment;
FIG. 20A to FIG. 20C are a schematic diagram of an application scenario of calendar view display according to another example embodiment;
FIG. 21A and FIG. 21B are a schematic diagram of an application scenario of calendar view display according to another example embodiment;
FIG. 22A and FIG. 22B are a schematic diagram of an application scenario of calendar view display according to another example embodiment;
FIG. 23A and FIG. 23B are a schematic diagram of an application scenario of calendar view display according to another example embodiment;
FIG. 24A to FIG. 24C are a schematic diagram of an application scenario of calendar view display according to another example embodiment;
FIG. 25A to FIG. 25C are a schematic diagram of an application scenario of calendar view display according to another example embodiment;
FIG. 26A to FIG. 26D are a schematic diagram of an application scenario of calendar view display according to another example embodiment;
FIG. 27A to FIG. 27C are a schematic diagram of an application scenario of calendar view display according to another example embodiment;
FIG. 28A and FIG. 28B are a schematic diagram of an application scenario of calendar view display according to another example embodiment;
FIG. 29A and FIG. 29B are a schematic diagram of an application scenario of calendar view display according to another example embodiment;
FIG. 30A to FIG. 30D are a schematic diagram of an application scenario of calendar view display according to another example embodiment;
FIG. 31A to FIG. 31C are a schematic diagram of an application scenario of calendar view display according to another example embodiment;
FIG. 32A to FIG. 32C are a schematic diagram of an application scenario of calendar view display according to another example embodiment;
FIG. 33A to FIG. 33C are a schematic diagram of an application scenario of calendar view display according to another example embodiment;
FIG. 34A to FIG. 34C are a schematic diagram of an application scenario of calendar view display according to another example embodiment;
FIG. 35 is a schematic flowchart of a calendar view display method according to an example embodiment;
FIG. 36 is a schematic flowchart of a calendar view display method according to another example embodiment;
FIG. 37 is a schematic diagram of selection of an important participant according to an example embodiment;
FIG. 38 is a schematic flowchart of a calendar view display method according to another example embodiment;
FIG. 39 is a schematic flowchart of a calendar view display method according to another example embodiment; and
FIG. 40 is a schematic diagram of a structure of a calendar view display apparatus according to an example embodiment.

### Reference numerals:

1: first edit option; 2: setting return option; 3: second edit option; 4: style switching option; 5: first switching prompt pop-up window; 6: second switching prompt pop-up window; 7: return option; 8: account addition option; 9: fourth edit option; 10: addition prompt box; 11: removal confirmation pop-up window; 12: important identifier; 13: function introduction option; 14: important participant introduction pop-up window; 15: third editing box; 16: schedule display range pop-up window; 17: classification interface; and 18: selection interface.

### DESCRIPTION OF EMBODIMENTS

To make the objectives, technical solutions, and advantages of this application clearer, the following further describes implementations of this application in detail with reference to the accompanying drawings.

It should be understood that "a plurality of mentioned in this application refers to two or more. In the descriptions of this application, unless otherwise stated, "/" means "or". For example, A/B may indicate A or B. The term "and/or" in this specification is merely an association relationship for describing associated objects, and indicates that three relationships may exist. For example, "A and/or B" may indicate the following three cases: Only A exists, both A and B exist, and only B exists. In addition, to clearly describe technical solutions of this application, words such as "first" and "second" are used to distinguish between same items or similar items with basically the same functions and effects. A person skilled in the art may understand that the words such as "first" and "second" do not limit a quantity and an execution sequence, and the words such as "first" and "second" do not indicate a definite difference.

Referring to "one embodiment", "some embodiments", or the like that is described in this specification of this application means that specific features, structures, or characteristics described with reference to one or more embodiments of this application are included in the embodiment. Therefore, statements such as "in one embodiment", "in some embodiments", "in some other embodiments", or "in some other embodiments" that appear in different parts of this specification do not necessarily refer to same embodiments, but mean "one or more but not all embodiments", unless otherwise specifically emphasized in other manners. The terms "include", "comprise", "have", and variants thereof all mean "include but are not limited to", unless otherwise specifically emphasized in other manners.

As the pace of work and life quickens, to better arrange schedules, more users manage the schedules by using a calendar application in an electronic device. The calendar application may record a schedule manually entered by a user. In addition, the calendar application may be further connected to a third-party application, to record schedule-related information that is in the third-party application. For example, the third-party application may include a conference application, a schedule reservation application, an accommodation application, and the like. After schedule information is generated in the third-party application, the electronic device may synchronize the schedule information generated in the third-party application to the calendar application. In this way, the user can view various types of schedule information in the calendar application.

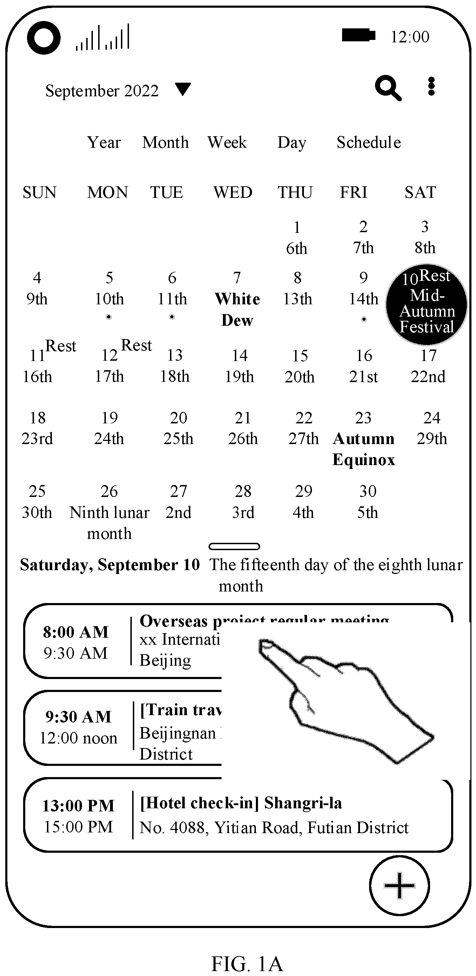

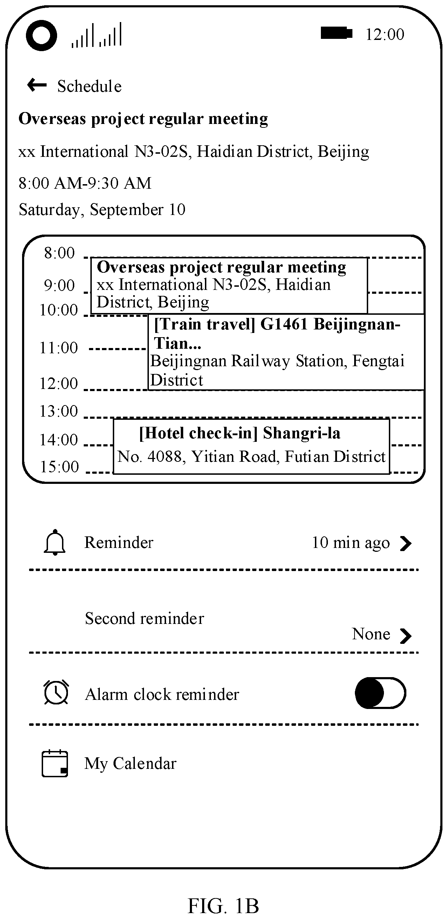

In a scenario, the user may record a schedule by using a calendar application in a mobile phone, and in response to a triggering operation of enabling the calendar application by the user, the mobile phone may enable the calendar application, and display a monthly view shown in FIG. 1A. The monthly view is a calendar view that is displayed when the calendar application is started. The monthly calendar view includes a monthly calendar of a current month, and three pieces of schedule information displayed in a conventional view are displayed below the monthly calendar of the current month. Each of the three pieces of schedule information includes a schedule title, time, and an address. The user may view detailed content of any one of the three pieces of schedule information. For example, if the user wants to know detailed information of a first schedule, the user may tap a conventional view of the first schedule; and in response to the tap operation on the conventional view of the first schedule, the mobile phone may unfold and display the detailed information of the first schedule shown in FIG. 1B, where the detailed information not only includes a schedule title, time, and an address that are of the first schedule, but also may further include a reminder occasion and a reminder manner that are of the first schedule, a schedule distribution time axis in a date on which the current schedule is located, and the like.

However, when the user wants to know detailed schedule information, the user can only perform a tap operation on a conventional view of each schedule that the user wants to know, so that the electronic device displays more detailed information of the schedule. As a result, if the user wants to view more schedules, operations are cumbersome and viewing efficiency is reduced.

To improve convenience and viewing efficiency of viewing detailed information of a schedule by a user, embodiments of this application provide a calendar view display method. In the method, detailed information of each schedule can be displayed through a card view in a monthly view or a schedule view of a calendar. The card view may display schedule information in a form of a card. In addition, because a display area of the card view is greater than a display area of a conventional view, it is ensured that more detailed information of a schedule is displayed, and the user can learn more information without performing a tap operation on the displayed card view, thereby improving convenience and viewing efficiency of viewing detailed information of a schedule by the user. For specific implementation thereof, refer to the following embodiments.

An execution body in the embodiments of this application is first described before the calendar view display method provided in the embodiments of this application is explained and described in detail. The method provided in the embodiments of this application may be performed by an electronic device, and a calendar application is installed in the electronic device. Further, a third-party application that can access the calendar application may alternatively be installed in the electronic device, such as a travel application, a hotel booking application, or an SMS message application. As an example rather than a limitation, the electronic device may be but is not limited to a mobile phone action camera (GoPro), a digital camera, a tablet computer, a desktop computer, a laptop computer, a handheld computer, a notebook computer, an on-board device, an ultra-mobile personal computer (ultra-mobile personal computer, UMPC), a netbook, a personal digital assistant (personal digital assistant, PDA), an augmented reality (augmented reality, AR)\virtual reality (virtual reality, VR) device, an unfoldable mobile phone, a foldable mobile phone, and the like. This is not limited in the embodiments of this application.

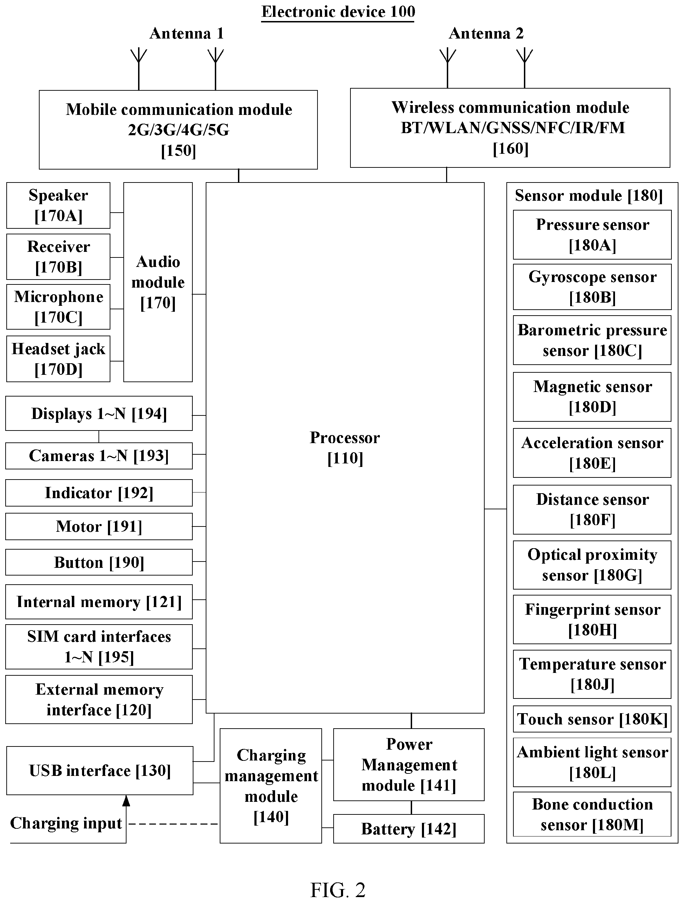

FIG. 2 is a schematic diagram of a structure of an electronic device according to an embodiment of this application. Referring to FIG. 2, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure illustrated in this embodiment of this application constitutes no specific limitation on the electronic device 100. In some other embodiments of this application, the electronic device 100 may include more or fewer components than those shown in the figure, combine some components, split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the electronic device 100. The controller may generate an operation control signal based on instruction operation code and a timing signal, to complete control of instruction fetching and instruction execution.

The memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access and reduces waiting time of the processor 110, thereby improving system efficiency.

In some embodiments, the processor 110 may include one or more interfaces, for example, may include an inter-integrated circuit (inter-integrated circuit, I2C) interface, a mobile industry processor interface (mobile industry processor interface, MIPI), and the like.

The I2C interface is a bidirectional synchronous serial bus, including a serial data line (serial data line, SDA) and a serial clock line (derail clock line, SCL). In some embodiments, the processor 110 may include a plurality of groups of I2C interfaces. The processor 110 may be separately coupled to the touch sensor 180K, a charger, a camera flash, the camera 193, and the like by using different I2C interfaces. For example, the processor 110 may be coupled to the touch sensor 180K by using the I2C interface, so that the processor 110 communicates with the touch sensor 180K by using the I2C interface, to implement a touch function of the electronic device 100.

The MIPI interface may be configured to connect the processor 110 to peripheral devices such as the display 194 and the camera 193. The MIPI interface includes a camera serial interface (camera serial interface, CSI), a display serial interface (display serial interface, DSI), and the like. In some embodiments, the processor 110 communicates with the camera 193 by using the CSI interface, to implement a photographing function of the electronic device 100. The processor 110 communicates with the display 194 by using the DSI interface, to implement a display function of the electronic device 100.

It may be understood that, an interface connection relationship between the modules illustrated in this embodiment of this application is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

The electronic device 100 implements a display function by using the GPU, the display 194, the application processor, and the like. The GPU is a microprocessor for image processing and is connected to the display 194 and the application processor. The GPU is configured to perform mathematical and geometric computing for graphics rendering. The processor 110 may include one or more GPUs that execute program instructions to generate or change displayed information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diodes, QLED), or the like. In some embodiments, the electronic device 100 may include one or N displays 194, where N is a positive integer greater than 1.

The external memory interface 120 may be configured to connect to an external storage card such as a Micro SD card, to expand a storage capability of the electronic device 100. The external storage card communicates with the processor 110 by using the external memory interface 120, to implement a data storage function, for example, to store files such as music and videos in the external storage card.

The internal memory 121 may be configured to store computer-executable program code. The computer-executable program code includes instructions. The processor 110 runs the instructions stored in the internal memory 121, to perform various function applications and data processing of the electronic device 100. The internal memory 121 may include a program storage region and a data storage region. The program storage region may store an operating system, an application required by at least one function (for example, a sound playing function or an image playing function), and the like. The data storage region may store data (such as audio data and a phone book) and the like created during use of the electronic device 100. In addition, the internal memory 121 may include a high-speed random access memory, and may further include a nonvolatile memory, for example, at least one magnetic disk storage device, a flash memory device, or a universal flash storage (universal flash storage, UFS).

The pressure sensor 180Ais configured to sense a pressure signal, and may convert the pressure signal into an electrical signal. In some embodiments, the pressure sensor 180A may be disposed on the display 194. There are many types of pressure sensors 180A, such as a resistive pressure sensor, an inductive pressure sensor, and a capacitive pressure sensor. The capacitive pressure sensor may include at least two parallel plates made of conductive materials. When force is applied to the pressure sensor 180A, capacitance between electrodes changes. The electronic device 100 determines intensity of pressure based on a change of the capacitance. When a touch operation is performed on the display 194, the electronic device 100 detects strength of the touch operation by using the pressure sensor 180A. The electronic device 100 may also calculate a touch location based on a detected signal of the pressure sensor 180A. In some embodiments, touch operations performed at a same touch location but having different touch operation strength may correspond to different operation instructions. For example, when a touch operation whose touch operation strength is less than a pressure threshold is performed on a "Messages" application icon, an instruction for viewing an SMS message is executed. When a touch operation whose touch operation strength is greater than or equal to the pressure threshold is performed on the "Messages" application icon, an instruction for creating a new SMS message is executed.

The fingerprint sensor 180H is configured to collect a fingerprint. The electronic device 100 may implement fingerprint unlocking, application lock accessing, fingerprint-based photographing, fingerprint-based call answering, and the like by using a feature of the collected fingerprint.

The touch sensor 180K is also referred to as a "touch panel". The touch sensor 180K may be disposed on the display 194. The touch sensor 180K and the display 194 form a touchscreen, also referred to as a "touch control screen". The touch sensor 180K is configured to detect a touch operation performed on or near the touch sensor 180K. The touch sensor 180K may transfer the detected touch operation to the application processor, to determine a touch event type. A visual output related to the touch operation may be provided by using the display 194. In some other embodiments, the touch sensor 180K may alternatively be disposed on a surface of the electronic device 100, and is at a location different from that of the display 194.

The button 190 includes a power on/off button, a volume button, and the like. The button 190 may be a mechanical button, or may be a touch button. The electronic device 100 may receive a button input and generate a button signal input related to user settings and function control of the electronic device 100.

Next, a software system of the electronic device 100 is described.

The software system of the electronic device 100 may use a layered architecture, an event-driven architecture, a microkernel architecture, a microservice architecture, or a cloud architecture. In the embodiments of this application, an Android (Android) system with a layered architecture is used as an example to describe the software system of the electronic device 100.

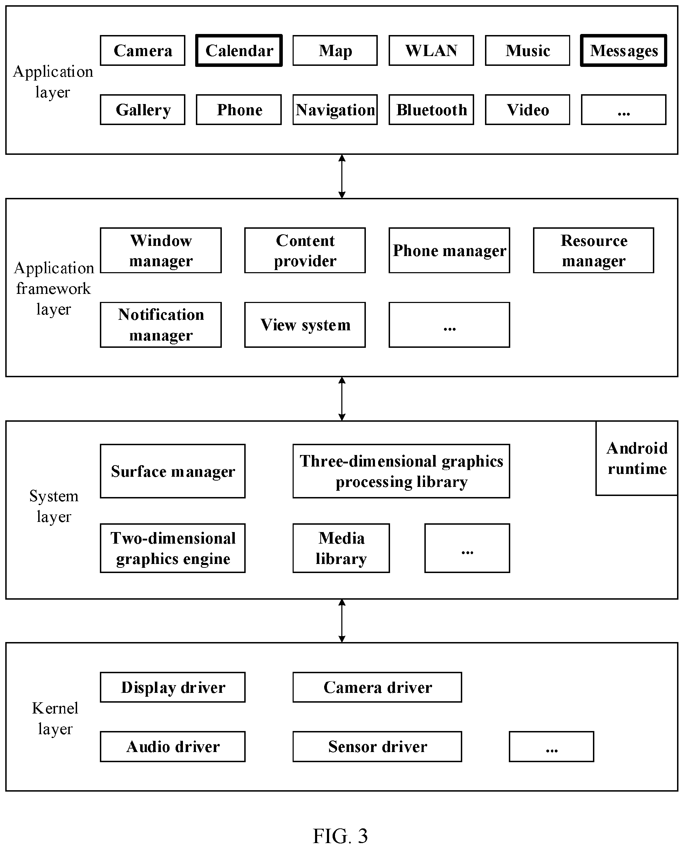

FIG. 3 is a block diagram of a software system of the electronic device 100 according to an embodiment of this application. Referring to FIG. 3, in the layered architecture, software is divided into several layers, and each layer has a clear role and task. The layers communicate with each other by using software interfaces. In some embodiments, the Android system is divided into four layers, which are respectively an application layer, an application framework layer, an Android runtime (Android runtime) and system library, and a kernel layer from top to bottom.

The application layer may include a series of application packages. As shown in FIG. 3, the application packages may include applications such as Calendar, Messages, Camera, Gallery, Phone, Map, Navigation, WLAN, Bluetooth, Music, and Video.

The application framework layer provides an application programming interface (application programming interface, API) and a programming framework for the application at the application layer. The application framework layer includes some predefined functions. As shown in FIG. 3, the application framework layer may include a window manager, a content provider, a view system, a phone manager, a resource manager, a notification manager, and the like. The window manager is configured to manage a window program. The window manager may obtain a size of a display, determine whether a status bar exists, lock a screen, take a screenshot, and the like. The content provider is configured to store and obtain data and make the data accessible to an application. The data may include a video, an image, audio, calls that are made and answered, a browsing history and bookmarks, a phone book, and the like. The view system includes visual controls, for example, a control for displaying a text and a control for displaying a picture. The view system may be configured to construct a display interface of an application. The display interface may include one or more views, for example, a view for displaying an SMS message notification icon, a view for displaying a text, and a view for displaying a picture. The phone manager is configured to provide a communication function of the electronic device 100, such as call status management (including answering, hanging up, or the like). The resource manager provides various resources for an application, for example, a localized string, an icon, a picture, a layout file, and a video file. The notification manager enables an application to display notification information in a status bar, and may be configured to convey a notification-type message. The displayed notification information may automatically disappear after a short stay without user interaction. For example, the notification manager is configured to notify download completion, provide a message reminder, and the like. The notification manager may alternatively be a notification that appears in a top status bar of the system in a form of a graph or a scroll bar text, for example, a notification of an application running in the background. The notification manager may alternatively be a notification that appears on a screen in a form of a dialog window. For example, text information is prompted in the status bar, a prompt tone is made, the electronic device vibrates, or an indicator light blinks.

The Android Runtime includes a kernel library and a virtual machine. The Android runtime is responsible for scheduling and management of the Android system. The kernel library includes two parts: One part is a functional function that needs to be invoked by a java language, and the other part is a kernel library of Android. The application layer and the application framework layer are run in the virtual machine. The virtual machine executes java files at the application layer and the application framework layer as binary files. The virtual machine is configured to perform functions such as lifecycle management of an object, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a 2D graphics engine (for example, SGL). The surface manager is configured to manage a display subsystem, and provide fusion of 2D and 3D layers for a plurality of applications. The media library supports playing and recording in a plurality of common audio and video formats, a still image file, and the like. The media library may support a plurality of audio and video coding formats, such as MPEG4, H.264, MP3, AAC, AMR, JPG, and PNG. The three-dimensional graphics processing library is configured to implement three-dimensional graphics drawing, image rendering and composition, layer processing, and the like. The 2D graphics engine is a drawing engine for 2D drawing.

The kernel layer is a layer between hardware and software. The kernel layer includes at least a display driver, a camera driver, an audio driver, and a sensor driver.

The following describes example working procedures of software and hardware of the electronic device 100 with reference to a capturing and photographing scenario.

When the touch sensor 180K receives a touch operation, a corresponding hardware interrupt is sent to the kernel layer. The kernel layer processes the touch operation into an original input event (including information such as touch coordinates and a timestamp of the touch operation). The original input event is stored at the kernel layer. The application framework layer obtains the original input event from the kernel layer, and identifies a control corresponding to the original input event. For example, the touch operation is a tap operation, and a control corresponding to the tap operation is a control of a camera application icon. A camera application invokes an interface at the application framework layer to start the camera application, and then invokes the kernel layer to start the camera driver, and the camera 193 captures a still image or a video.

For ease of understanding, before the method provided in the embodiments of this application is described in detail, based on the execution body provided in the foregoing embodiment, application scenarios in the embodiments of this application are described below by using an example in which the electronic device is a mobile phone.

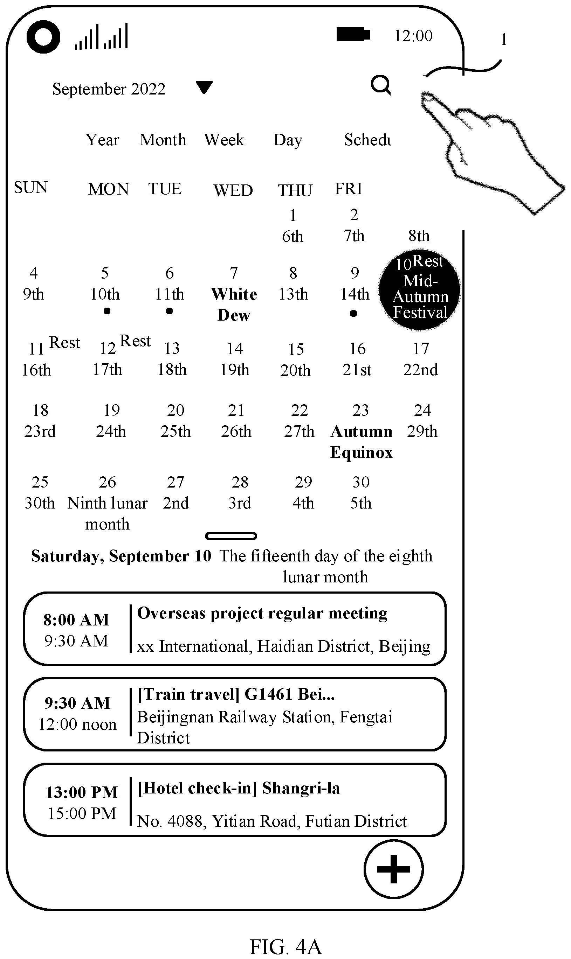

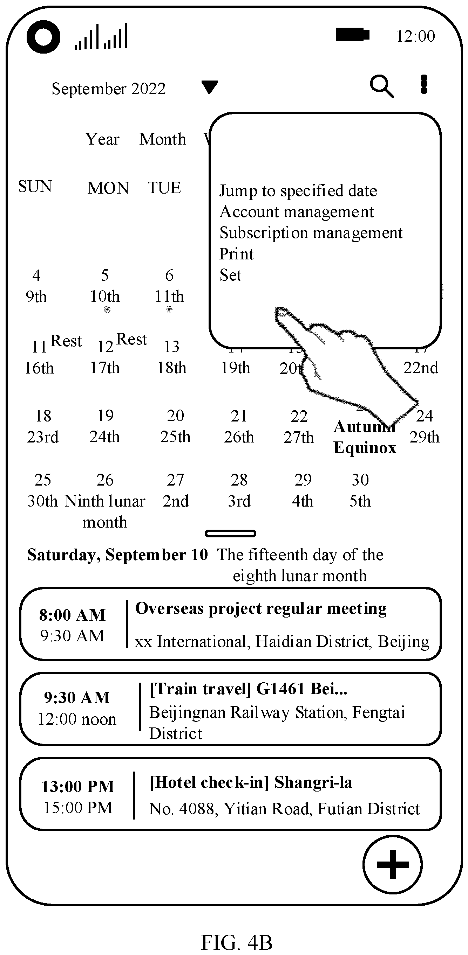

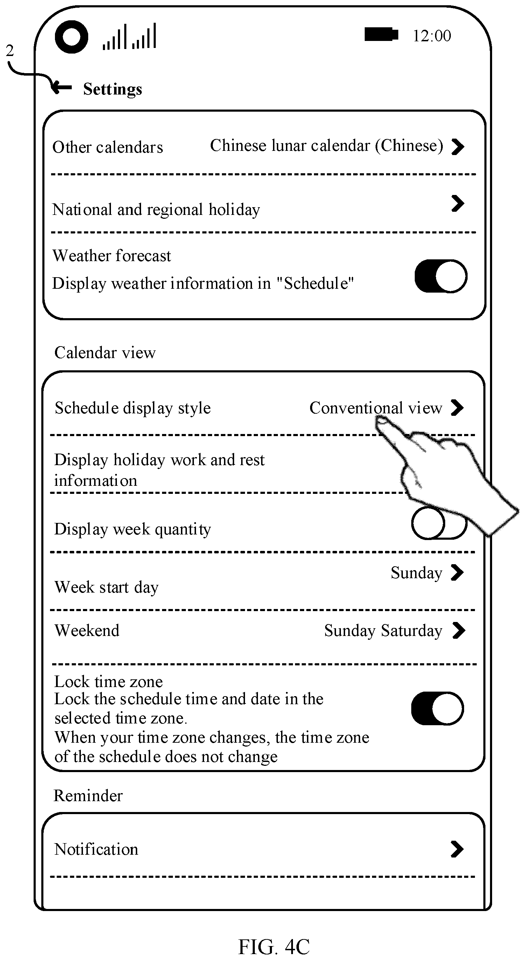

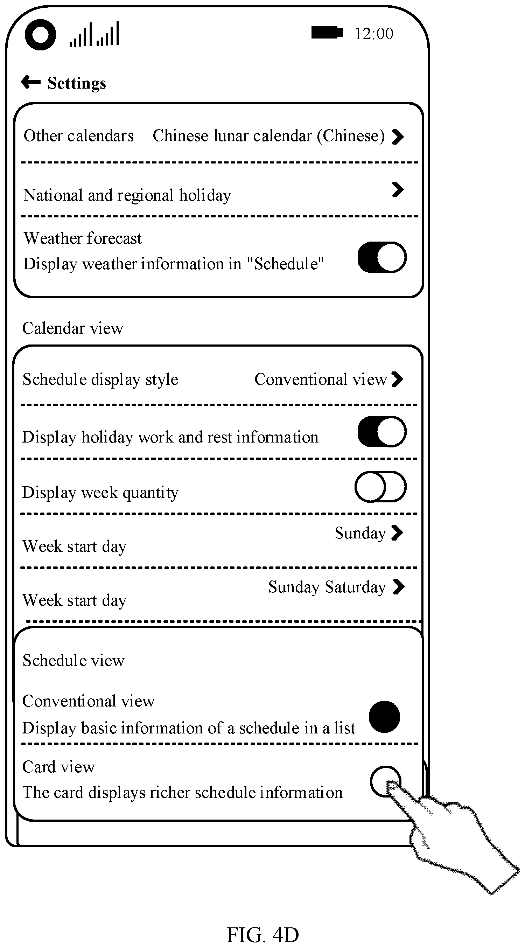

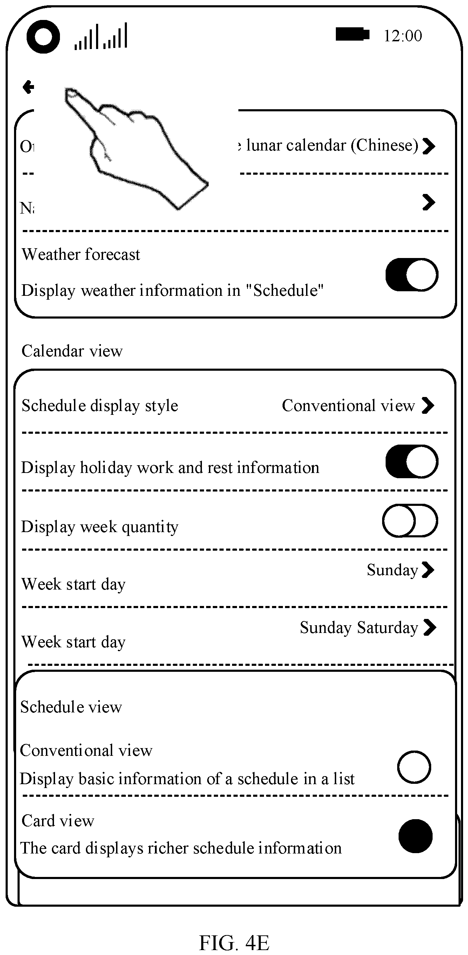

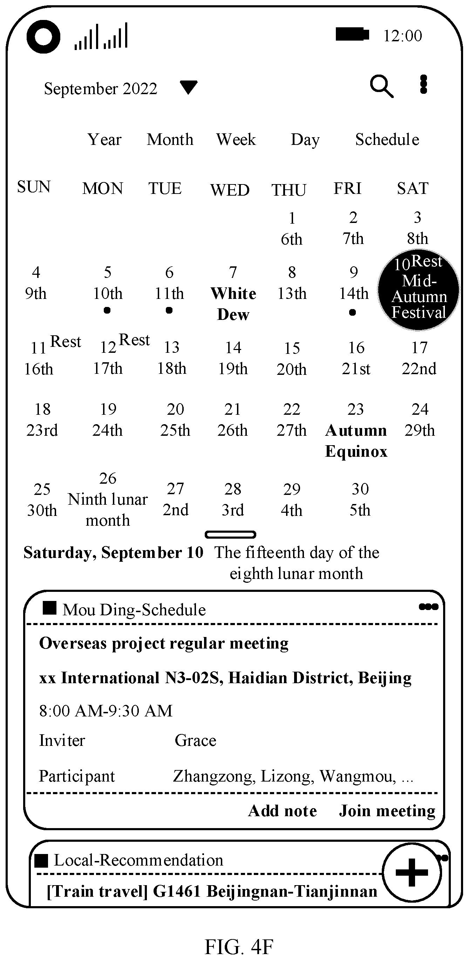

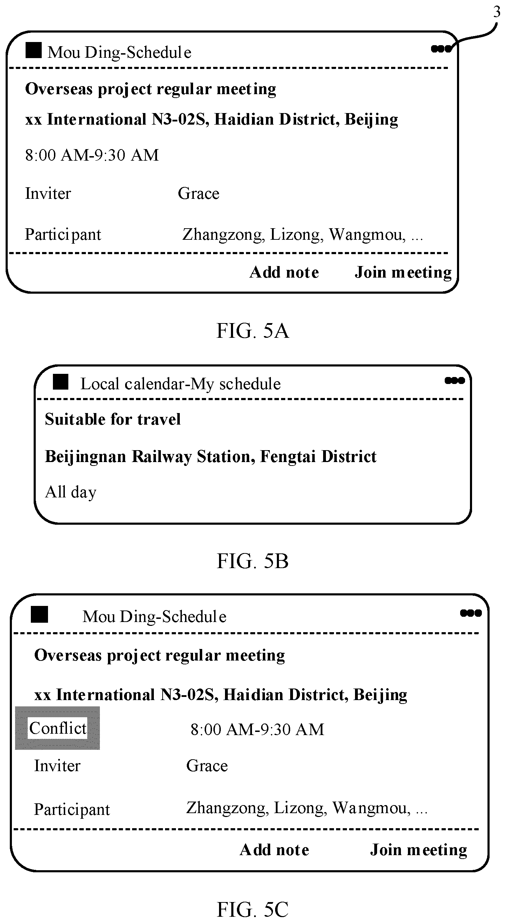

Referring to FIG. 4A to FIG. 4F, FIG. 4A to FIG. 4F are a schematic diagram of an application scenario according to an example embodiment. In a possible scenario, when a user wants to view a schedule by using a calendar application, the user may tap an application icon of the calendar application; and in response to the tap operation on the application icon of the calendar application, the mobile phone starts the calendar application, and displays a monthly view shown in FIG. 4A. A calendar of a current month is displayed in the monthly view, a calendar of September 2022 is used as an example for description in the figure, and schedule information of a plurality of schedules that is displayed in a form of a conventional view is displayed below the calendar of the current month. In addition, a first edit option 1 is further displayed in an upper right corner of the monthly view, and the user may tap the first edit option 1. In response to the tap operation on the first edit option 1, a first editing box shown in FIG. 4B is expanded in the upper right corner of the monthly view. The first editing box displays a "Jump to specified date" option, an "Account management" option, a "Subscription management" option, a "Print" option, and a "Set" option. The user may tap the "Set" option, and in response to the tap operation on the "Set" option, the mobile phone displays a setting interface shown in FIG. 4C. The setting interface displays a "Schedule display style" option. The user taps the "Schedule display style" option, and in response to the tap operation on the "Schedule display style" option, the mobile phone displays, at a bottom of the setting interface, a schedule view selection interface shown in FIG. 4D. Currently, the schedule information is displayed in the form of the conventional view. Therefore, a "Conventional view" option in the schedule view selection interface is highlighted. In the figure in this embodiment of this application, an option identifier is blacked to indicate highlighting of the "Conventional view" option. If the user wants to change a display style of the schedule information, the user may tap a "Card view" option in the schedule view selection interface. Referring to FIG. 4E, in response to the tap operation performed by the user in the card view option, highlighting of the "Conventional view option" is switched to highlighting of the "Card view option". Then, the user may tap a setting return option 2. In response to the tap operation on the setting return option 2, the mobile phone returns to the monthly view from the setting interface, and the schedule information in the monthly view is displayed in a form of a card view shown in FIG. 4F. When the schedule information is in the form of the card view, schedule information of different types of schedules has different layouts in the card view. For example, for layouts of schedule information of different types of schedules in the card view, refer to card views shown in FIG. 5A to FIG. 5G below.

In an example of this application, there are a plurality of types of schedules, for example, the schedules may include a common schedule, an all-day schedule, a conflict schedule, an important schedule, an ignored schedule, an expired schedule, a festival and solar term schedule, a to-do list, and the like, and card styles of card views of different types of schedules are different.

For example, FIG. 5A is a card style of a card view of a common schedule (a conference, a travel, or the like). Account information of schedule information is displayed in an upper left corner of the card view, and the account information may reflect a source of the schedule information. A second edit option 3 is displayed in an upper right corner of the card view. After the second edit option 3 is triggered, a second editing box may be displayed. The second editing box may display a "Mark as important/Cancel important identifier" option, a "Share" option, an "Ignore" option, a "Delete" option, and the like. Basic information of a schedule is displayed below the account information, and the basic information includes at least one of a title, time, a place, and the like of the schedule. Important information of the schedule may be displayed below the basic information of the schedule. For example, participant information of the schedule is displayed, and the participant information is optional. In other words, based on different schedules, the card view may display the participant information, or may not display the participant information. An example in which the participant information is displayed is used for description in the figure in this embodiment of this application. An operation option for the schedule is displayed in a lower right corner of the card view, and different operation options are displayed based on different schedules. For example, when the schedule is a conference, the operation option may include a "Join meeting" option and an "Add note" option; when the schedule is a travel, the operation option may be a "Book return ticket" option and a "View ticket" option; or when the schedule is accommodation, the operation option may be a "View order" option, and the like. In FIG. 5A, that the schedule is a conference is used as an example for description. In addition, a hot card region may be disposed in the card view. The hot card region is an interactive part that is disposed in the card view, that is, a location that can be tapped. An event is triggered after interaction, and the event may be link jump, or may be submission, popping up a dialog box, or the like. For example, the hot card region may be disposed in a place display location of a schedule, a location at which the operation option is located, a title display location of a schedule, and the like, and a text in the hot card region may be highlighted. In the figure in this embodiment of this application, highlighting of the text is represented by a bold text.

In an example of this application, FIG. 5B is a card style of a card view of an all-day schedule, and FIG. 5C is a card style of a card view of a conflict schedule. The conflict schedule is obtained by setting a common schedule. The card view of the conflict schedule displays a conflict identifier. The conflict identifier may be a text, a symbol, or the like. The conflict identifier is displayed before schedule time, and the conflict identifier is highlighted. For example, the conflict identifier is a text, and the text is displayed in red. In the figure, a background is added to "Conflict" to indicate highlighting of the conflict identifier.

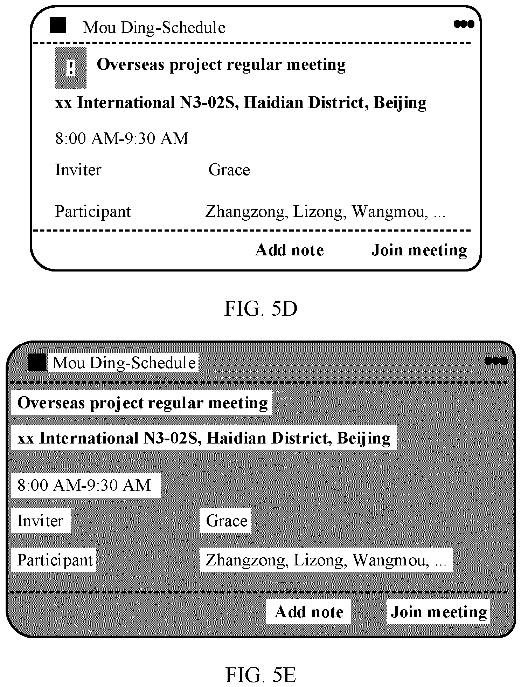

FIG. 5D is a card style of a card view of an important schedule. The important schedule is obtained by setting a common schedule. The card view of the important schedule displays an important identifier, and the important identifier may be a text, a symbol, or the like. The important identifier is displayed before a title, and the important identifier is highlighted. For example, the important identifier is an exclamation mark, and the exclamation mark is displayed in red. In the figure, a background is added to "!" to indicate highlighting of the important identifier.

FIG. 5E is a card style of a card view of an ignored schedule/expired schedule. The ignored schedule is obtained by performing ignore setting on a common schedule, and the expired schedule is obtained after the common schedule is expired (end time of the schedule is before current time). The card view of the ignored schedule/expired schedule may be displayed based on specific transparency, for example, the card view is displayed based on 50% transparency. In the figure in this embodiment of this application, a background pattern is added to the card view to indicate transparency display.

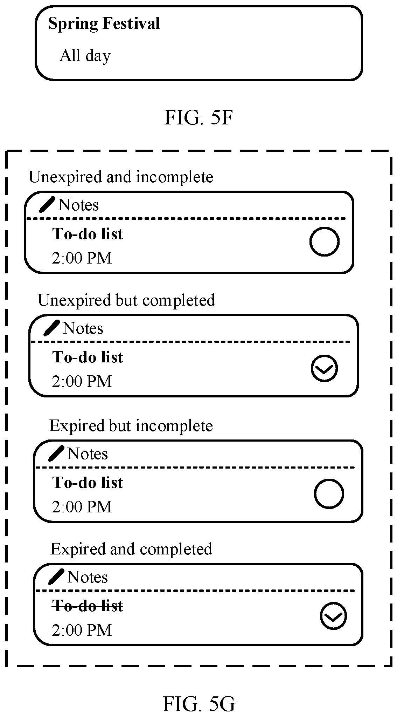

FIG. 5F is a card style of a card view of a festival and solar term schedule, and the card view of the festival and solar term is a view that is not editable by default.

FIG. 5G is a card style of a card view of a to-do list. The to-do list may include an expired and completed list, an expired but incomplete list, an unexpired but completed list, and an unexpired and incomplete list. A card view of the expired and completed list, the expired but incomplete list, and an unexpired but completed card view may be displayed in specific transparency. Because to-do lists in the expired and completed list and the unexpired but completed list are completed, the to-do lists in the expired and completed list and the unexpired but completed list are in a completed state, for example, the to-do lists in the expired and completed list and the unexpired but completed list are crossed out to indicate that the to-do lists are completed.

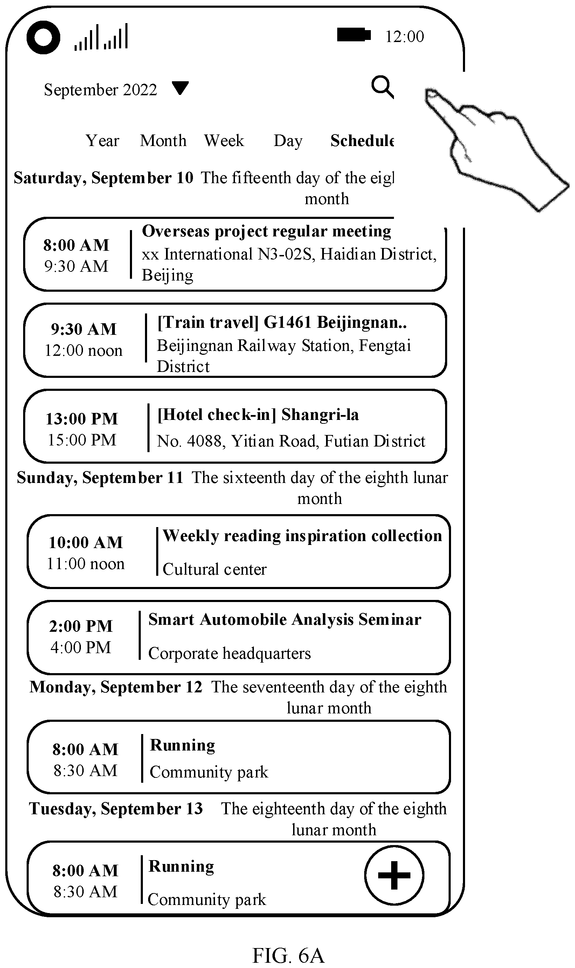

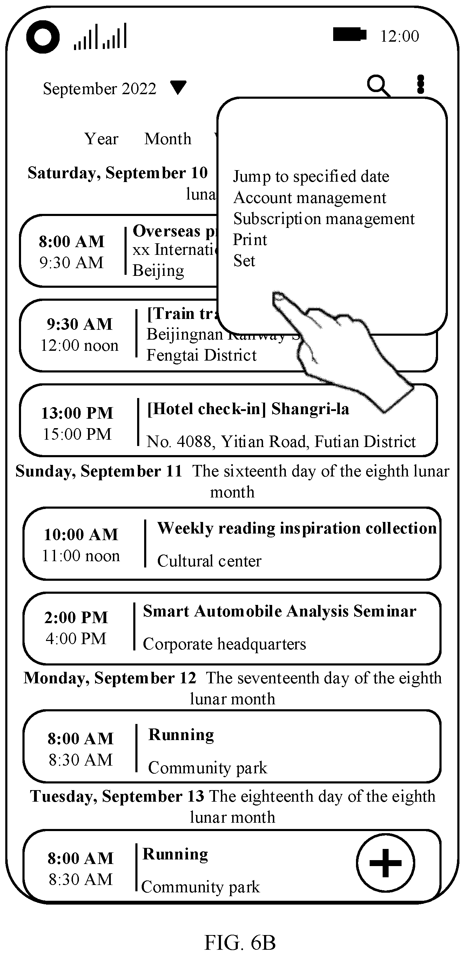

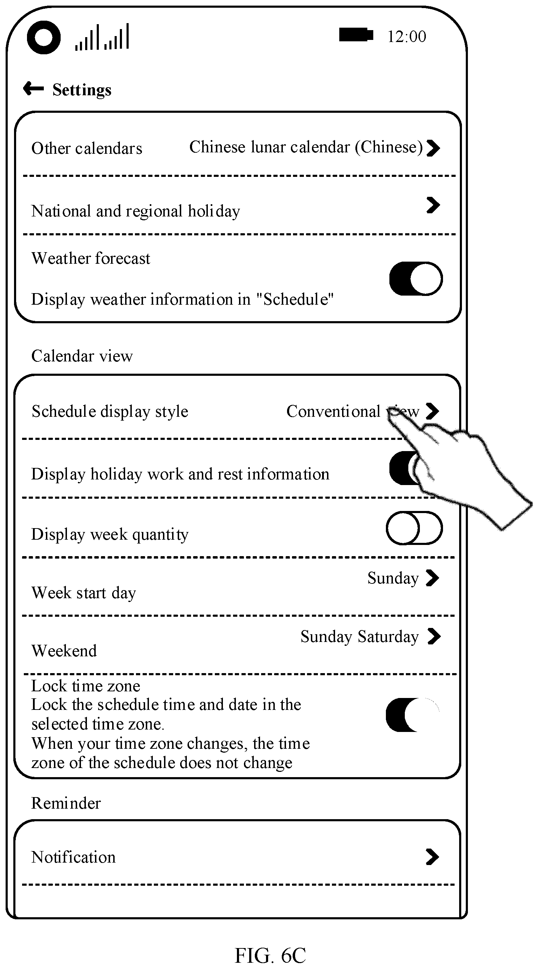

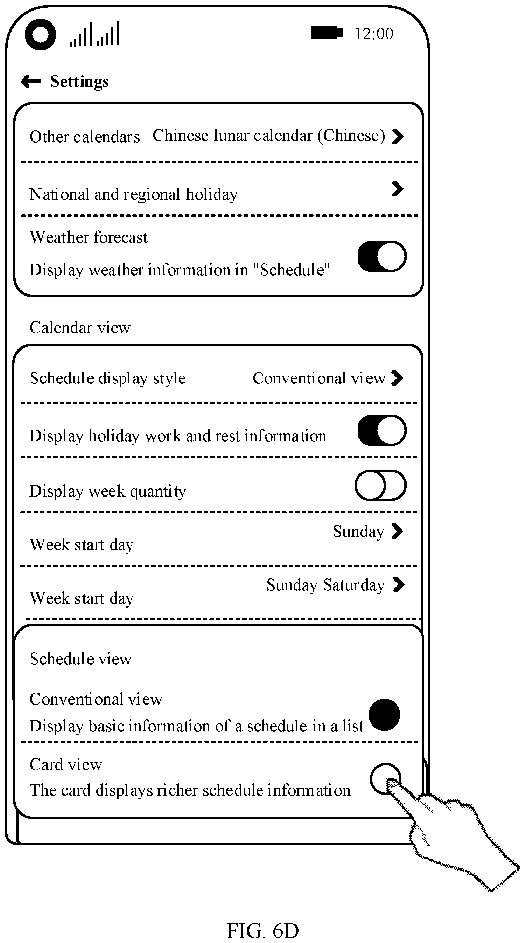

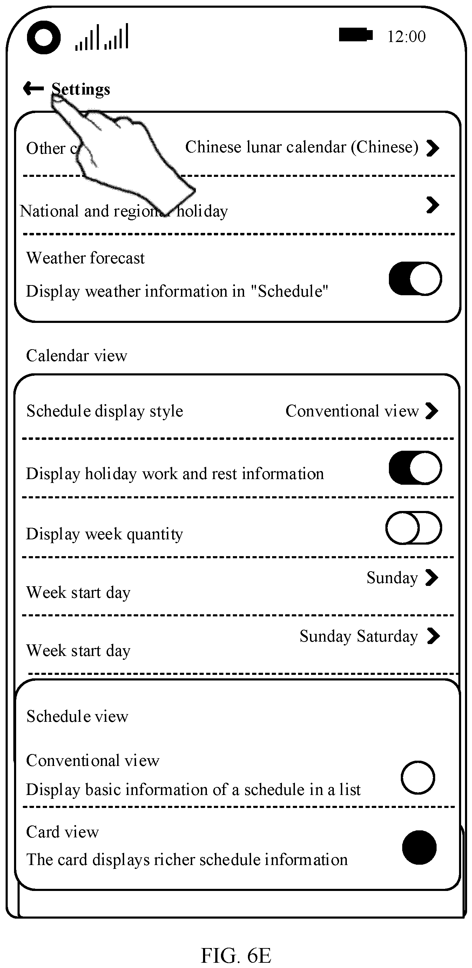

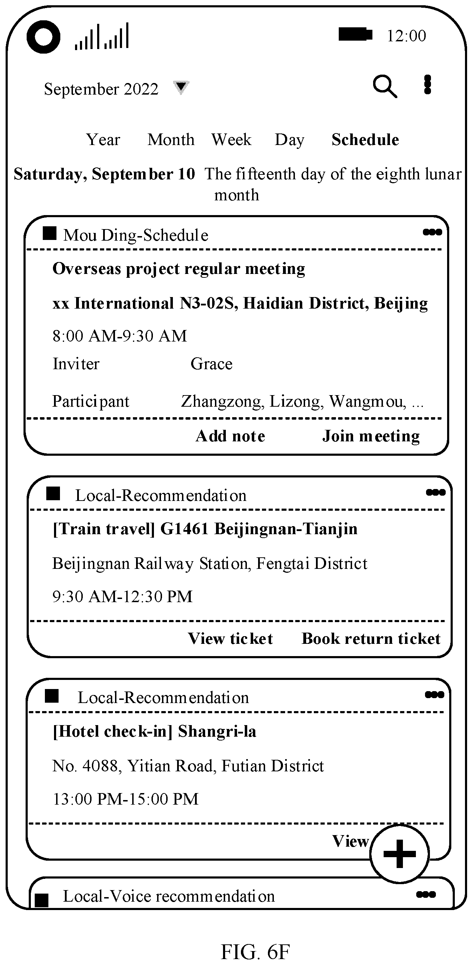

In an example of this application, a user not only can set a display form of schedule information of a plurality of schedules when a monthly view is displayed, but also can set a display form of schedule information of a plurality of schedules when a schedule view is displayed. When the mobile phone displays a schedule view shown in FIG. 6A, the user may tap a first edit option 1 displayed in an upper right corner of the schedule view. In response to the tap operation on the first edit option 1, a first editing box shown in FIG. 6B is expanded, and the user may tap a "Set" option displayed in the first editing box. In response to the tap operation on the "Set" option, the mobile phone displays a setting interface shown in FIG. 6C. The user taps a "Calendar display style" option in the setting interface. In response to the tap operation on the "Calendar display style" option, a schedule view selection interface shown in FIG. 6D is displayed at a bottom of the setting interface. Because a schedule is displayed in a form of a conventional view, a "Conventional view" option in the schedule view selection interface is highlighted. If the user wants to change a schedule display style, the user may tap a "Card view" option in the schedule view selection interface. Referring to FIG. 6E, in response to the tap operation performed by the user on the "Card view" option, highlighting of the "Conventional view" option is switched to highlighting of the "Card view" option. Then, the user may tap a setting return option 2. In response to the tap operation on the setting return option 2, the mobile phone returns to the schedule view from the setting interface, and schedule information of a plurality of schedules in the schedule view is displayed in a form of a card view shown in FIG. 6F.

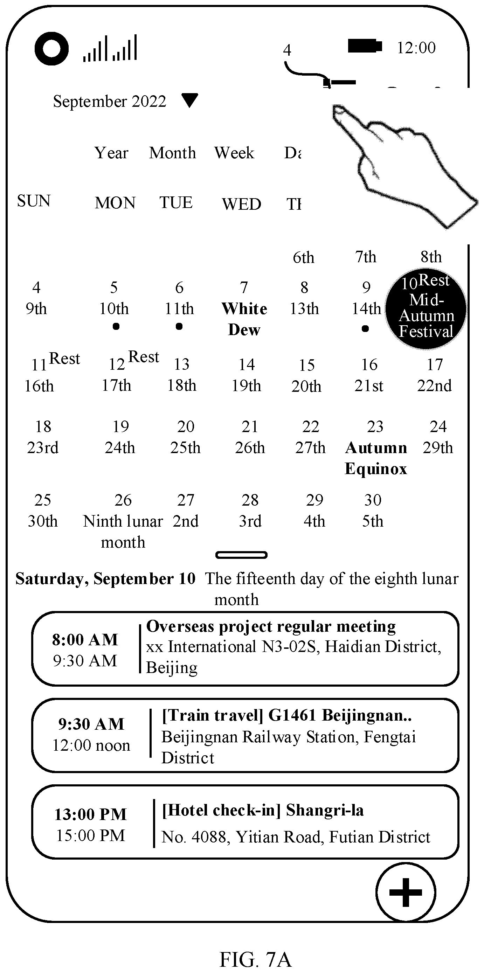

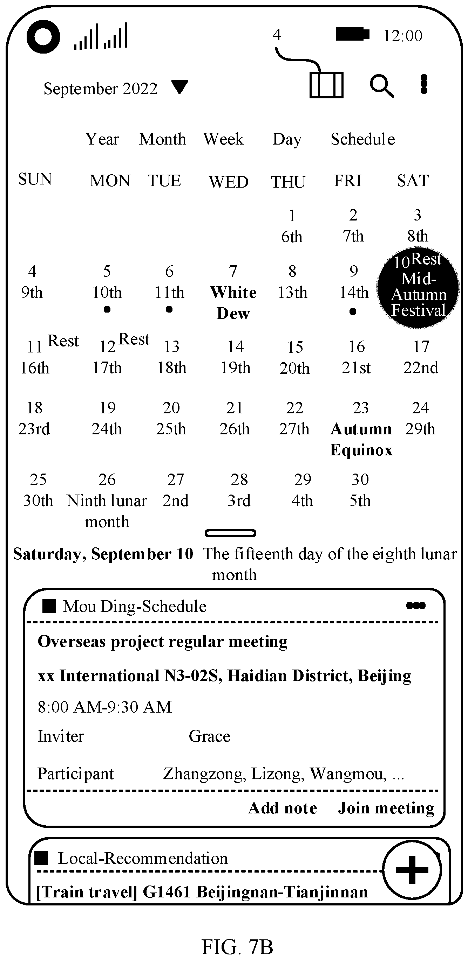

In an example of this application, when a monthly view is displayed, a style switching option 4 shown in FIG. 7A may be further displayed in an upper right corner of the monthly view, and an option shape of the style switching option 4 corresponds to a display form of schedule information. When the schedule information is displayed in a form of a conventional view, the option shape of the style switching option 4 is a list shape, and the user may tap the style switching option 4. In response to the tap operation performed by the user on the style switching option 4, referring to FIG. 7B, the mobile phone may display the schedule information in a form of a card view, and switch the option shape of the style switching option 4 to a card shape.

It should be noted that, after a display form of schedule information is switched by using the style switching option, when the calendar application is started next time and a calendar view is displayed, schedule information in the calendar view may be displayed in a form of a conventional view, or may be in a form of a card view. For example, in a possible case, if the schedule information is displayed in the form of the card view before the mobile phone closes the calendar application last time, after the calendar application is opened this time, it may be considered by default that the schedule information is displayed in the form of the card view. In another possible implementation, if the schedule information is displayed in the form of the conventional view before the mobile phone closes the calendar application last time, after the calendar application is opened this time, it may be considered by default that the schedule information is displayed in the form of the conventional view. In still another possible implementation, regardless of a specific view that is a display form in which schedule information is displayed before the calendar application is closed last time, after the calendar application is opened this time, it is considered by default that the schedule information is displayed based on a schedule display style that is set in the setting interface. For example, the schedule display style is set as a card style through FIG. 4D and FIG. 4E or FIG. 6D and FIG. 6E. Each time the calendar application is opened, a schedule is displayed in a monthly view or a schedule view by using the card style. Alternatively, the schedule display style is set as a conventional view style through FIG. 4D or FIG. 6D. Each time the calendar application is opened, a schedule is displayed in a monthly view or a schedule view by using the conventional view style. This is not specifically limited in this embodiment of this application.

In an example of this application, when a schedule view, a yearly view, a weekly view, or a daily view is displayed, the style switching option 4 may also be displayed in the upper right corner of the schedule view. In addition, for an application scenario of the style switching option 4, refer to the application scenario shown in FIG. 7A and FIG. 7B. Details are not described one by one again in this embodiment of this application.

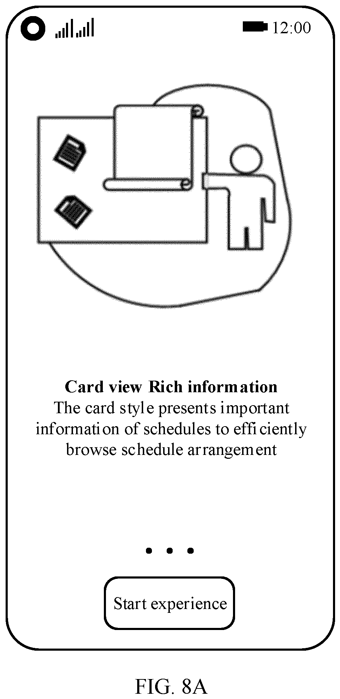

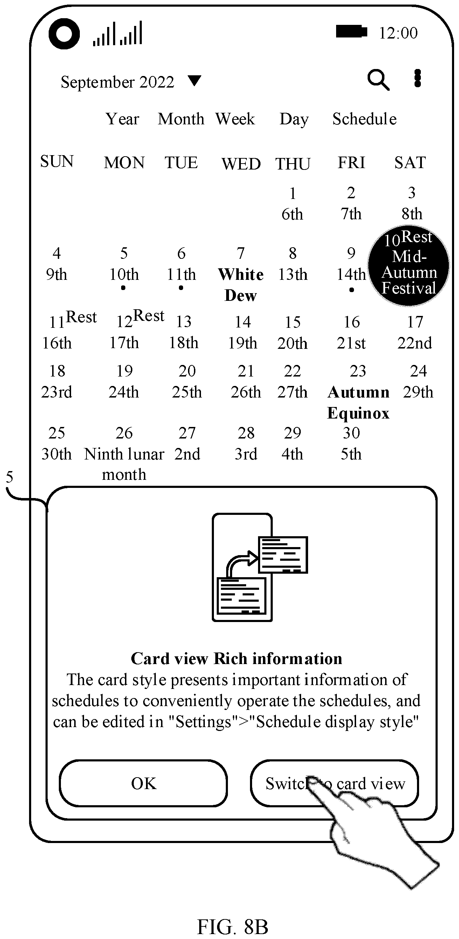

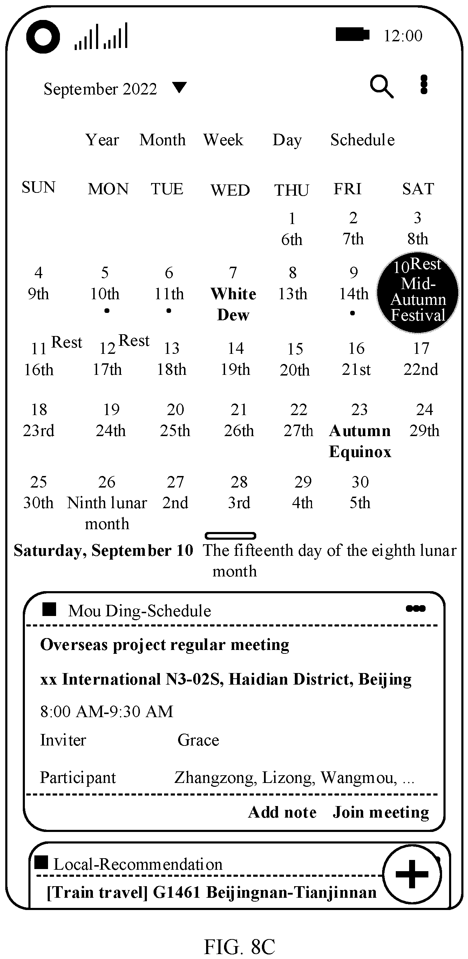

In an example of this application, when the user wants to view a schedule by using the calendar application, the user may tap an application icon of the calendar application. If the calendar application is started for the first time after being downloaded, or the calendar application is started for the first time after version update, the mobile phone may display, in response to the tap operation performed by the user on the application icon of the calendar application, a calendar screen opening guidance interface shown in FIG. 8A. The user may tap a "Start experience" option in the calendar screen opening guidance interface. In response to the tap operation on the "Start experience" option in the calendar screen opening guidance interface, the mobile phone displays a view switching guidance interface shown in FIG. 8B. The view switching guidance interface includes a monthly view of a calendar, and a bottom of a monthly view interface is covered with a first switching prompt pop-up window. When a first switching prompt pop-up window 5 is displayed, it indicates that schedule information is displayed in a form of a conventional view by default. The first switching prompt pop-up window 5 prompts that a display form of the schedule information is to be switched from the conventional view to a card view, and the first switching prompt pop-up window displays a "Switch to card view" option and an "OK" option. After the "Switch to card view" option is triggered, the schedule information is displayed in a form of the card view. When the "Switch to card view" option is not triggered or the "OK" option is triggered, the schedule information continues to be displayed in the form of the conventional view. For example, referring to FIG. 8B, the user taps the "Switch to card view" option, and in response to the tap operation on the "Switch to card view" option, the mobile phone displays a monthly view shown in FIG. 8C. Schedule information in the monthly view is displayed in the form of the card view.

It should be noted that, a sliding identifier is displayed in the calendar screen opening guidance interface. The user may perform a sliding operation on the calendar screen opening guidance interface, and calendar screen opening guidance interfaces with different content are displayed in response to the sliding operation on the calendar screen opening guidance interface. Each calendar screen opening guidance interface displays a "Start experience" option, and the user may trigger the "Start experience" option in any calendar screen opening guidance interface. Because the sliding identifier shown in FIG. 8A may identify that the calendar screen opening guidance interface can be slid leftwards and rightwards, the user may perform a leftward/rightward sliding operation on the calendar screen opening guidance interface.

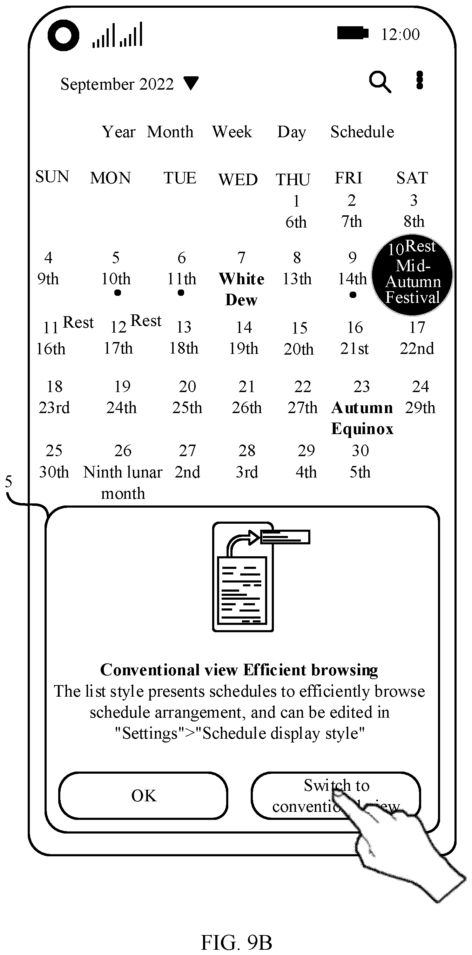

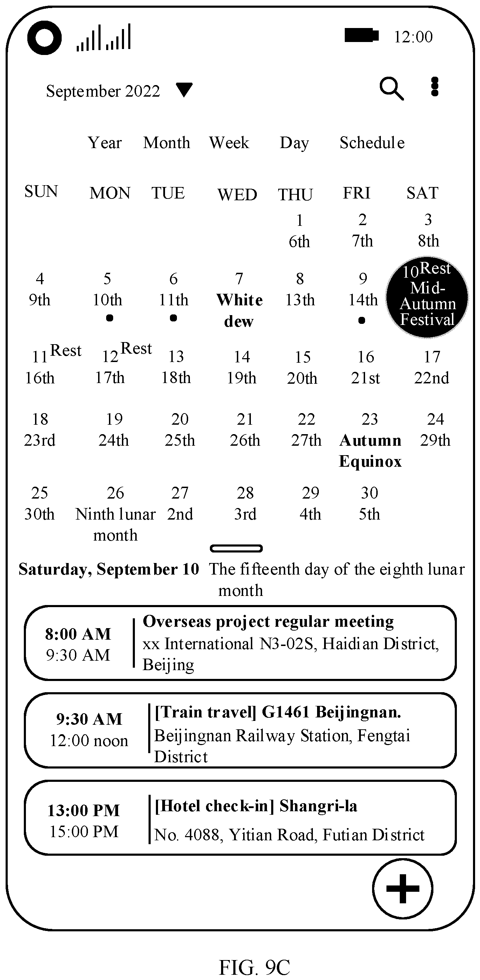

In an example of this application, when a calendar screen opening guidance interface shown in FIG. (a) in 9 is displayed, the user may tap a "Start experience" option in the calendar screen opening guidance interface. In response to the tap operation on the "Start experience" option in the calendar screen opening guidance interface, the mobile phone displays a view switching guidance interface shown in FIG. 9B. The view switching guidance interface includes a monthly view of a calendar, and a bottom of a monthly view interface is covered with a second switching prompt pop-up window 6. When the second switching prompt pop-up window 6 is displayed, it indicates that schedule information is displayed in a form of a card view by default. The second switching prompt pop-up window 6 prompts that a display form of the schedule information is to be switched from the card view to a conventional view, and the second switching prompt pop-up window displays a "Switch to conventional view" option and an "OK" option. After the "Switch to conventional view" option is triggered, the schedule information is displayed in a form of the conventional view. When the "Switch to conventional view" option is not triggered or the "OK" option is triggered, the schedule information continues to be displayed in the form of the card view. For example, referring to FIG. 9B, the user taps the "Switch to conventional view" option, and in response to the tap operation on the "Switch to conventional view" option, the mobile phone displays a monthly view shown in FIG. 9C. Schedule information in the monthly view is displayed in the form of the conventional view.

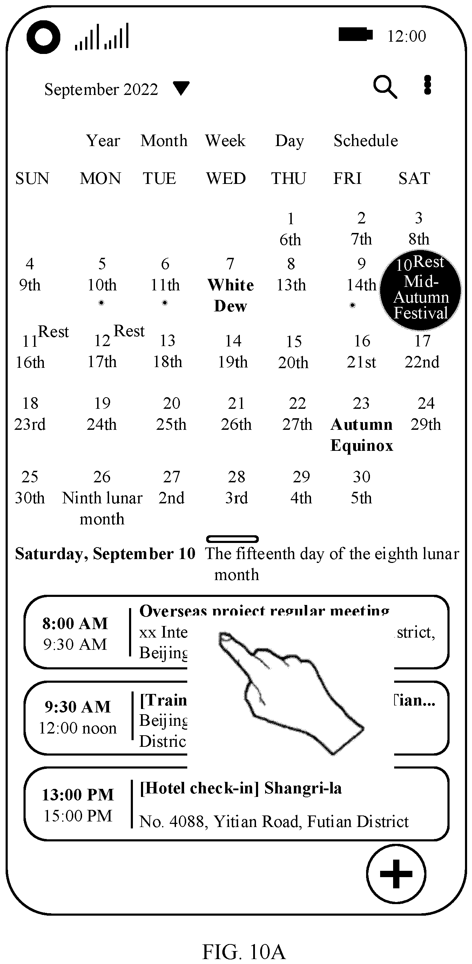

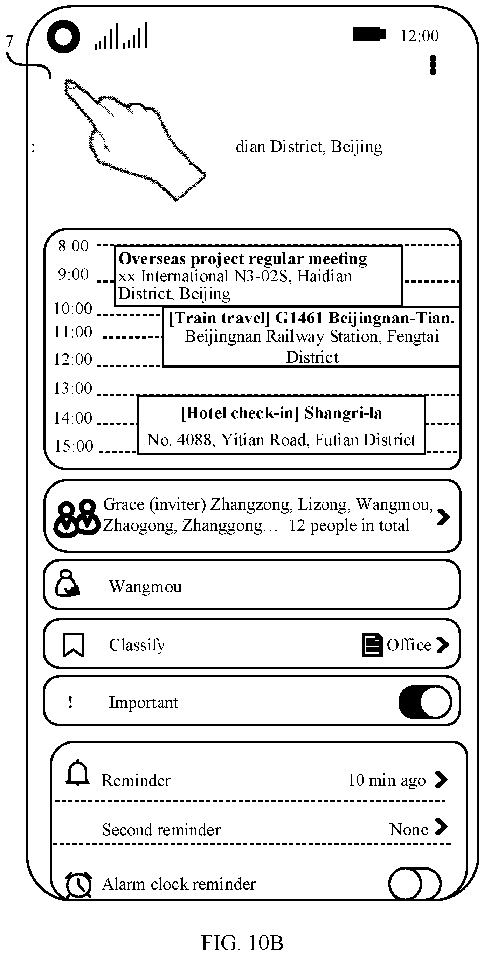

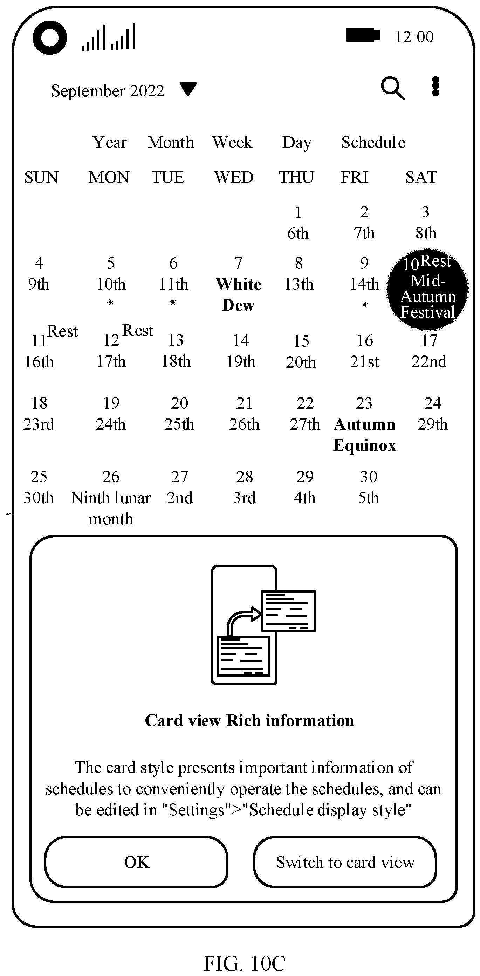

In an example of this application, referring to FIG. 10A, when a monthly view is displayed, and schedule information of a plurality of schedules in the monthly view is displayed in a form of a conventional view, the user may tap a view in which any schedule is located, for example, tap a first schedule. In response to the tap operation performed by the user on the view in which the first schedule is located, a schedule detail interface shown in FIG. 10B is displayed, and the user taps a return option 7 in the schedule detail interface. If current display of the schedule detail interface is first display after the calendar application is downloaded or is first display after a version of the calendar application is updated, in response to the tap operation on the return option 7, referring to FIG. 10C, the mobile phone displays a first switching prompt pop-up window 5 at a bottom of the monthly view after the monthly view is displayed.

It should be noted that, if the user enters, for the first time, the schedule detail interface from an operation in a schedule view after the calendar application is downloaded or the version of the calendar application is updated, in response to a user operation returning to the schedule view from the schedule detail interface, the mobile phone may also display, through covering, the first switching prompt pop-up window 5 at a bottom of the schedule view.

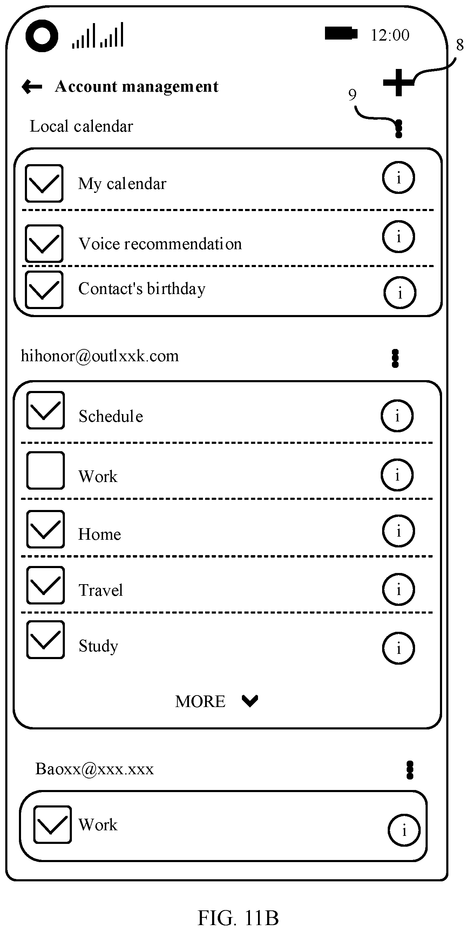

In an example of this application, because a third-party application may be allowed to access the calendar application, after the third-party application is accessed, at least one account existing in the third-party application may be added to the calendar application, so that schedule information corresponding to the at least one account in the third-party application can be displayed in a calendar view of the calendar application. When accounts for managing a schedule exist in the calendar application, the user may also need to manage these accounts, for example, the user may need to add an account of a new third-party application, or edit an added account. When the user expects to manage a schedule account, the user may tap a first edit option 1 in a monthly view or a schedule view. In the figure in this embodiment of this application, the monthly view is used as an example for description. In response to the tap operation on the first edit option 1, a first editing box shown in FIG. 1 1A is expanded, and the user taps an "Account management" option in the first editing box. In response to the tap operation performed by the user on the "Account management" option, the mobile phone displays an account management interface shown in FIG. 11B. The account management interface displays at least one level-1 account. For example, the level-1 account in the figure includes a local account of the calendar application: a local calendar, a mailbox account accessed in a mailbox application: hihonor@outlxxk.com, a conference account accessed in a conference application: Baoxx@xxx.xxx, and the like. The level-1 account may also be referred to as a parent account, a plurality of sub-accounts may be correspondingly displayed in each level-1 account, and each level-1 account and each sub-account can be edited. For example, in the figure, for a local calendar of a level-1 account, the local calendar includes three sub-accounts, which are respectively "My calendar", "Recommendation", and "Participant's birthday". The three sub-accounts are all selected, and therefore, schedule information of a schedule corresponding to each sub-account can be displayed in a monthly calendar view. For a level-1 account hihonor@outlxxk.com, the level-1 account includes a plurality of sub-accounts, which are respectively "schedule", "work", "home", "travel", and "study". The sub-accounts "schedule" and "study" are selected, and therefore, schedule information of schedules respectively corresponding to the sub-accounts "schedule" and "study" can be displayed in a monthly calendar view, and schedule information of schedules corresponding to unselected sub-accounts cannot be displayed in a monthly view. For a level-1 account Baoxx@xxx.xxx, the level-1 account includes a plurality of sub-accounts. In the figure, a sub-account "work" is used as an example for description. The sub-account "work" is selected, and therefore, schedule information of a schedule corresponding to the sub-account "work" can be displayed in a monthly calendar view.

In an example of this application, the user may select a required level-1 account and a required corresponding sub-account from the account management interface, or may cancel a selected level-1 account and a selected corresponding sub-account. Referring to FIG. 11B, the account management interface may further include an account addition option 8. The user may tap the account addition option 8. In response to the tap operation on the account addition option, the mobile phone may display an account addition interface, and the user may add a level-1 account to the account addition interface. Referring to FIG. 11B, for a level-1 sub-account, each level-1 sub-account corresponds to a fourth edit option 9. When the user needs to edit any level-1 account, the user may tap the fourth edit option 9 corresponding to the level-1 account. In response to the tap operation on the fourth edit option 9, the mobile phone may display a corresponding fourth editing box. The user may select a required option in the fourth editing box based on a requirement, for example, add a sub-account in the level-1 account, and edit a sub-account in the level-1 account. Referring to FIG. 11B, each sub-account corresponds to an option box. It may be learned from the foregoing description that, when selecting any sub-account, the user may tap the option box corresponding to the sub-account, so that the mobile phone highlights the selected option box in response to the tap operation on the option box. Correspondingly, when the user cancels a selected sub-account, the user may also tap the option box corresponding to the selected sub-account, so that the mobile phone cancels highlighting of the option box in response to the tap operation on the option box of the selected sub-account. This embodiment of this application is described by using an example in which the option box is blacked and ticked to indicate highlighting, and an example in which blacking and ticking of the option box are canceled to indicate that the option box is unselected or selection of the option box is canceled.

It should be noted that, because a specific level-1 account includes a relatively large quantity of sub-accounts, when all sub-accounts are displayed, display resources may be occupied, and consequently it is inconvenient to view another level-1 account. Therefore, when a quantity of sub-accounts included in any level-1 account is greater than a first quantity threshold, the sub-account may be displayed in a folding manner. The first quantity threshold is a preset threshold, and the first quantity threshold may be 4, 5, 6, or the like. An example in which the first quantity threshold is 5 is used for description in the figure in this embodiment of this application. For example, referring to FIG. 11B, because a quantity of sub-accounts included in the level-1 account hihonor@outlxxk.com is greater than 5, five sub-accounts included in the level-1 account hihonor@outlxxk.com are displayed in the account management interface, another sub-account is displayed in a folding manner, and a "MORE" option is displayed after folding. After the "MORE" option is triggered, the another sub-account included in the level-1 account hihonor@outlxxk.com may be displayed.

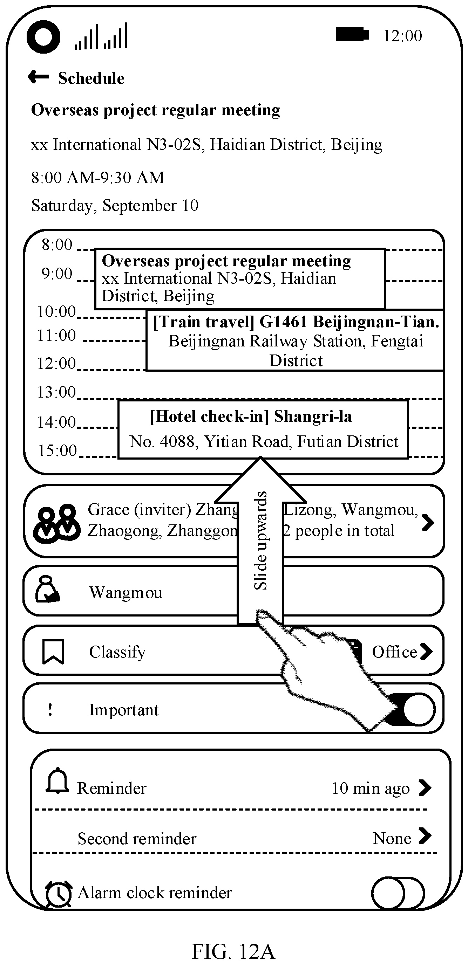

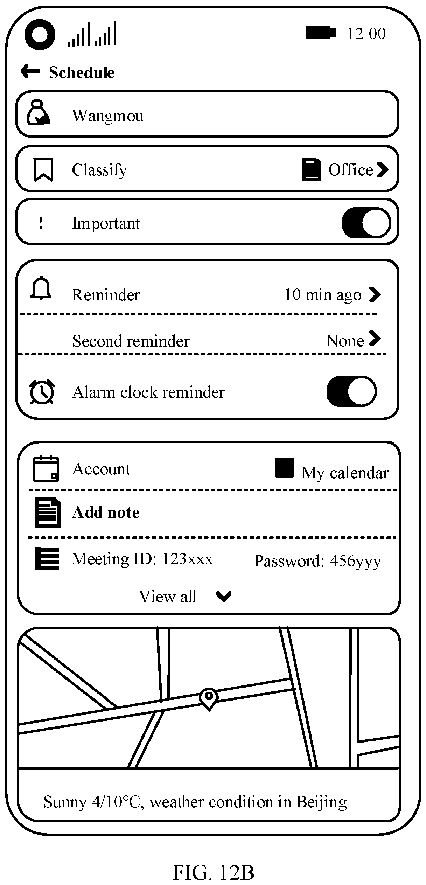

In an example of this application, referring to FIG. 12A, when the schedule detail interface of the first schedule is displayed, because a display of the mobile phone is limited, some content cannot be displayed completely. In this case, the user may perform a sliding operation on the schedule detail interface, and in response to the sliding operation, the mobile phone displays a schedule detail interface that is shown in FIG. 12B and that is obtained after sliding. The schedule detail interface obtained after sliding may display account information of the first schedule, location information of the first schedule, weather information, and other information. The account information includes information about a sub-account, and the location information of the first schedule may be reflected by using a map. When the first schedule is a conference schedule, an "Add note" option, conference-related information, and the like may be further set. The conference-related information includes information such as a conference ID and a password. When the "Add note" option is triggered, a note addition interface may be jumped to. The note addition interface may be an interface in the calendar application, or may be an interface in a Notepad application, a Notes application, or the like. This is not limited in this embodiment of this application.

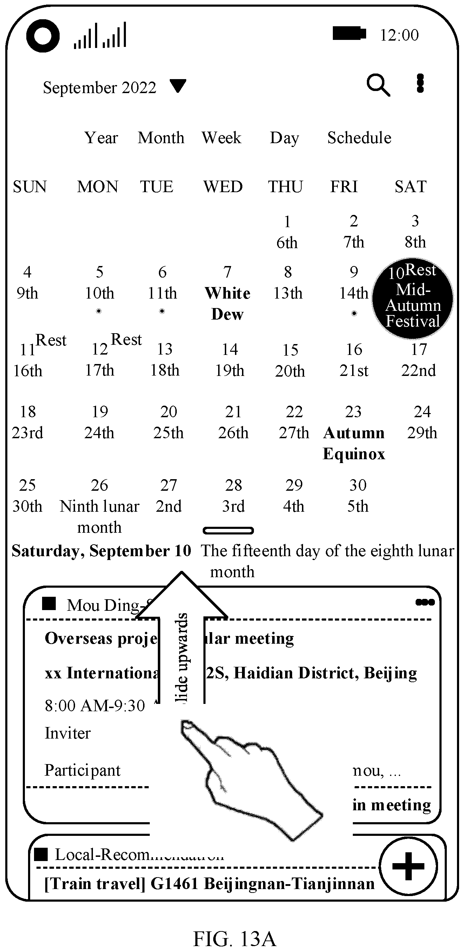

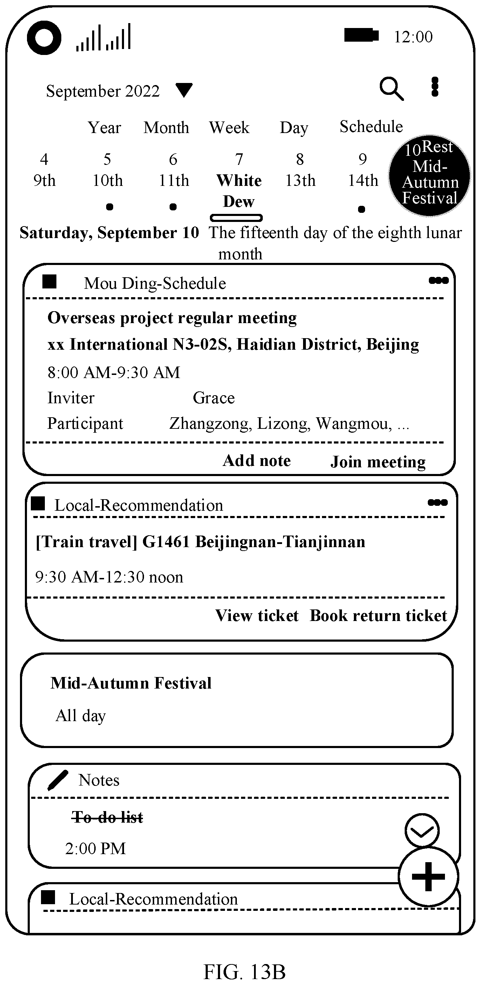

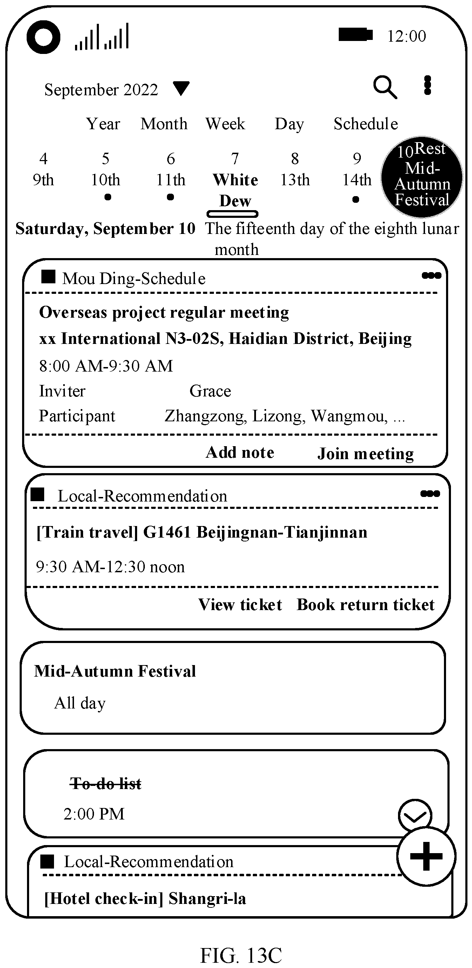

In an example of this application, when a schedule includes any several types of the following schedules: a common schedule, an all-day schedule, a conflict schedule, an important schedule, an ignored schedule, an expired schedule, a festival and solar term schedule, and a to-do list, or when a user has a plurality of schedules, for example, the user has at least three schedules in an interface of a monthly view, or the user has at least four schedules in an interface of a weekly view, all the schedules cannot be displayed at one single time due to a limited size of the display of the mobile phone. In this case, referring to FIG. 13A, the user may perform a sliding operation on the monthly view to view schedule information of more schedules. In response to the sliding operation on the monthly view, the mobile phone displays a monthly view obtained after sliding. If the to-do list is obtained from a third-party application, for example, the to-do list is obtained from a Notes application, in the monthly view obtained after sliding that is displayed by the mobile phone, a view in which schedule information of the plurality of schedules is located may be shown in FIG. 13B. In FIG. 13B, a source of the schedule is displayed in the view in which the to-do list is located, that is, "from "notes"" is displayed in the view in which the to-do list is located. If the to-do list is a to-do list of the calendar application, in the monthly view obtained after sliding, a view in which schedule information of the plurality of schedules is located may be shown in FIG. 13C. In FIG. 13C, a source of the schedule does not need to be displayed in the view in which the to-do list is located.

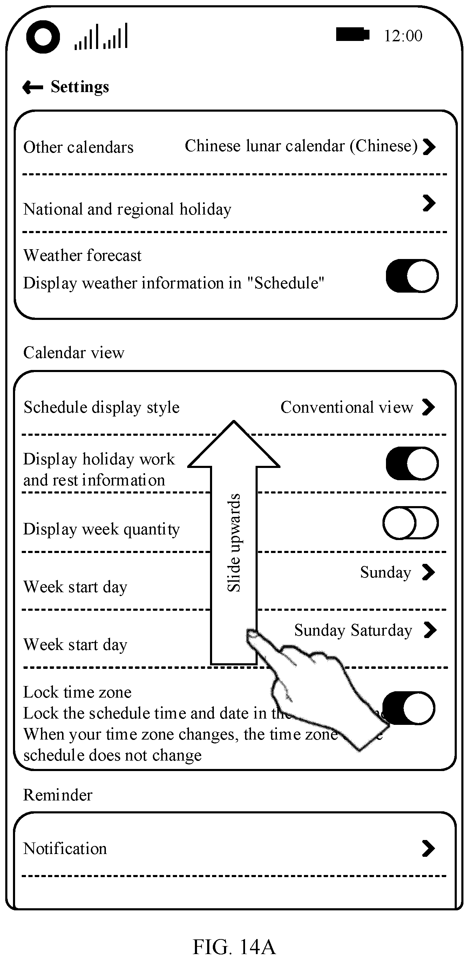

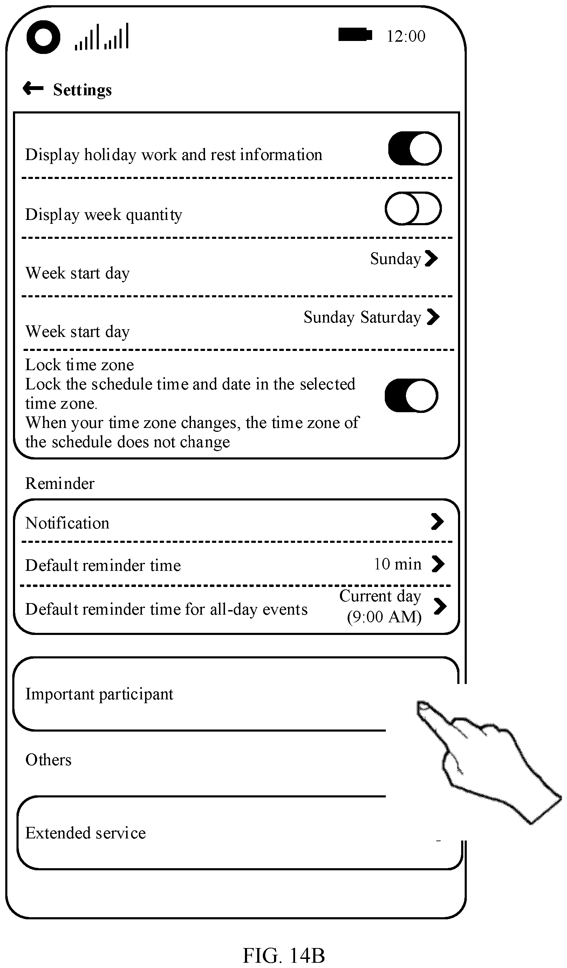

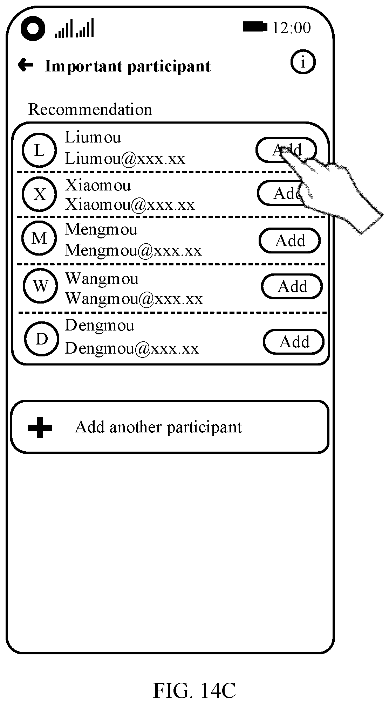

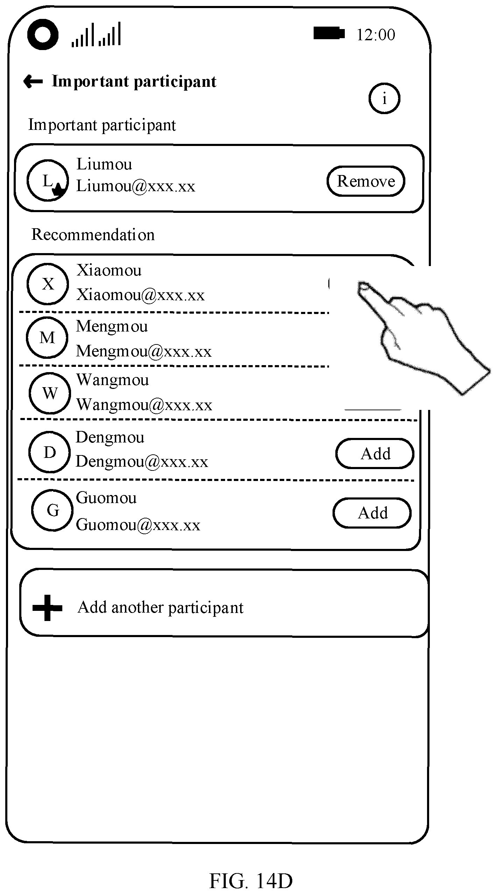

In an example of this application, some schedules are schedules to which a user attaches importance, for example, a schedule having an important participant is an important schedule. The important participant may be preset by the mobile phone based on an operation of the user. When identifying that there is an important participant in a participant of a schedule, the mobile phone may set the schedule as an important schedule. In a process of setting an important participant, referring to FIG. 14A, when the mobile phone displays a setting interface, to set the important participant, the user may perform a sliding operation on the setting interface. In response to the sliding operation on the setting interface, the mobile phone displays a setting interface that is shown in FIG. 14B and that is obtained after sliding. The setting interface obtained after sliding displays an "Important participant" option. The user may tap the "Important participant" option in the setting interface. In response to the tap operation on the "Important participant" option, the mobile phone displays, when storing a participant of a historical schedule, an important participant recommendation interface shown in FIG. 14C. The important participant recommendation interface may display a recommendation list, the recommendation list displays information about at least one recommended participant, and the recommendation list includes information about a maximum of five participants. An add option is provided in an information bar in which information about each participant is located, and the participants are persons who have participated in a same schedule together. The user may tap an add option corresponding to information about a participant that needs to be specially concerned in the recommendation list, for example, the user taps an add option corresponding to information about Liumou. In response to the tap operation on the add option, referring to FIG. 14D, the information about the participant corresponding to the add option that is tapped by the user is moved to an important participant list displayed above the recommendation list, and the recommendation list is refreshed. Information about a participant displayed in the important participant list is information about an important participant, and a pendant is disposed on a profile picture of the important participant. In the figure in this embodiment of this application, a "crown" symbol added to the profile picture of the important participant is used to indicate a specified pendant.

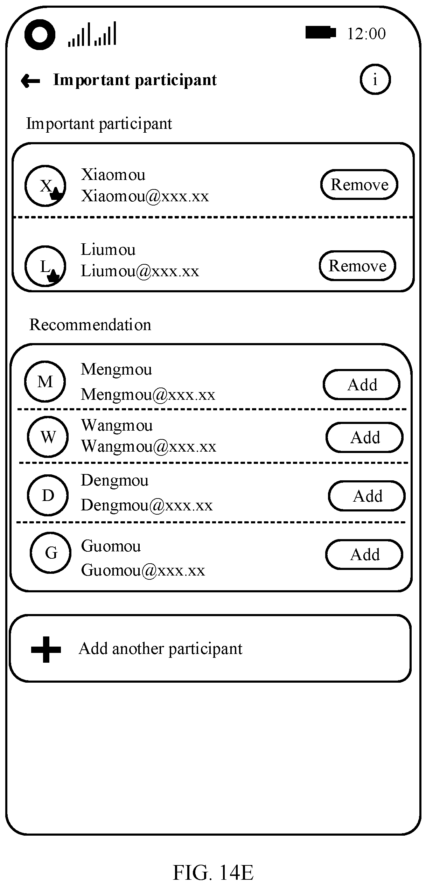

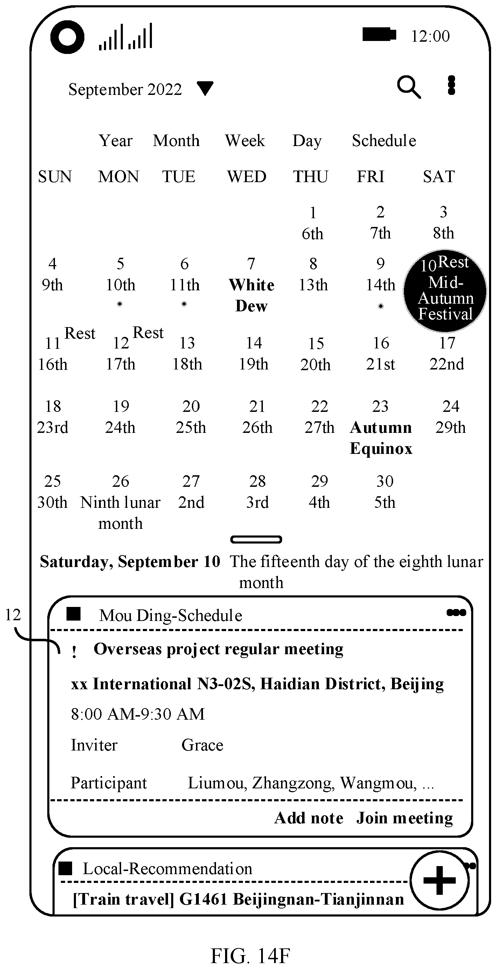

The user may set more than one important participant. In this case, the user may continue to tap, in the recommendation list, an add option in an information bar in which information about a participant that needs to be set is located. In response to the tap operation on the add option, referring to FIG. 14E, the mobile phone pins an information bar of a newly added participant to a top of the important participant list for display. When a participant in the important participant list exists in any schedule, the mobile phone can set the schedule as an important schedule, that is, set an important identifier in a card view of the schedule. For example, referring to FIG. 14F, a participant of a conference schedule includes an important participant "liumou". Therefore, an important identifier 12 is displayed in a card view of the conference schedule.

It should be noted that, the operation of refreshing the recommendation list by the mobile phone includes: deleting, from the recommendation list, information about a participant added to the important participant list; and/or re-obtaining a participant meeting a recommendation condition, and updating the recommendation list based on information about the participant meeting the recommendation condition. A quantity of recommended participants in a refreshed recommendation list is less than or equal to a preset threshold, for example, less than or equal to 5.

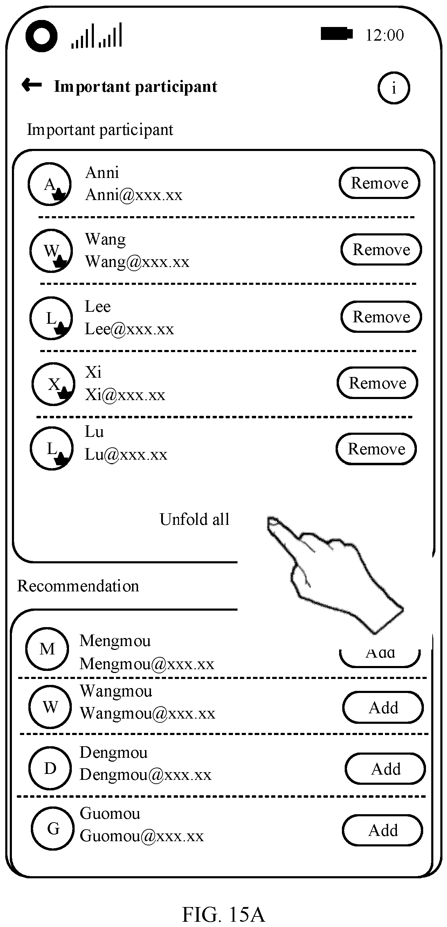

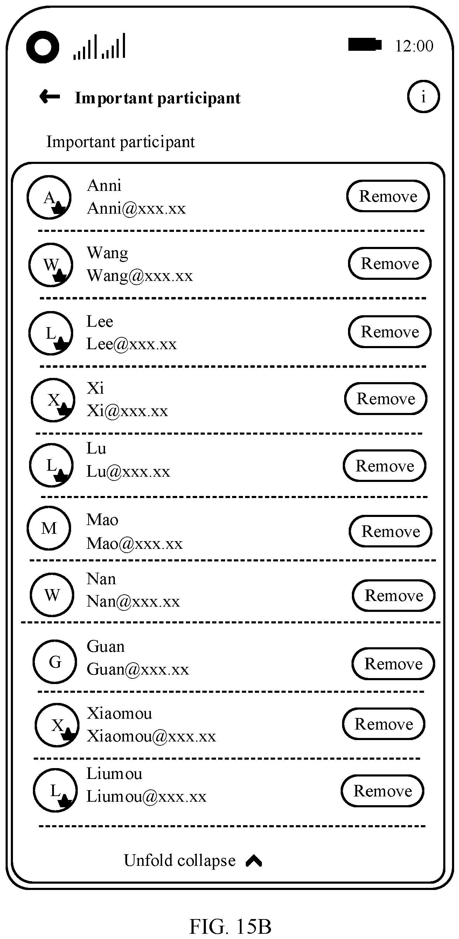

In an example of this application, referring to FIG. 15A, the user may set, in the important participant recommendation interface, a plurality of participants as important participants of a schedule. Because an excessively large quantity of persons is set, to display the recommendation list and the important participant list in a same interface, when a quantity of participants included in the important participant list is greater than a second quantity threshold, the mobile phone may display the important participant list in a folding manner, and information about only important participants whose quantity is the second quantity threshold is displayed in the important participant list. The second quantity threshold may be set based on a requirement, for example, the second quantity threshold is 5, 6, or 7. This is not specifically limited in this embodiment of this application, and that the second quantity threshold is 5 is used for description in the figure in this embodiment of this application. For ease of description, in this embodiment of this application, an important participant list displayed in a folding manner is referred to as a first list, and an important participant list displayed in an expanding manner is referred to as a second list. When the user needs to view a complete important participant list, the user may tap an unfold option displayed at a bottom of the first list, and a name of the option may be displayed as "Unfold all". In response to the tap operation on the unfold option, the mobile phone displays the second list shown in FIG. 15B. A fold option is displayed at a bottom of the second list, and a name of the fold option may be "Unfold collapse". The user may tap the fold option, and in response to the tap operation on the fold option, the mobile phone may fold the second list to display the first list shown in FIG. 15A.

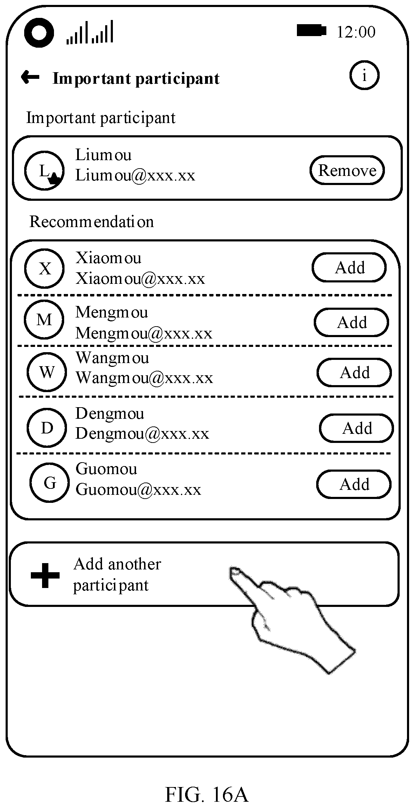

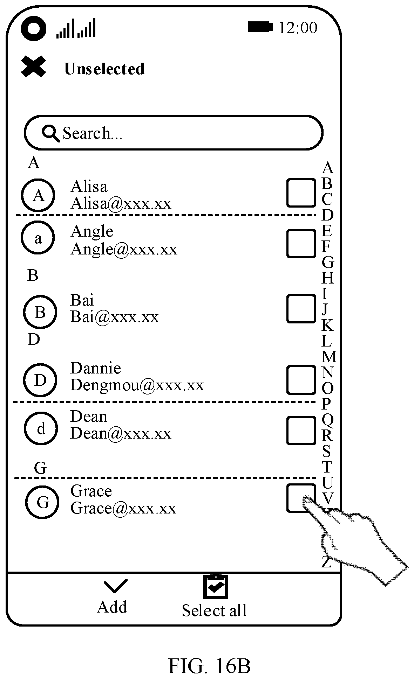

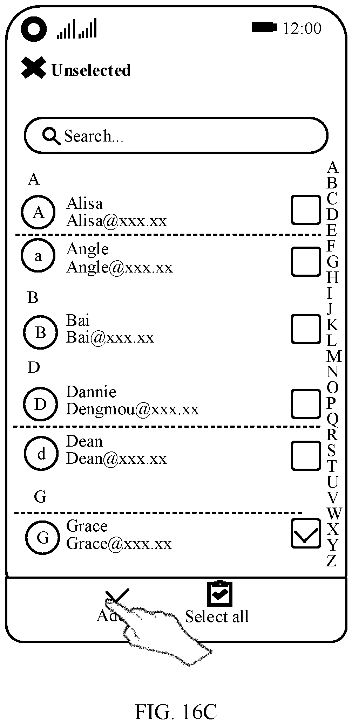

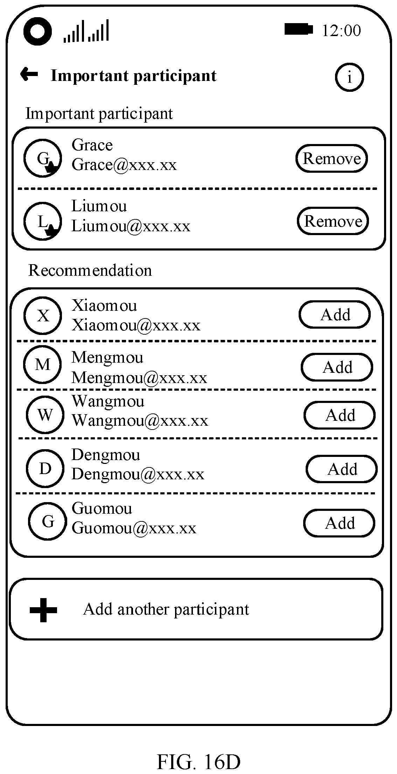

In an example of this application, referring to FIG. 16A, because a participant that the user wants to set may not exist in the recommendation list, an "Add another participant" option may be further displayed in the important participant recommendation interface, and the user may tap the "Add another participant" option. In response to the tap operation on the "Add another participant" option, the mobile phone may display a participant selection interface shown in FIG. 16B. The participant selection interface displays a participant list, an "Add" option, and a "Select all" option. Participants in the participant list do not include a participant recorded in the important participant list. In the participant list, information about the participants is arranged in an initial letter order of the information about the participants. A selection box is disposed in an information bar corresponding to each participant. The user may tap the selection box to select a corresponding participant. The selection box may be in a shape such as a square or a circle. In response to the tap operation on the selection box, referring to FIG. 16C, the mobile phone highlights the selection box that is tapped by the user. In the figure in this embodiment of this application, the selection box is ticked to indicate highlighting of the selection box. After selecting information about a participant that needs to be added, the user may tap the "Add" option. In response to the tap operation on the "Add" option, the mobile phone adds the information about the participant selected by the user to the important participant list, and displays an important participant list shown in FIG. 16D. In the important participant list, to enable the user to clearly understand an important participant that is newly added currently, information about the newly added important participant may be displayed at a top of the important participant list.

In an example of this application, because the user may add a plurality of participants, when an excessively large quantity of participants are added, to make information about the participants displayed in the important participant list conform to a viewing habit of the user, the user may further sort information about the participants in the important participant list. For example, the user may pin, by using a movement operation, a relatively concerned participant to the top for display.

It should be noted that the participant selection interface further includes the "Select all" option. After the "Select all" option is triggered, information about all participants in a participant list may be selected. If information about a participant selected by the user from the participant list includes information about a participant in the recommendation list, after adding, to the important participant list, the information about the participant selected by the user from the participant list, the mobile phone updates the recommendation list. After the recommendation list is updated, the information about the participant added to the important participant list is no longer displayed.

In an example of this application, it may be learned from the foregoing description that, when a participant in the important participant list exists in any schedule, the mobile phone can set the schedule as an important schedule. To enable the user to learn a reason making the important schedule important, when schedule information of the important schedule is displayed in a form of a card view, the important participant may be highlighted in the card view. For example, the important participant may be displayed in red, highlighted, and displayed in a bold manner. This is not specifically limited in this embodiment of this application.

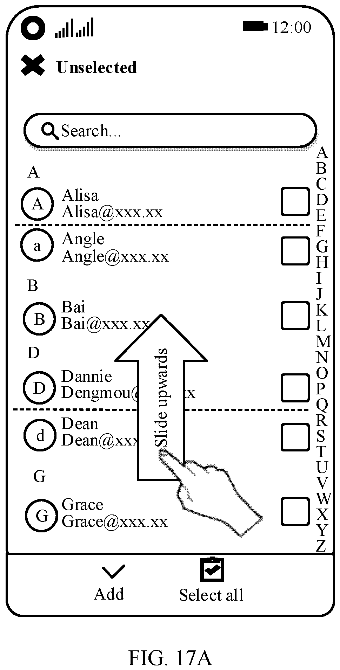

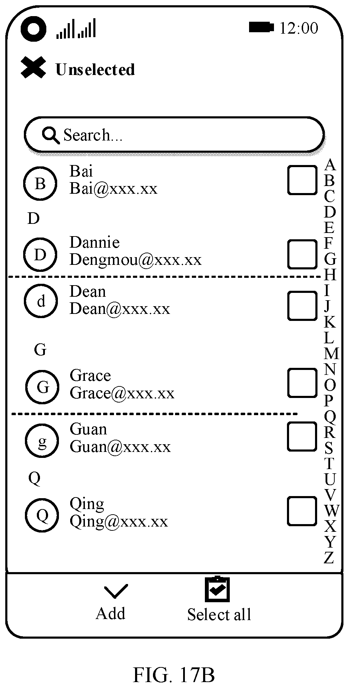

In an example of this application, when a participant selection interface shown in FIG. 17A is displayed, because there may be a relatively large quantity of participants, all participants cannot be displayed in one display interface. Therefore, to learn information about more participants, the user may perform a sliding operation on a participant list. In response to the sliding operation on the participant list, the mobile phone may display a participant list that is shown in FIG. 17B and that is obtained after sliding, and the user may operate, in the foregoing manner shown in FIG. 16A to FIG. 16D, the participant list obtained after sliding.

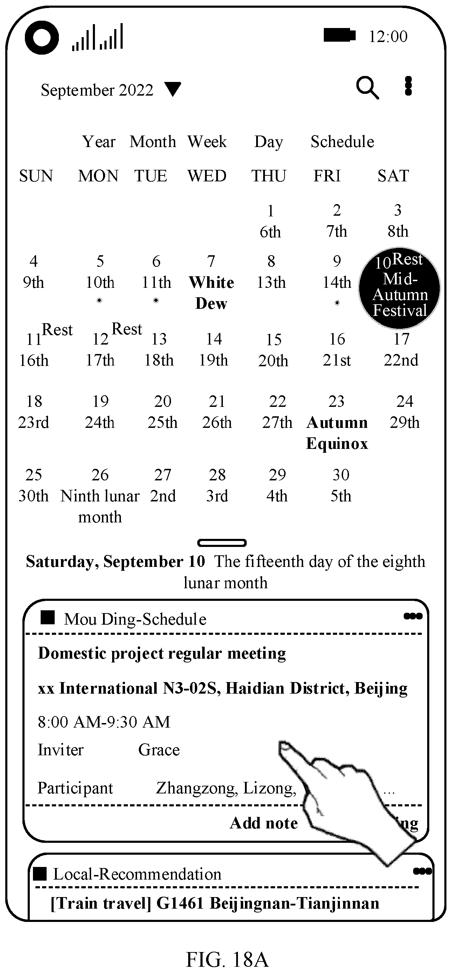

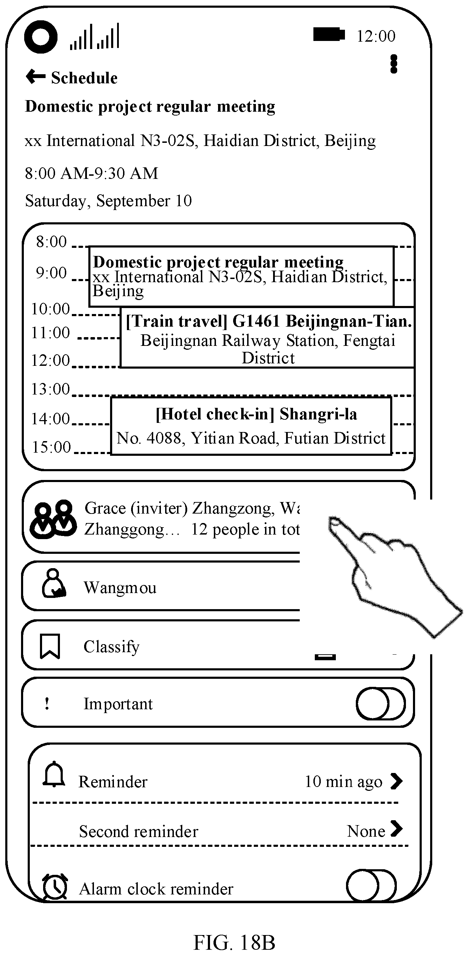

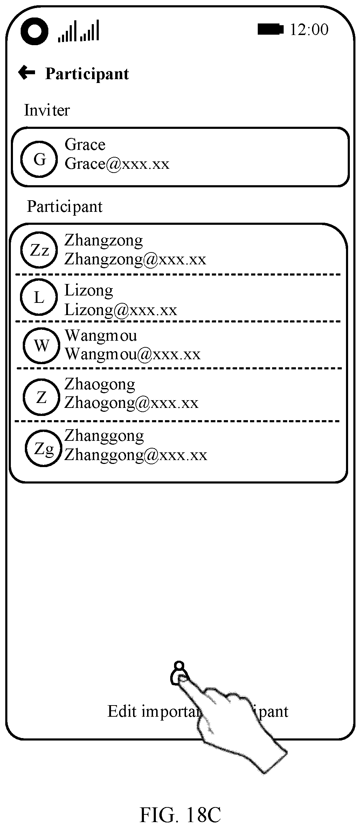

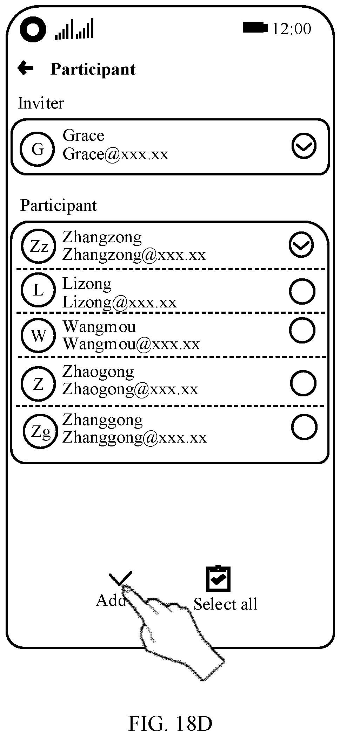

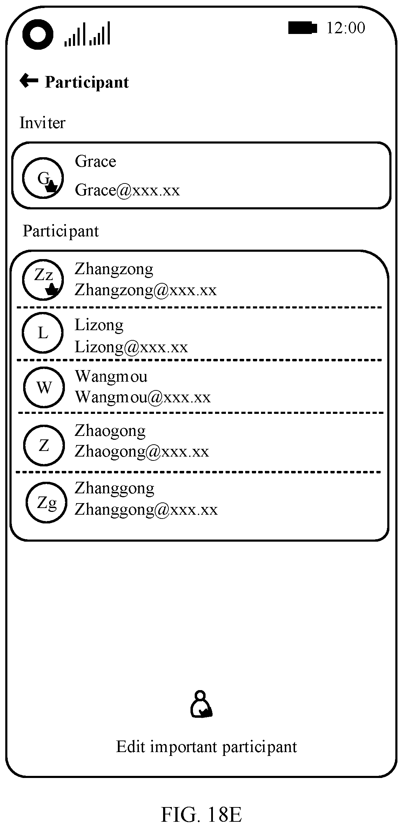

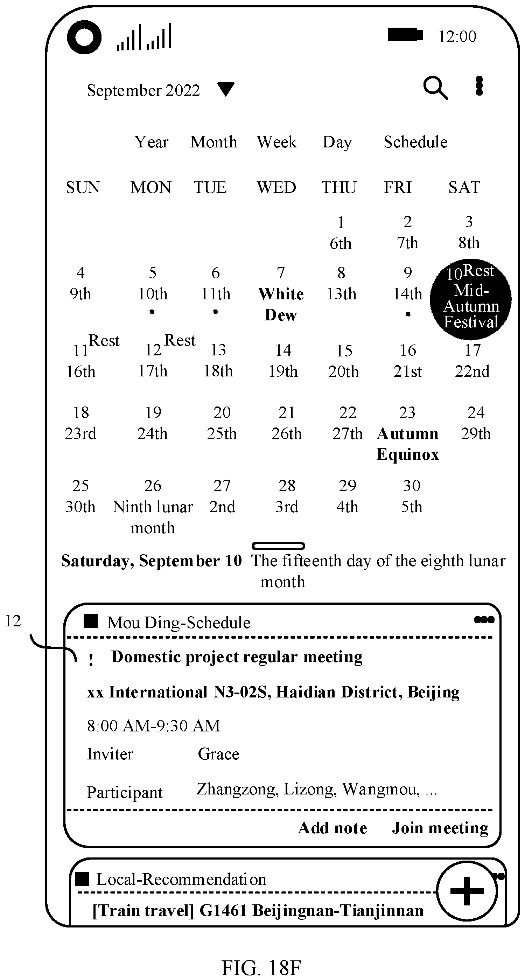

In an example of this application, for any schedule, the user may separately set an important participant on the schedule. For example, when the mobile phone displays a monthly view shown in FIG. 18A, a card view of the first schedule does not display an important identifier. In response to a tap operation on schedule information of the first schedule, referring to FIG. 18B, the mobile phone displays the schedule detail interface of the first schedule, and the user may tap a participant setting option in the schedule detail interface of the first schedule. In the figure, an example in which an information bar in which names of a plurality of participants are located is used as the participant setting option is used for description. In response to a tap operation on the participant setting option, the mobile phone may display a participant editing box that corresponds to the first schedule and that is shown in FIG. 18C. The participant editing box may display an information bar of an inviter of a schedule, another participant list, and a participant editing option. If the user wants to set an important participant for the schedule, the user may tap the participant editing option. A name of the participant editing option in the participant editing box may be "Edit important participant". In response to the tap operation on the participant editing option, the participant editing box switches to an editable state shown in FIG. 18D. A selection box is disposed in an information bar in which information of each participant in the editable participant editing box is located, and an "Add" option and a "Select all" option are also displayed in the important participant addition interface. The user may tap the selection box to select a corresponding participant as an important participant. In response to the tap operation on the selection box, referring to FIG. 18E, the mobile phone highlights the selection box that is tapped by the user. The user taps the "Add" option, and in response to the tap operation on the "Add" option, referring to FIG. 18E, a participant corresponding to the selection box is set as an important participant, and a pendant is set for a profile picture of the important participant. Then, when the mobile phone displays the monthly view again, referring to FIG. 18F, the card view of the first schedule displays the important identifier 12.

It should be noted that, in the figure in this embodiment of this application, the selection box in the information bar is ticked for display to indicate that the information bar is highlighted.

In addition, an important participant set in the setting interface is an important participant set for all schedules, that is, a participant that is important for all the schedules. However, an important participant set in a schedule detail interface of any schedule is an important participant only for the schedule. An important participant set in a schedule detail interface of any schedule may not be an important participant for another schedule. Therefore, the mobile phone does not add, to the important participant list, an important participant set in a schedule detail interface of any schedule.

A schedule whose participant includes an important participant may be as an important schedule. Therefore, after an important participant is set for the schedule, the schedule is also set as an important schedule. When schedule information of the schedule is displayed in a calendar view, the schedule information carries an important identifier.

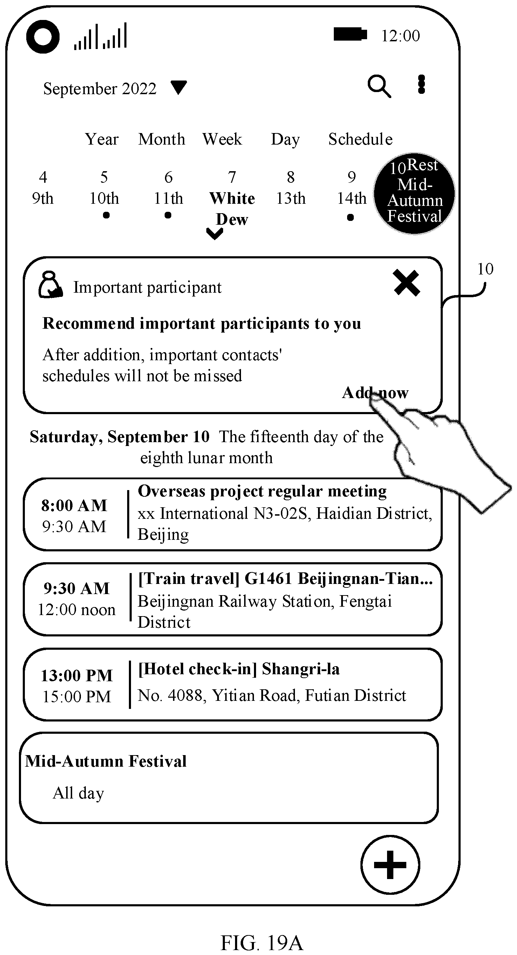

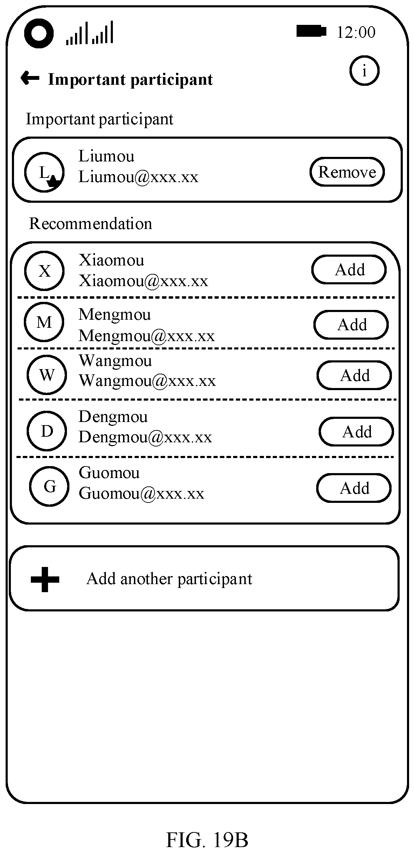

In an example of this application, the mobile phone not only may enter the important participant recommendation interface from the setting interface through an operation of the user, but also may further display the important participant recommendation interface in another manner. For example, referring to FIG. 19A, when a monthly view is displayed and schedule information of a plurality of schedules is displayed in a form of a conventional view, an addition prompt box 10 may be displayed in the monthly view. The addition prompt box 10 is used to prompt the user to add an important participant, and an "Add now" option is disposed in the addition prompt box. The user may tap the "Add now" option, and in response to the tap operation on the "Add now" option, the mobile phone may display an important participant recommendation interface shown in FIG. 19B.

In an example, after displaying the important participant recommendation interface shown in FIG. 19B, the mobile phone may set an important participant based on the foregoing application scenario shown in FIG. 14A to FIG. 14F. Details are not described one by one again in this embodiment of this application.

It should be noted that, a case in which a monthly view is displayed and schedule information of a plurality of schedules is displayed in a form of a conventional view is merely used as an example for description in the foregoing, and the addition prompt box may also be displayed in another calendar view. For example, when the mobile phone displays a monthly view and schedule information of a plurality of schedules in the monthly view is displayed in a form of a card view, the monthly view may also display the add prompt box, and the user may perform an operation based on the application scenario shown in FIG. 19A and FIG. 19B.

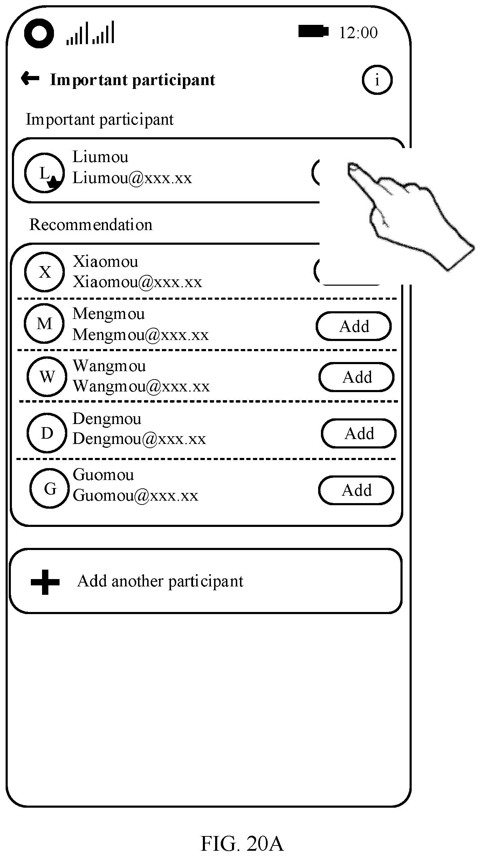

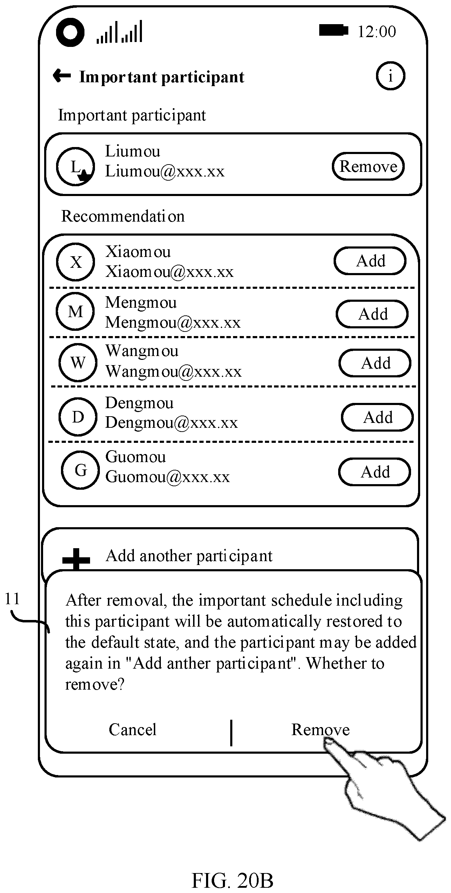

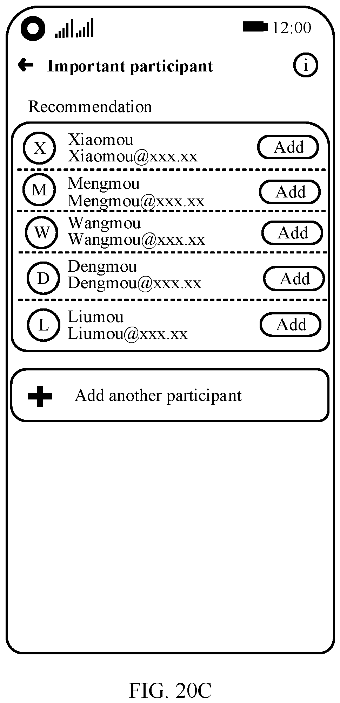

In an example of this application, after adding information about an important participant, the user may further remove the information about the added important participant. Referring to FIG. 20A when the important participant recommendation interface is displayed, if the important participant recommendation interface displays the important participant list, and a remove option is displayed in a list bar in which information about each important participant is located, the user may tap the remove option corresponding to information about an important participant that the user wants to remove. In response to the tap operation on the remove option, the mobile phone displays a removal confirmation pop-up window 11 shown in FIG. 20B. The removal confirmation pop-up window 11 is used to prompt the user whether to remove information about a selected important participant and consequences of removing the information about the important participant, and the removal confirmation pop-up window displays a "Cancel" option and a "Remove" option. The user taps the "Remove" option when confirming that the information about the selected important participant is to be removed. In response to the tap operation on the "Remove" option, referring to FIG. 20C, the mobile phone removes a list bar in which the "Remove" option is located from the current interface, and displays the participant information in the participant list. When the user cancels removal of the information about the selected important participant, the user may tap the "Cancel" option, and in response to the tap operation on the "Cancel" option, the mobile phone may return to the display in FIG. 20A.

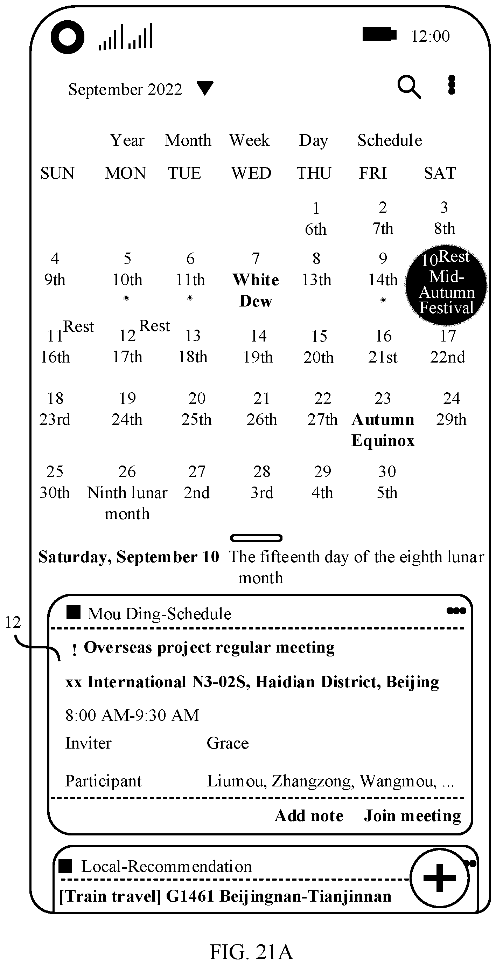

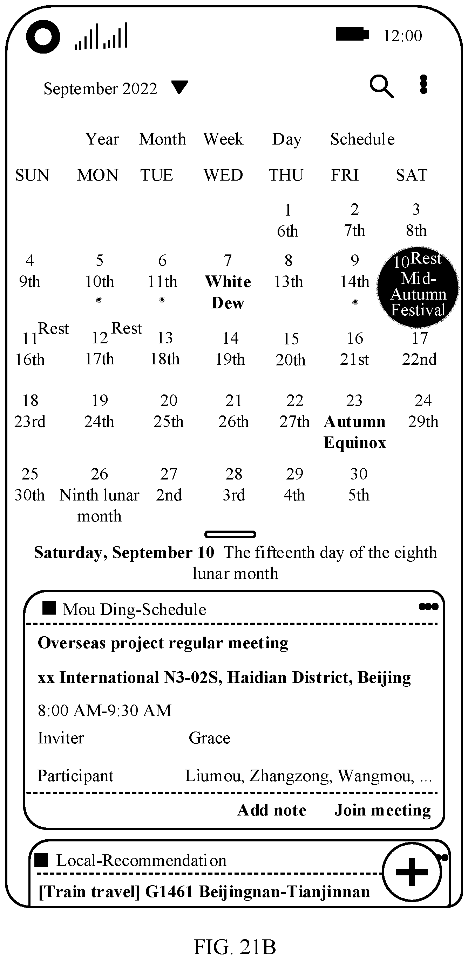

In an example of this application, when no other important schedule-related setting is performed, if the mobile phone sets an important schedule based on whether a schedule includes a participant including an important participant, when the user sets an important participant, referring to FIG. 21A, if a participant of the first schedule has an important participant, the first schedule is an important schedule, and the important identifier 12 is displayed in the view in which the schedule information of the first schedule is located. After receiving an operation of deleting an important participant by the user, such as the process of deleting an important participant in FIG. 20A to FIG. 20C, the mobile phone may traverse a participant of an important schedule in response to the operation of deleting the important participant by the user. If the foregoing deleted important participant exists in the participant of the important schedule, the mobile phone may set the important schedule as a common schedule. As shown in FIG. 21B, the important identifier 12 is no longer displayed in the view in which the schedule information of the first schedule is located.

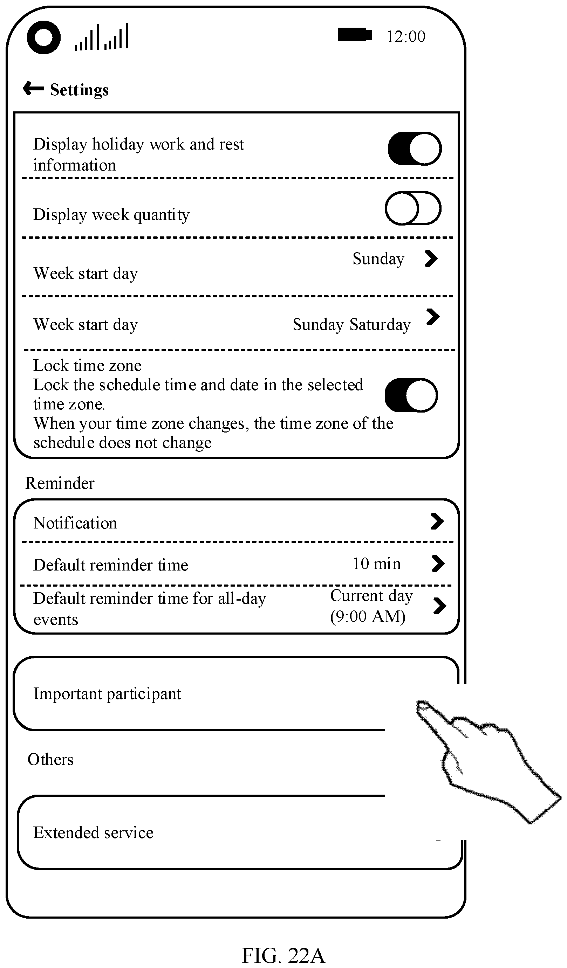

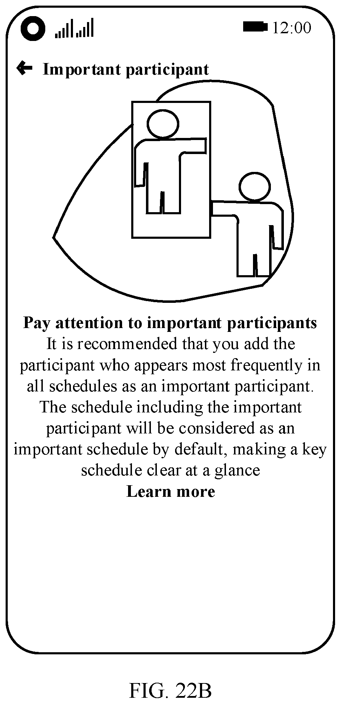

In an example of this application, referring to FIG. 22A, when the mobile phone displays the setting interface, the user may tap the "Important participant" option in the setting interface. In response to the tap operation on the "Important participant" option, an important participant introduction interface shown in FIG. 22B is displayed when no participant exists. The important participant introduction interface displays introduction information of an important participant and a "Learn more" option. The user may tap the "Learn more" option, and in response to the tap operation on the "Learn more" option, the mobile phone jumps from the important participant introduction interface to gameplay tips interface. The gameplay tips interface is used to guide the user to implement a related function of the mobile phone.

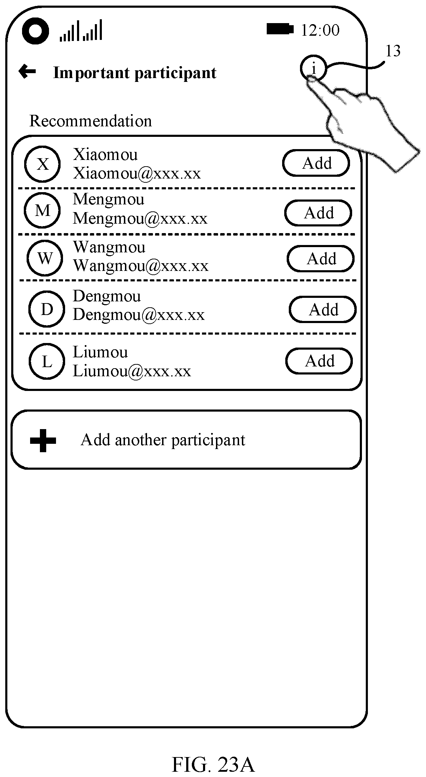

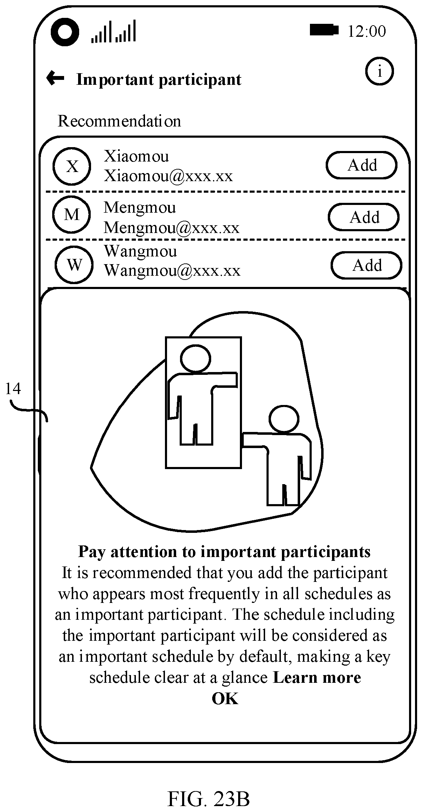

In an example of this application, referring to FIG. 23A, when the mobile phone displays the important participant recommendation interface, a function introduction option 13 is displayed in an upper right corner of the important participant recommendation interface, and the user may tap the function introduction option 13. In response to the tap operation on the function introduction option 13, referring to FIG. 23B, the mobile phone may display an important participant introduction pop-up window 14 at a bottom of the important participant recommendation interface. The important participant introduction pop-up window 14 displays introduction information of an important participant, a "Learn more" option, and an "OK" option. When the "OK" option is triggered, the important participant introduction pop-up window 14 is no longer displayed.

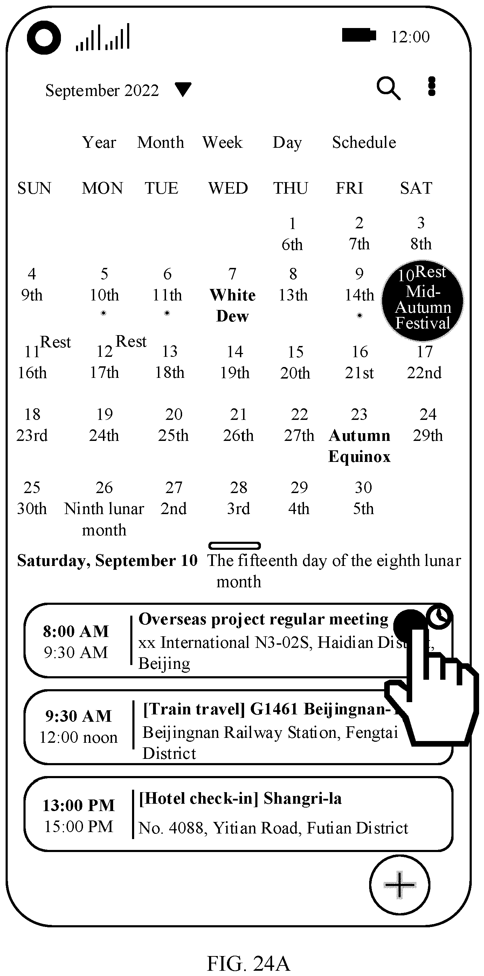

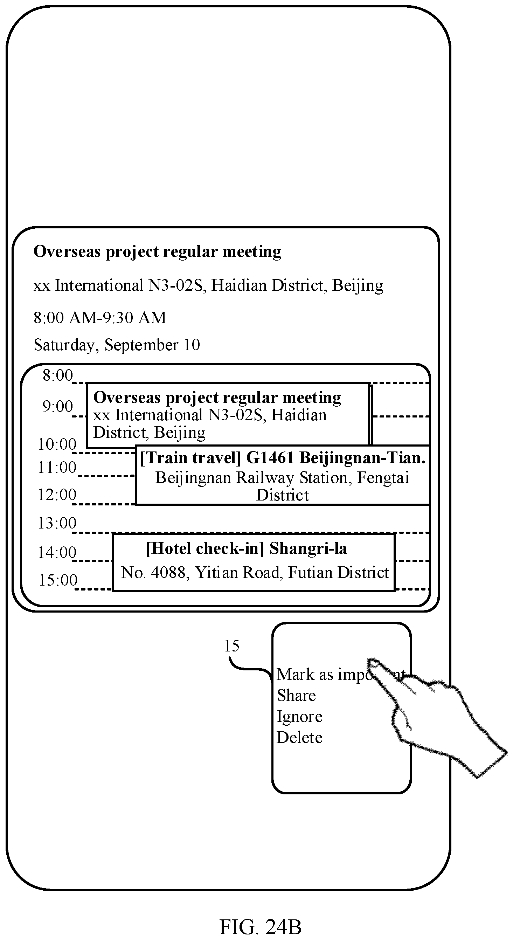

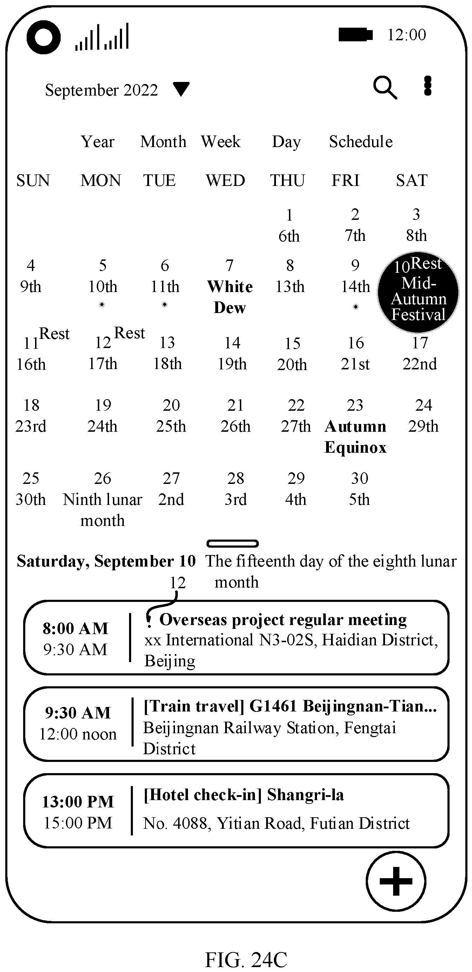

In an example of this application, to enable the user to quickly notice an important schedule, not only the mobile phone can automatically set an important identifier for a schedule that includes an important participant, but also the user may manually set a common schedule as an important schedule. For example, referring to FIG. 24A, when the mobile phone displays a monthly view and schedule information of a plurality of schedules in the monthly view is displayed in a form of a conventional view, for a second schedule that needs to be identified with importance, the user may touch and hold an information bar in which the second schedule is located. In response to the touch and hold operation on the information bar, the mobile phone may display a quick schedule preview interface shown in FIG. 24B. The quick schedule preview interface displays schedule information displayed in a card view and a third editing box 15, and the third editing box 15 displays a "Mark as important" option, a "Share" option, an "Ignore" option, and a "Delete" option. The user may tap the "Mark as important" option, and in response to the tap operation on the "Mark as important" option, referring to FIG. 24C, the mobile phone returns to the monthly view, and adds an important identifier 12 to the second schedule to mark the second schedule as an important schedule.

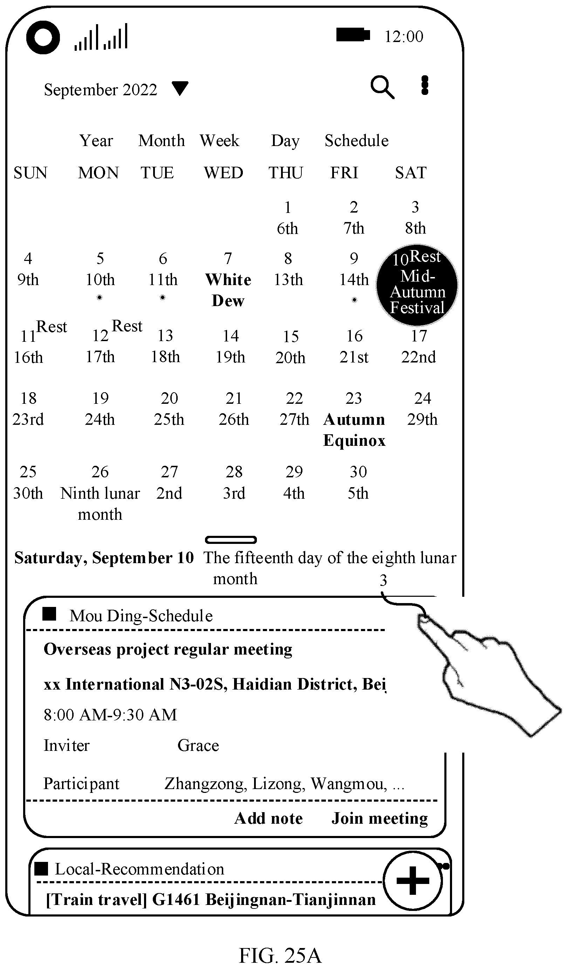

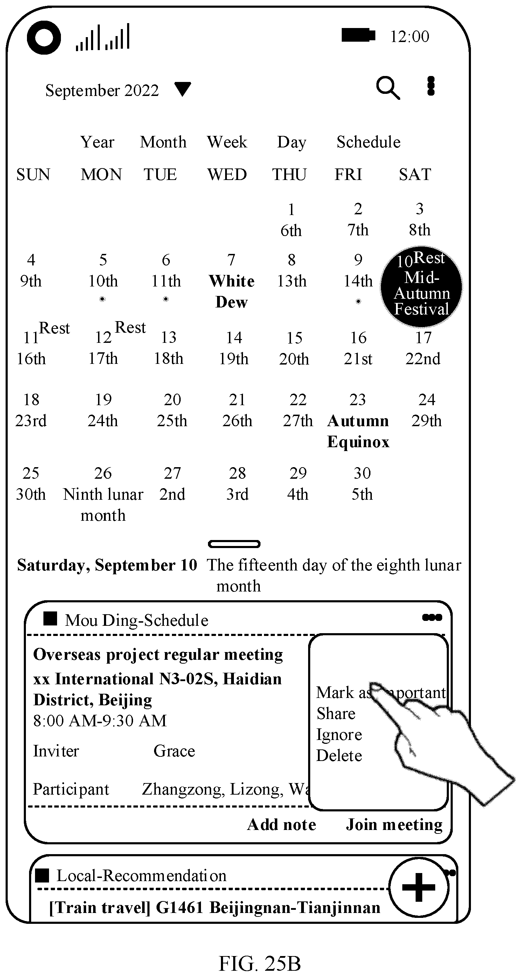

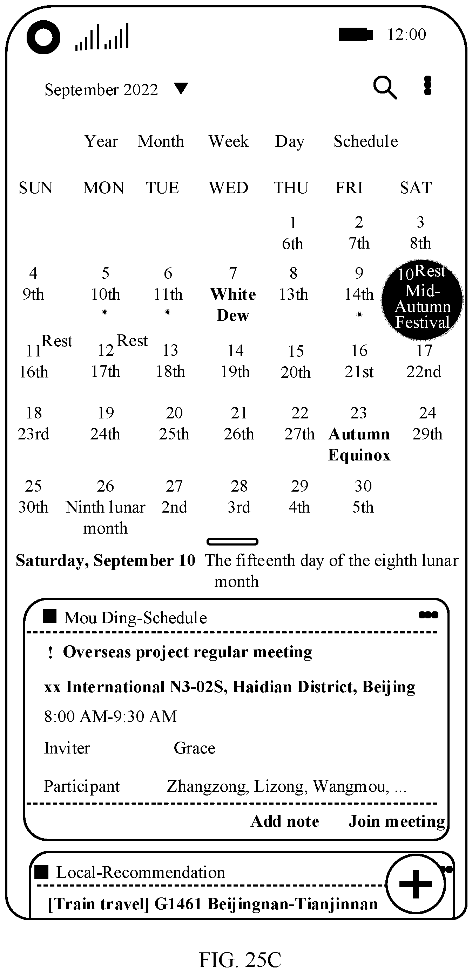

In an example of this application, referring to FIG. 25A, when the mobile phone displays a monthly view and schedule information of a plurality of schedules in the monthly view is displayed in a form of a card view, for a second schedule that needs to be identified with importance, the user may tap a second edit option 3 displayed in a card view in which schedule information of the second schedule is located. In response to the tap operation on the second edit option 3, a second editing box that is shown in FIG. 25B and that is in the view in which the schedule information of the second schedule is located is displayed. The second editing box displays a "Mark as important" option, a "Share" option, an "Ignore" option, and a "Delete" option. The user may tap the "Mark as important" option, and in response to the tap operation on the "Mark as important" option, referring to FIG. 25C, the mobile phone no longer displays the second editing box, and adds an important identifier to the second schedule to mark the second schedule as an important schedule.

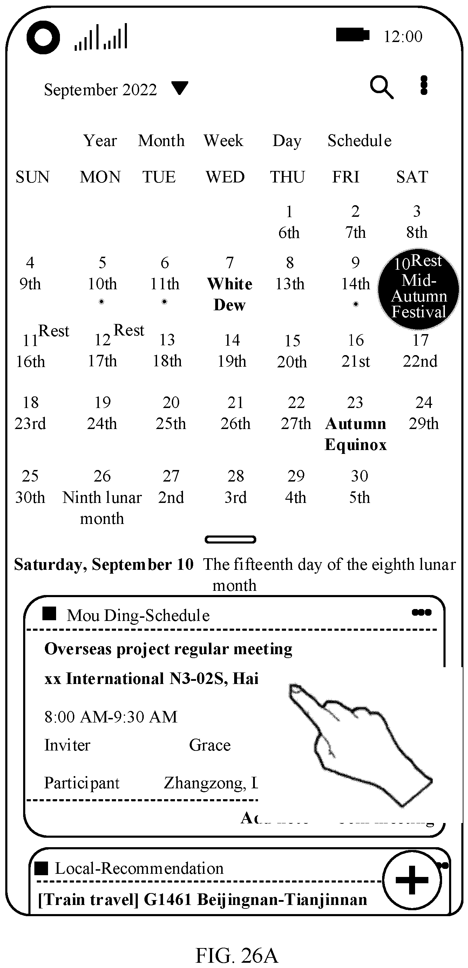

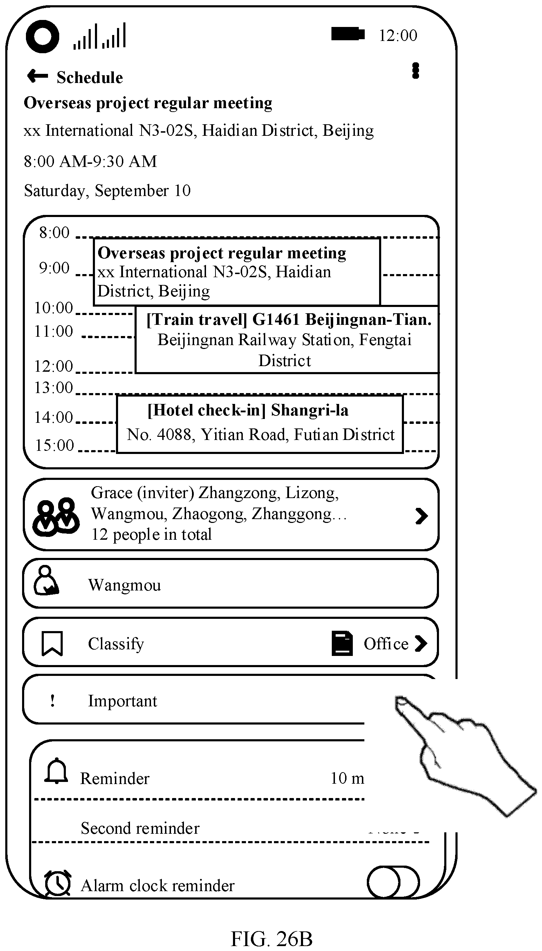

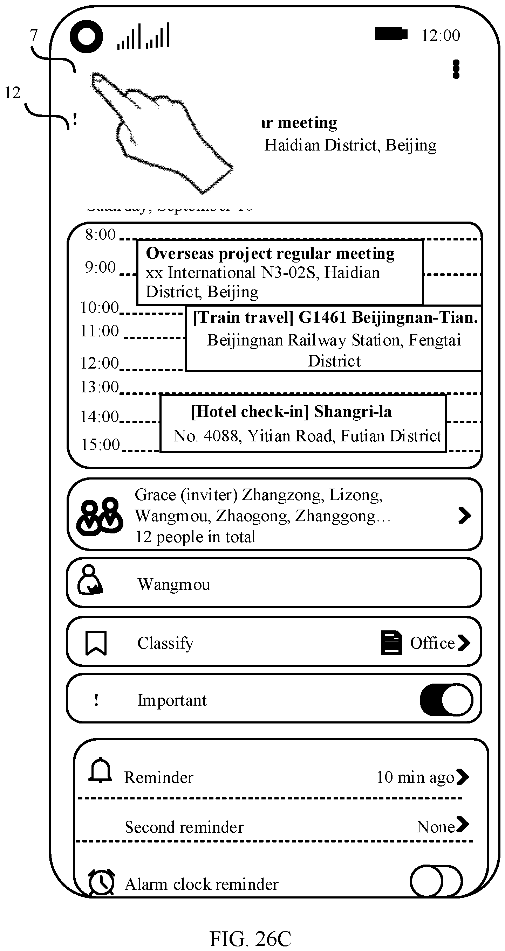

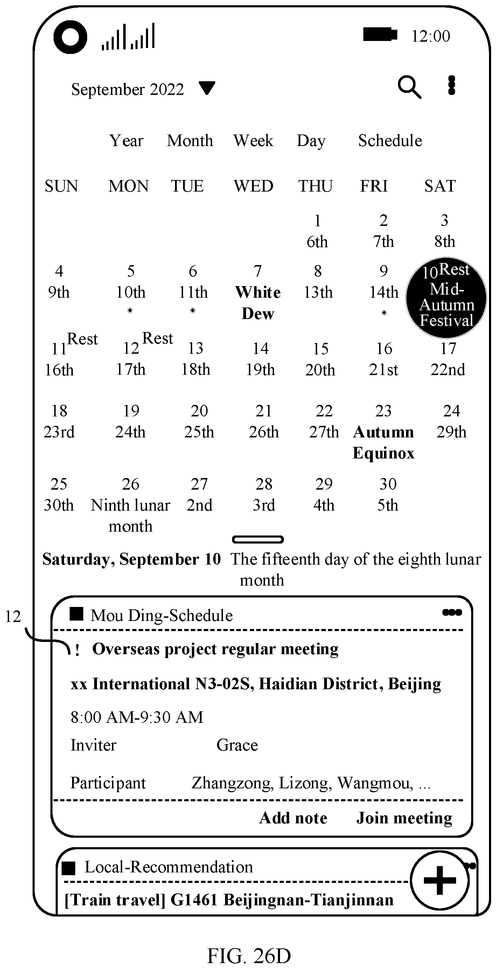

In an example of this application, referring to FIG. 26A, when the mobile phone displays a monthly view and the second schedule is not set as an important schedule, the user may tap the card view in which the schedule information of the second schedule is located. In response to the card view in which the schedule information of the second schedule is located, the mobile phone displays a schedule detail interface of the second schedule shown in FIG. 25B. The schedule detail interface displays an "Important" option. The user may tap the "Important" option, and in response to the tap operation performed by the user on the "Important" option, referring to FIG. 26C, the mobile phone may highlight the "Important" option. In the figure, a select option of the "Important" option is blacked for display to indicate highlighting of the "Important" option. Then, the user may trigger a return option 7, and in response to the triggering operation on the return option 7, the mobile phone displays a monthly view shown in FIG. 26D. The important identifier 12 is displayed in the second schedule marked as the important schedule in the monthly view. In the figure, an example in which the schedule information of the second schedule in the monthly view is displayed in a form of the card view is used for description.

In an example, in response to the tap operation performed by the user on the "Important" option, referring to FIG. 26C, the mobile phone may further display the important identifier 12 at a schedule title in the schedule detail interface.

It should be noted that, if the user wants to change the second schedule from the important schedule to a common schedule, when the mobile phone displays a monthly view shown in FIG. 26D, the user may tap the card view in which the schedule information of the second schedule is located. In response to the tap operation on the card view in which the schedule information of the second schedule is located, the mobile phone displays the schedule detail interface of the second schedule, such as an interface shown in FIG. 26C. The user may tap the "Important" option in the schedule detail interface, and in response to the tap operation on the "Important" option, the mobile phone may no longer highlights the "Important" option. Then, the user may trigger the return option 7, and in response to the triggering operation on the return option 7, the mobile phone may display the monthly view shown in FIG. 26A. The important identifier 12 is no longer displayed in the second schedule that becomes the common schedule in the monthly view.

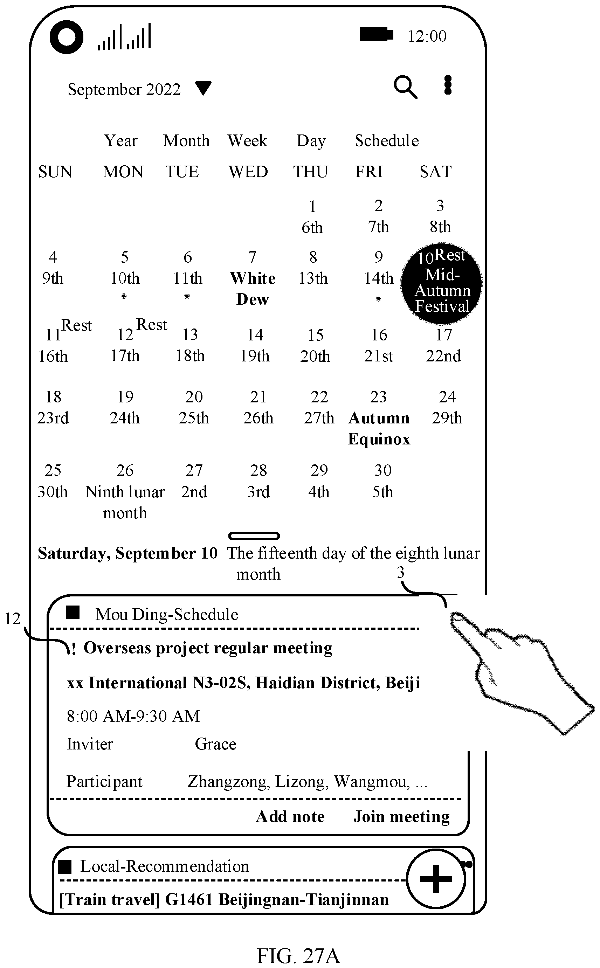

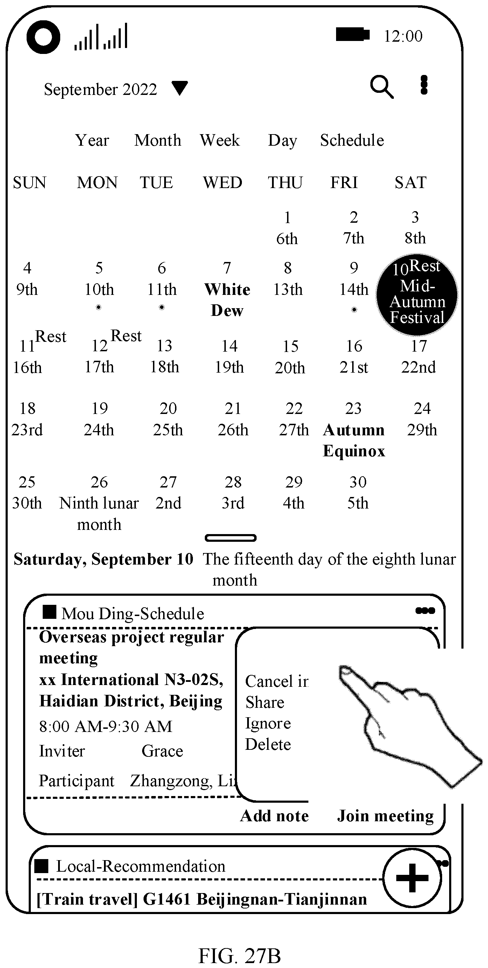

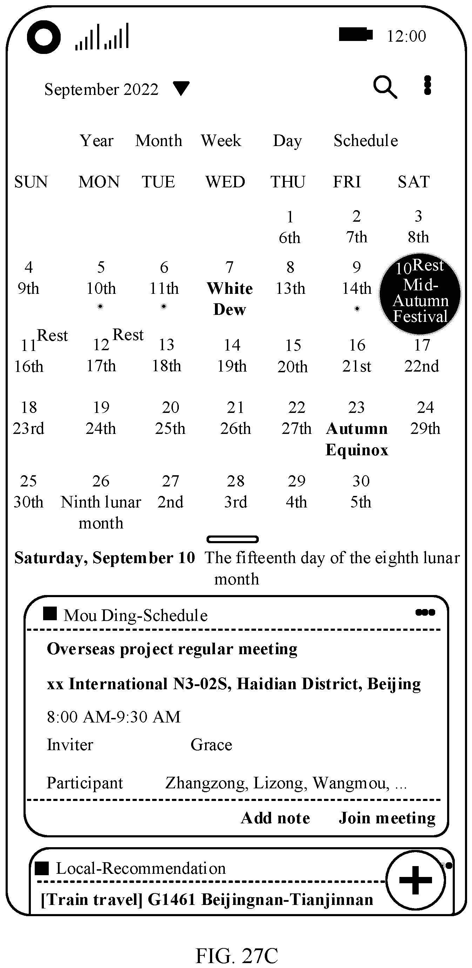

In an example of this application, referring to FIG. 27A, when the mobile phone displays schedule information of a plurality of schedules in a form of a card view, if the first schedule is an important schedule, the user may tap a second edit option 3 displayed in the card view of the first schedule. In response to the tap operation on the second edit option 3, referring to FIG. 27B, the mobile phone displays a corresponding second editing box. The second editing box displays a "Cancel important identifier" option, a "Share" option, an "Ignore" option, and a "Delete" option. The user may tap the "Cancel important identifier" option, and in response to the tap operation on the "Cancel important identifier" option, referring to FIG. 27C, the mobile phone no longer displays the second editing box, and no longer displays an important identifier in the first schedule, to change the first schedule from the important schedule to a common schedule.

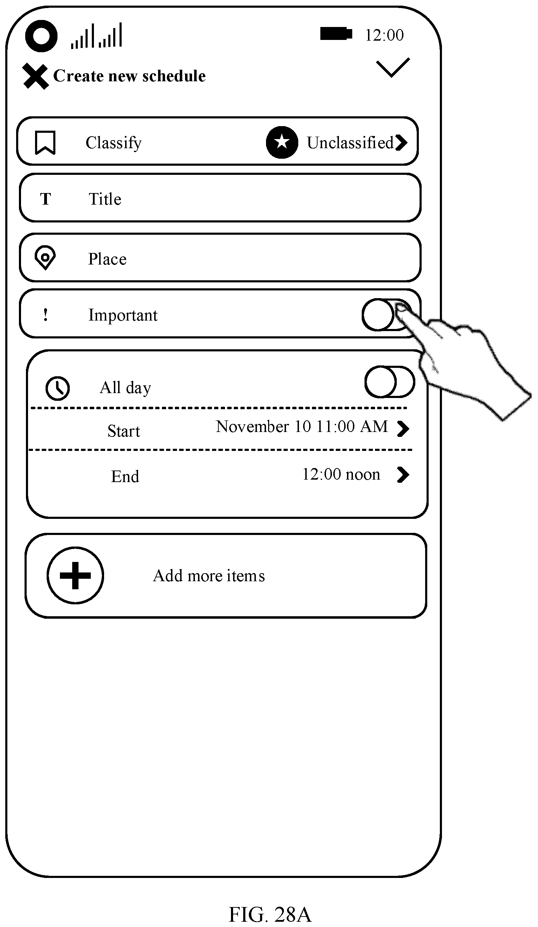

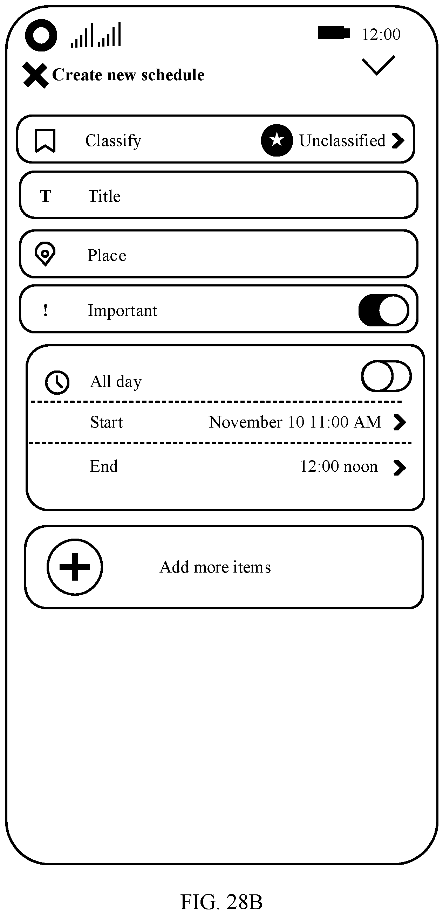

In an example of this application, when the user creates a new schedule, referring to FIG. 28A, the mobile phone may display a new schedule creation interface, and the new schedule creation interface displays an "Important" option. The user may tap the "Important" option, and in response to the tap operation on the "Important" option, referring to FIG. 28B, the "Important" option is highlighted, and a newly created schedule is determined as an important schedule. After establishment of the newly created schedule ends, when the newly created schedule is displayed in a monthly view or a schedule view, schedule information of the newly created schedule carries an important identifier.

In an example of this application, it may be learned from the foregoing description that, when a schedule includes an important participant, the schedule may be set as an important schedule; or when a schedule does not include an important participant, the user may also set the schedule as an important schedule by using an "Important" option. Although setting manners are different, the mobile phone may display a same important identifier for important schedules. Certainly, the mobile phone may alternatively display different important identifiers for schedules based on different important schedule setting manners, so that the user can learn, based on different important identifiers, reasons why the important schedules are set to be important. This is not specifically limited in this embodiment of this application.

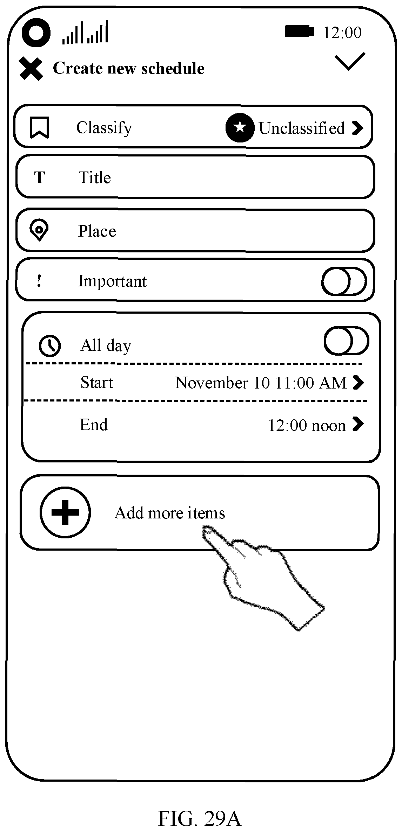

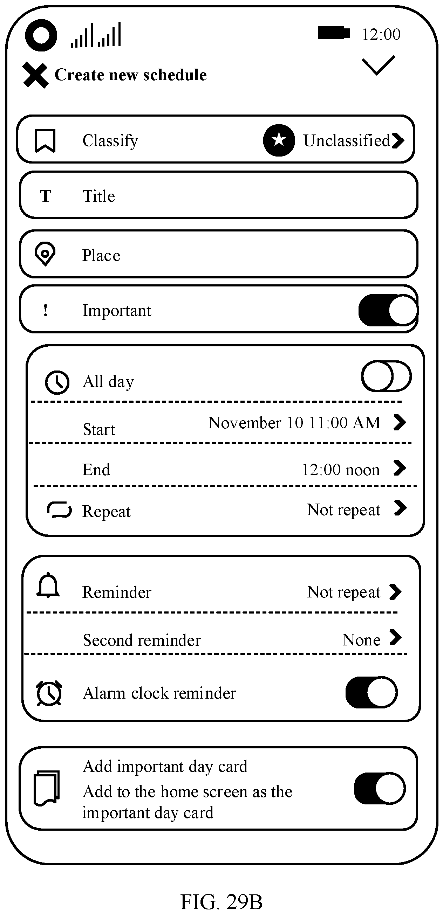

In an example of this application, referring to FIG. 29A, an "Add more items" option may be displayed in the new schedule creation interface. The user taps the "Add more items" option, and in response to the tap operation on the "Add more items" option, referring to FIG. 29B, the mobile phone may display more options in the new schedule creation interface for the user to select.

It should be noted that, the mobile phone may need to display many new options in response to the tap operation on the "Add more items" option, and a limited quantity of options are displayed in the current display interface due to a limited display size of the mobile phone. In this case, the user may perform a sliding operation on the new schedule creation interface, and in response to the sliding operation on the new schedule creation interface, the mobile phone displays a new schedule creation interface obtained after sliding. The user may view more options by performing a sliding operation on the new schedule creation interface.

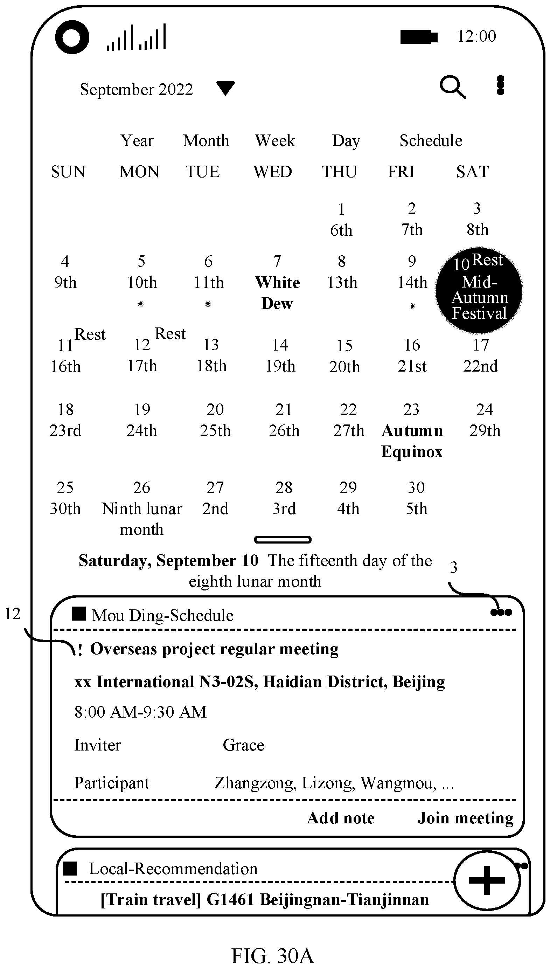

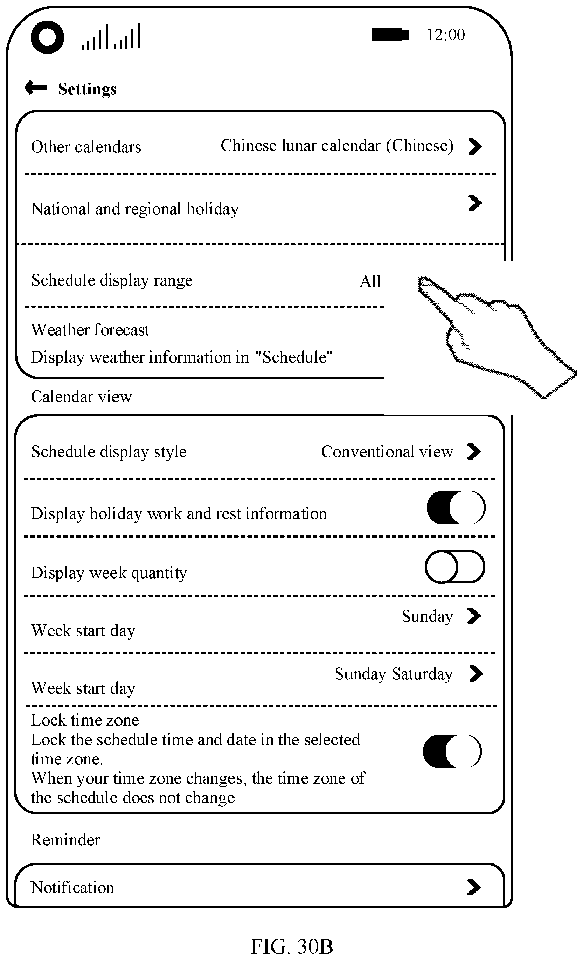

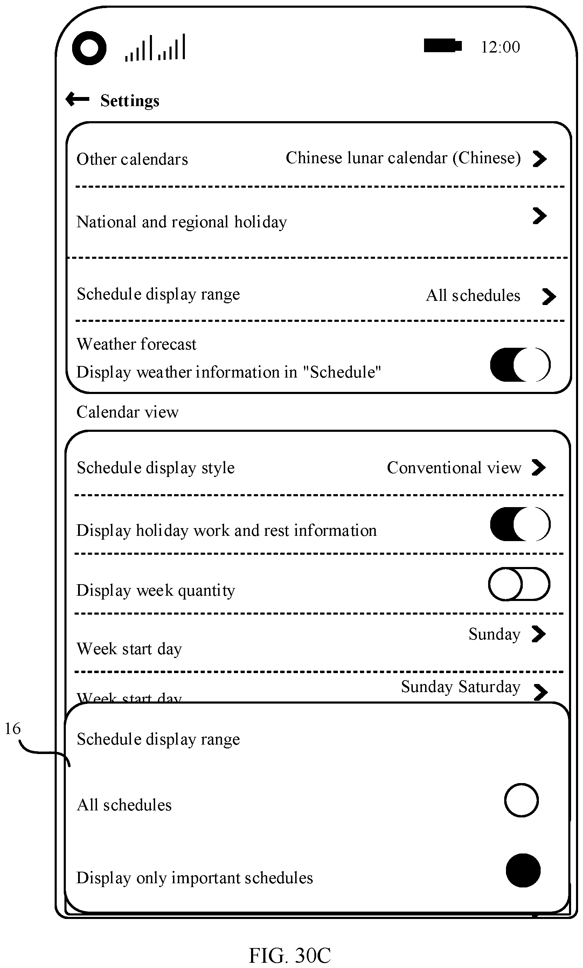

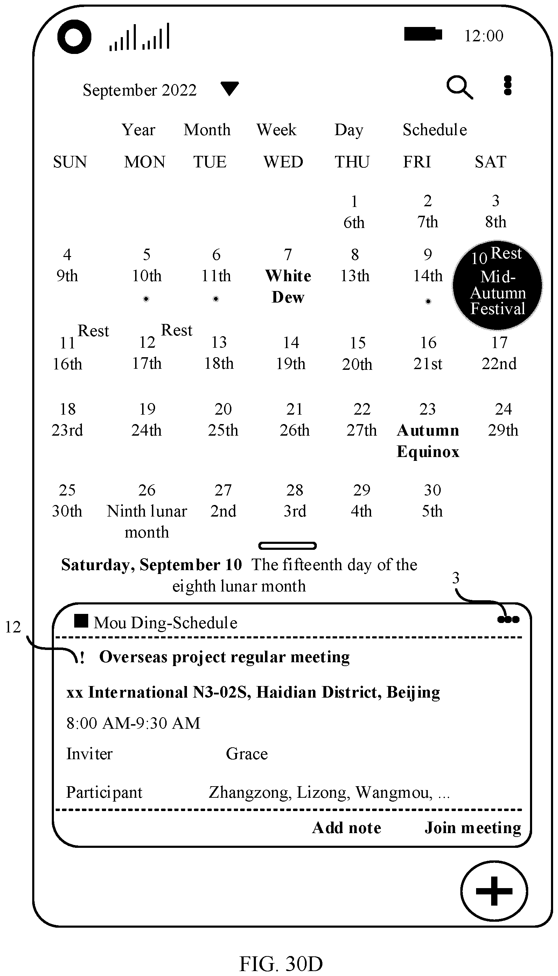

In an example of this application, the user may further set a schedule display range in a monthly view, a schedule view, or the like. Referring to FIG. 30A, the mobile phone may display a monthly view. The monthly view may display schedule information of all schedules in a current day. In this case, if the user needs to set a schedule display range, the user may perform operations shown in FIG. 4A and FIG. 4B, so that the mobile phone displays a setting interface shown in FIG. 30B. When the setting interface is displayed, the setting interface includes a "Schedule display range" option. The user may tap the "Schedule display range" option, and in response to the tap operation on the "Schedule display range" option, referring to FIG. 30C, a schedule display range pop-up window 16 is displayed at a bottom of the setting interface. The schedule display range pop-up window 16 displays an "All schedules" option and a "Display only important schedules" option. When the "All schedules" option is triggered, all schedules may be displayed in a monthly view, a schedule view, and a home screen card; or when the "Only important schedules" option is triggered, only important schedules are displayed in a monthly view, a schedule view, and a home screen card. In addition, a triggered option in the schedule display range setting pop-up window is highlighted. In FIG. 30C, an example in which the "Important schedule" option is triggered is used for description, and the triggered option is displayed in the "Schedule display range" option in the setting interface. Then, after the mobile phone displays a monthly view, referring to FIG. 30D, the mobile phone may display an important schedule in the monthly view.

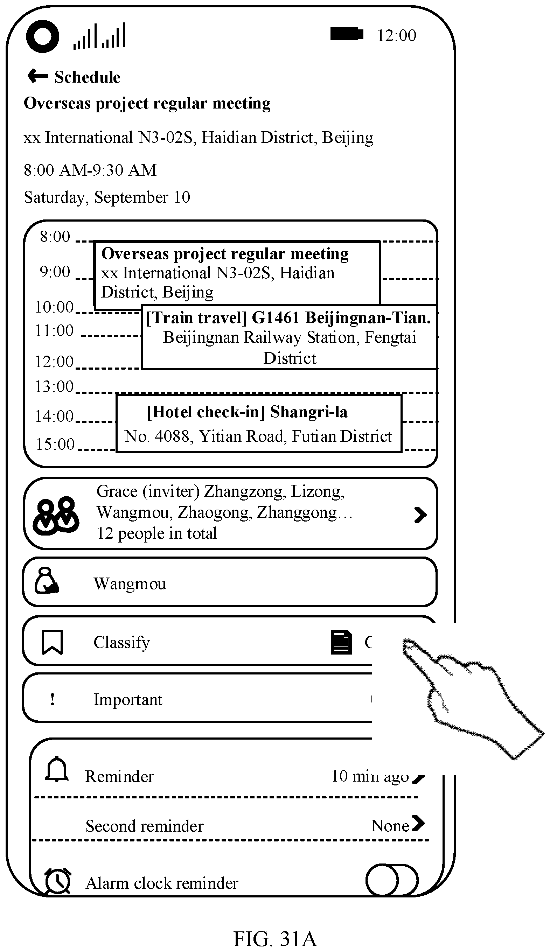

In an example of this application, the user may further classify a first schedule. The first schedule may be a third-party access schedule. When the first schedule accesses the calendar application, the mobile phone may determine a classification of the first schedule based on an access source of the first schedule, or a classification of the first schedule has been determined in a third-party application. However, the user may feel that the classification is inappropriate, and in this case, the user may reclassify the first schedule. Alternatively, the first schedule is not a schedule accessed by a third party, but is a schedule created by the user in the calendar application. However, the first schedule is not classified in a creation process or a classification is inaccurate in the creation process. In this case, the user may also classify the first schedule. When the user needs to classify the first schedule, the user may tap a view in which the first schedule is located, and the mobile phone may display, in response to the tap operation on the view in which the first schedule is located, a schedule detail interface of the first schedule shown in FIG. 31A.

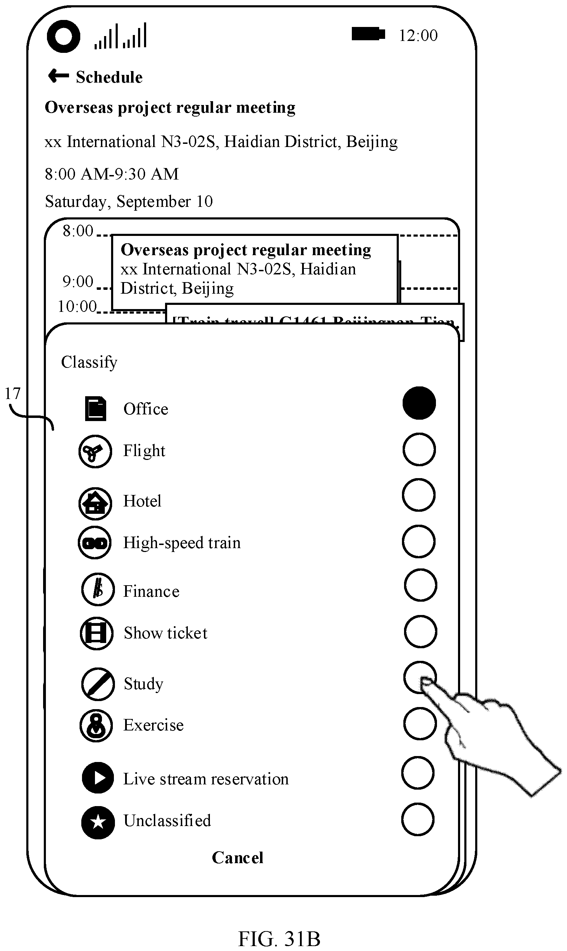

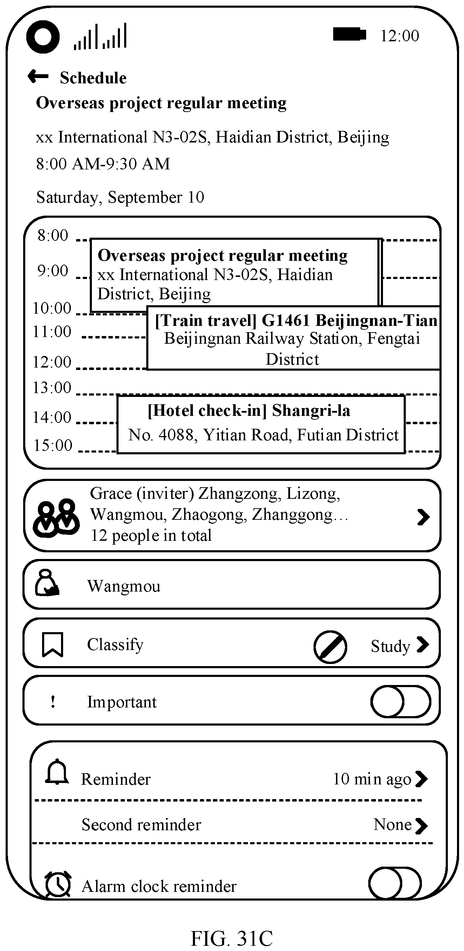

Referring to FIG. 31A, when the mobile phone displays the schedule detail interface of the first schedule, the schedule detail interface may display a "Classify" option, and the "Classify" option displays a schedule type of the first schedule. The user may tap the "Classify" option, and in response to the tap operation on the "Classify" option, referring to FIG. 31B, the mobile phone may display a classification interface 17 from a bottom of the schedule detail interface. The classification interface 17 includes a classification list and a "Cancel" option, and the classification list includes various schedule types, for example, the classification list includes types such as "office", "flight", "hotel", "high-speed train", "finance", "show ticket", "study", "exercise", "live stream reservation", and "unclassified". Each schedule type corresponds to a select option, and a select option corresponding to a type to which the first schedule currently belongs can be highlighted. In the figure in this embodiment of this application, the select option corresponding to the schedule type is blacked for display to indicate highlighting of the select option. The user may tap a select option of a schedule type that needs to be set. In response to the tap operation on the select option, the mobile phone no longer displays the classification interface, and displays a schedule detail interface shown in FIG. 31C. In the schedule detail interface, a schedule type displayed in a "Classify" option of the first schedule is changed to the schedule type corresponding to the select option. For example, in this embodiment of this application, the schedule type is set from "office" to "study". In addition, for the "Cancel" option displayed in the classification interface 17, when the "Cancel" option is triggered, the mobile phone cancels the current classification operation on the first schedule, no longer displays the classification interface 17, and returns to the interface shown in FIG. 31A.

It should be noted that, when there is a relatively large quantity of schedule types and the classification interface cannot display all schedule types, the classification interface can be slid. A sliding identifier may be set in the classification interface, and a location of the "Cancel" option remains unchanged in a sliding process.

In addition, a plurality of types may alternatively be set for one schedule. In this case, after the user taps a select option corresponding to one schedule type in the classification interface, the mobile phone does not cancel display of the classification interface. The user may tap select options of a plurality of schedule types in the classification interface, and then perform a gesture operation on the classification interface. In response to the gesture operation on the classification interface, the mobile phone no longer displays the classification interface, and in the schedule detail interface, the schedule type displayed in the "Classify" option of the first schedule is changed to the schedule types respectively corresponding to the plurality of select options. Alternatively, a "Confirm" option may be set in the classification interface. After tapping select options of a plurality of schedule types in the classification interface, the user may tap the "Confirm" option. In response to the tap operation on the "Confirm" option, the mobile phone no longer displays the classification interface, and in the schedule detail interface, the schedule type displayed in the "Classify" option of the first schedule is changed to the schedule types respectively corresponding to the plurality of select options.

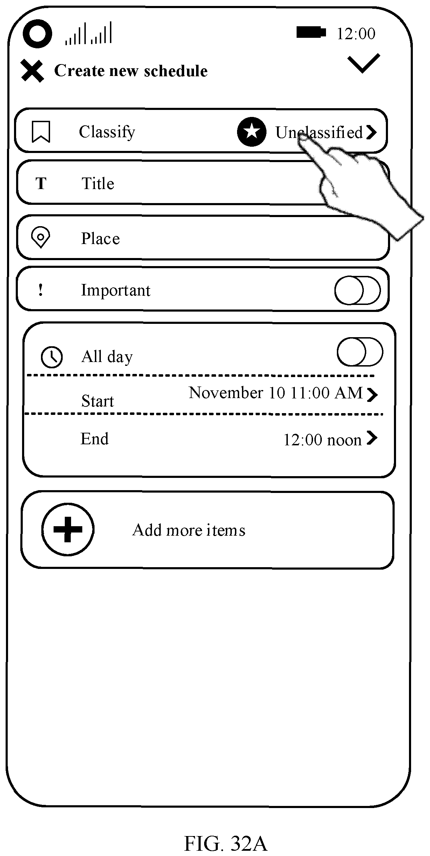

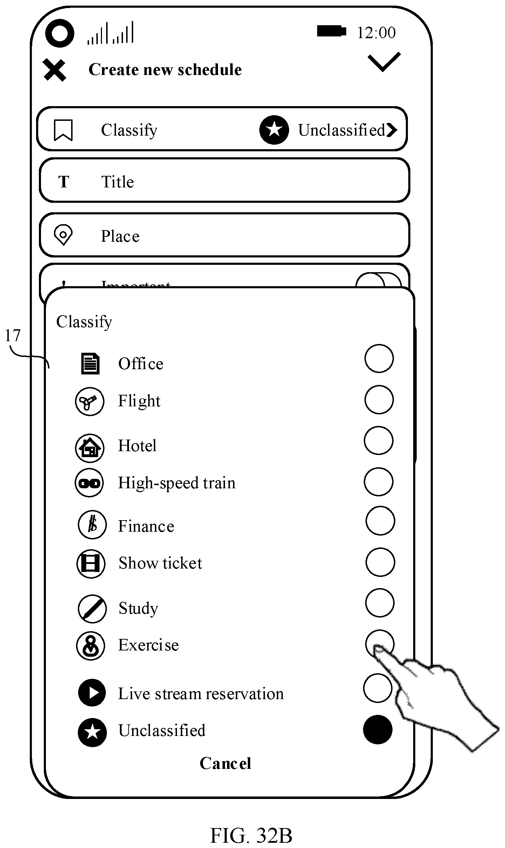

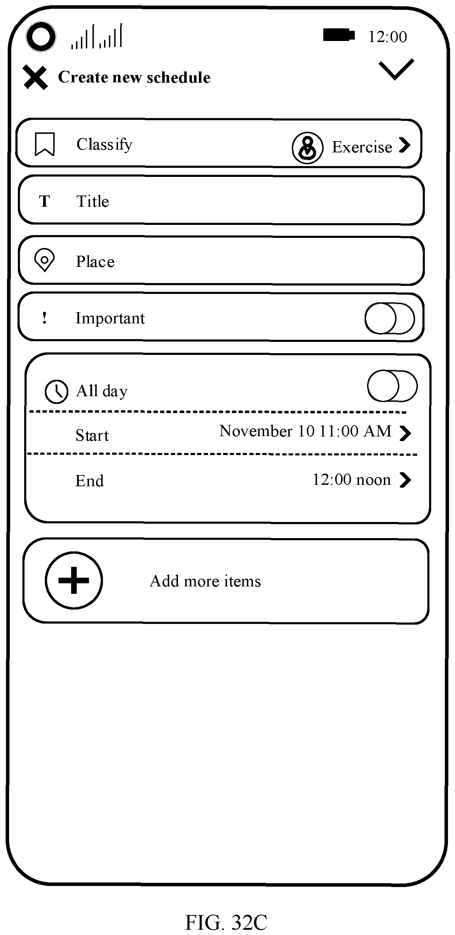

In an example of this application, in a process of creating a new schedule, the user may also set a schedule type of the newly created schedule, and the schedule type of the newly created schedule is "unclassified" by default before being set. When a new schedule creation interface shown in FIG. 32A is displayed, the new schedule creation interface includes a "Classify" option. The "Classify" option may display that the schedule type of the newly created schedule is "unclassified", and the user may tap the "Classify" option. In response to the tap operation on the "Classify" option, referring to FIG. 32B, the mobile phone may display the classification interface 17 at the bottom of the schedule detail interface, and the user may tap a select option corresponding to an exercise type displayed in the classification interface. In response to the tap operation on the select option corresponding to the exercise type, the mobile phone no longer displays the classification interface 17, and displays a new schedule creation interface shown in FIG. 32C. In the new schedule creation interface, a schedule type displayed in a "Classify" option of the newly created schedule is changed from "unclassified" to the exercise type.

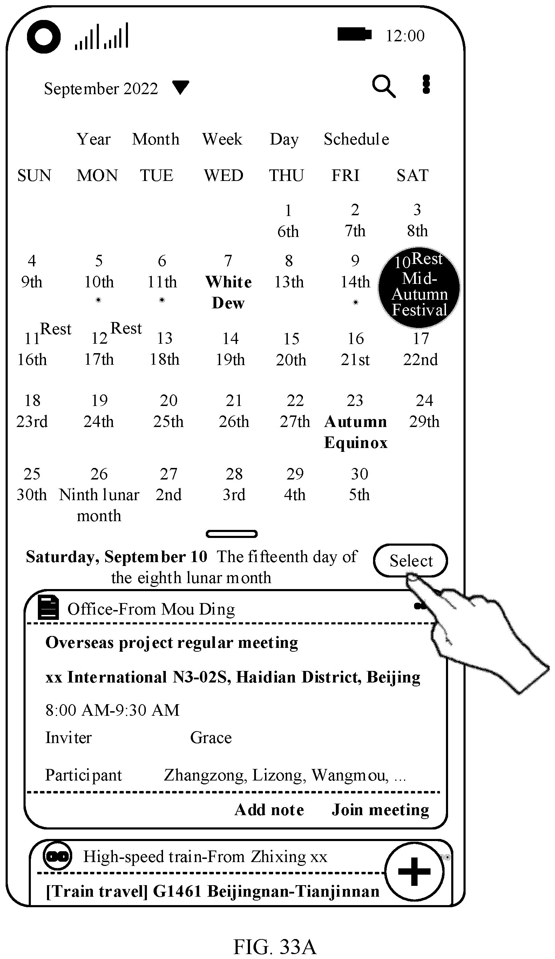

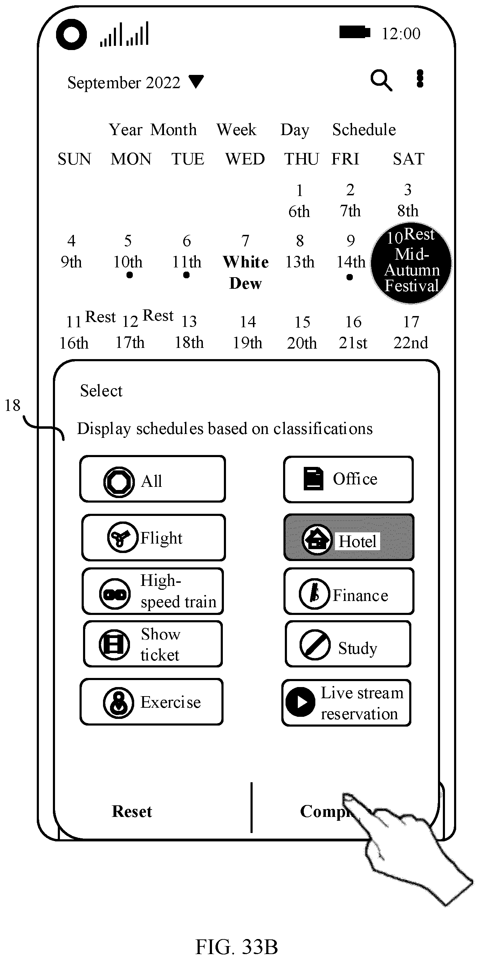

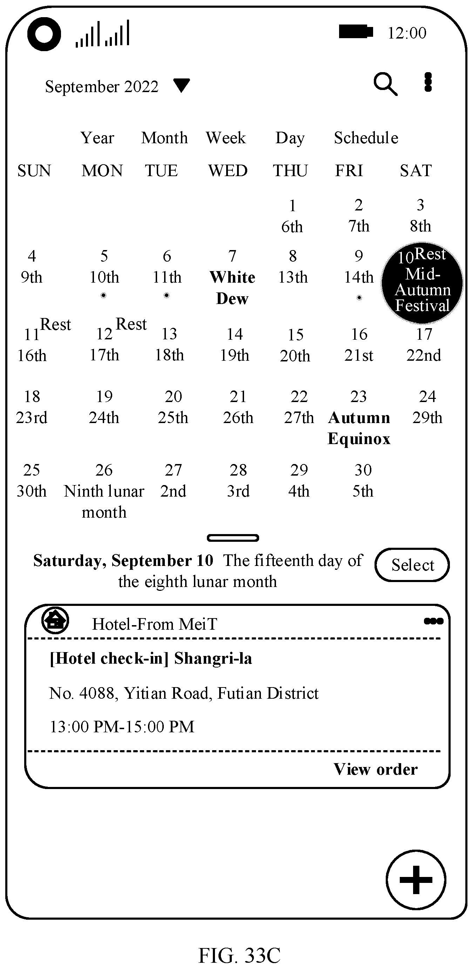

In an example of this application, the user may view schedule information of a same type of schedule based on a schedule type. Referring to FIG. 33A, when the mobile phone displays a monthly view, a select option is displayed in the monthly view. The user may tap the select option, and in response to the tap operation on the select option, referring to FIG. 33B, a selection interface 18 is displayed at a bottom of the monthly view. The selection interface 18 displays a plurality of type options, a "Reset" option, and a "Complete" option. The plurality of type options include an "All" option, an "Office" option, a "Flight" option, a "Hotel" option, a "High-speed train" option, a "Finance" option, a "Show ticket" option, a "Study" option, an "Exercise" option, and a "Live stream reservation" option, and the like. The user may tap, from the plurality of type options, a type that needs to be viewed. For example, the user taps the "Hotel" option, and in response to the tap operation on the "Hotel" option, referring to FIG. 33B, the mobile phone highlights the "Hotel" option. After completing the selection, the user may tap the "Complete" option, and in response to the tap operation on the "Complete" option, referring to FIG. 33C, the mobile phone no longer displays the selection interface 18, and displays, in a monthly view, schedule information of a schedule corresponding to the type option selected by the user. The schedule information of the schedule corresponding to the selected type option is sorted in an order of schedule start time from early to late. For the "Reset" option in the selection interface, when the "Reset" option is triggered, a type option selected by the user in the selection interface 18 is cleared.

It should be noted that, if a selected type does not have a corresponding schedule, the monthly view does not display the schedule corresponding to the type.

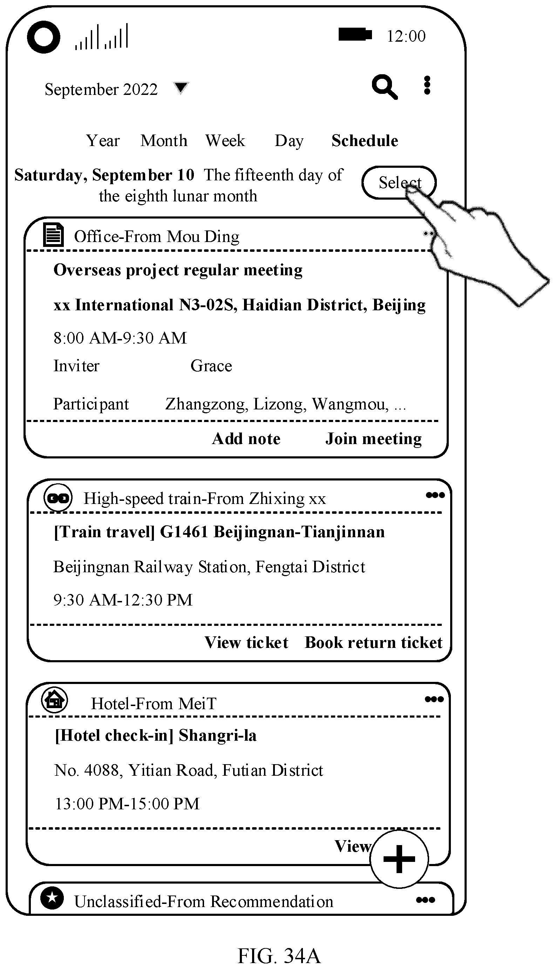

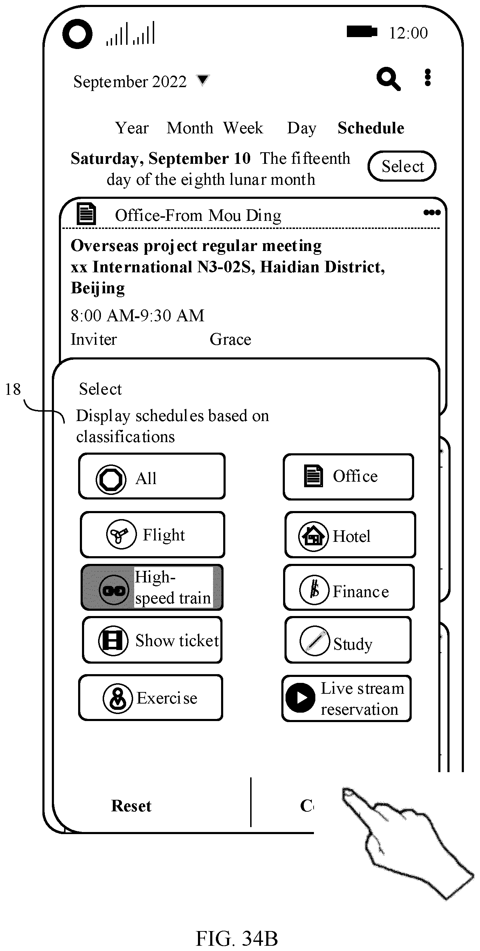

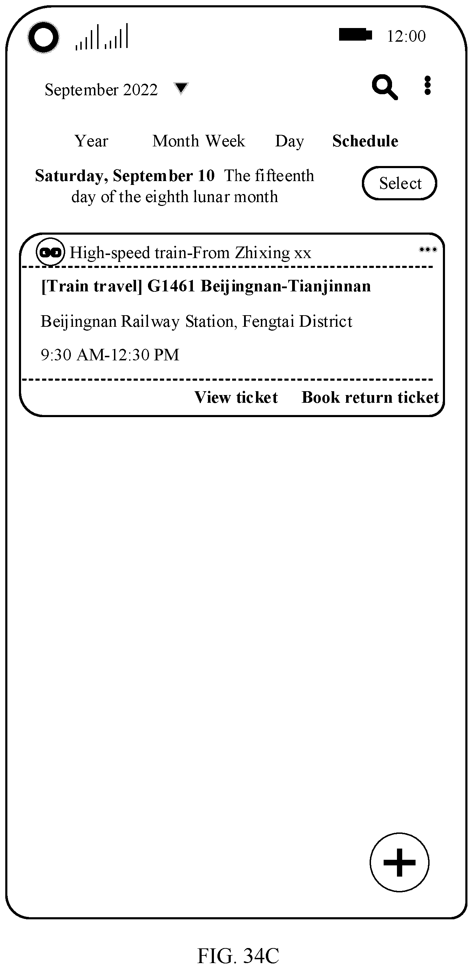

In an example of this application, referring to FIG. 34A, when the mobile phone displays a schedule view, a select option is displayed at a top of a displayed schedule. The user may tap the select option, and in response to the tap operation on the select option, referring to FIG. 34B, a selection interface 18 is displayed at a bottom of a monthly view. The selection interface 18 displays a plurality of type options, a "Reset" option, and a "Complete" option. The user taps, from the plurality of type options, a type that needs to be viewed. For example, the user taps a "High-speed train" option, and in response to the tap operation on the "High-speed train" option, referring to FIG. 34B, the mobile phone highlights the "High-speed train" option. After completing the selection, the user may tap the "Complete" option, and in response to the tap operation on the "Complete" option, referring to FIG. 34C, the mobile phone no longer displays the selection interface 18, and displays, in the schedule view, a schedule corresponding to the type selected by the user. The schedule corresponding to the selected type is sorted in an order of schedule start time from early to late.

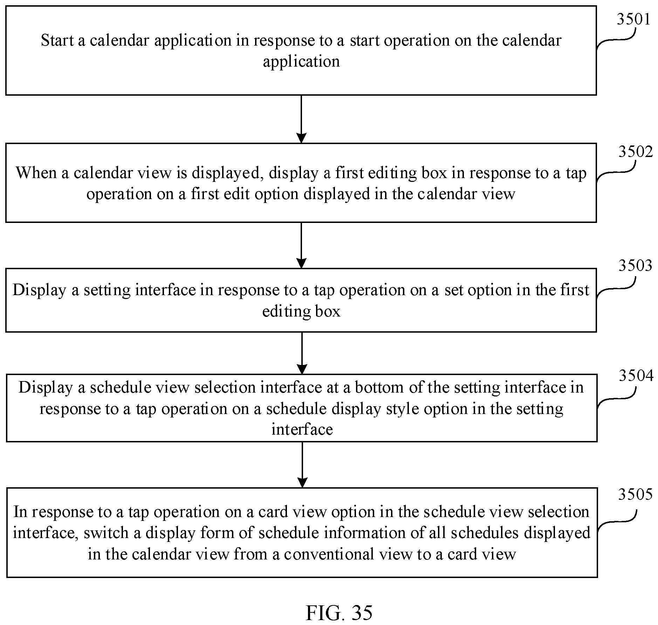

Based on the execution body and the application scenarios provided in the foregoing embodiments, the calendar view display method provided in the embodiments of this application is described in detail below. Referring to FIG. 35, FIG. 35 is a schematic flowchart of a calendar view display method according to an example. In FIG. 35, that schedule information of a schedule is switched from being displayed in a display form of a conventional view to being displayed in a display form of a card view is used as an example for description. As an example rather than a limitation, that the method is applied to a mobile phone in which a calendar application is installed is used as an example herein for description. The method may include some or all of the following content.

Step 3501: Start the calendar application in response to a start operation on the calendar application.

In an example, when a user wants to view or establish a schedule in a process of using the mobile phone, the user may tap an application identifier of the calendar application displayed on a home screen of the mobile phone, or tap a calendar card on the home screen or a leftmost home screen, to start the calendar application. In response to the start operation performed by the user on the calendar application, the mobile phone starts the calendar application.

It should be noted that, the application identifier is used to uniquely identify a corresponding application, and the application identifier may be at least one of an icon, a name, a version number, and the like.

Step 3502: When a calendar view is displayed, display a first editing box in response to a tap operation on a first edit option displayed in the calendar view.

Generally, after the calendar application is started, the calendar view of the calendar application may be displayed. It should be noted that, after being started, the calendar application may display any one of a yearly view, a monthly view, a weekly view, a daily view, and a schedule view, and the user may also switch a view through a sliding operation. Therefore, the calendar view may be any one of a yearly view, a monthly view, a weekly view, a daily view, and a schedule view.

The calendar view displays the first edit option. Therefore, when the mobile phone displays the calendar view, the user may tap the first edit option displayed in the calendar view. In response to the tap operation on the first edit option in the calendar view, the mobile phone may display the first editing box. The first editing box may include a "Jump to specified date" option, an "Account management" option, a "Subscription management" option, a "Print" option, and a "Set" option, as shown in FIG. 4B.

In an embodiment, when the "Set" option in the first editing box is triggered, the mobile phone may perform an operation in the following step 3503. For other options in the first editing box, different options may be triggered to implement different functions.

For example, when the "Jump to specified date" option is triggered, the mobile phone may display a date jumping selection interface. The user may select, in the date jumping selection interface, a date that needs to be jumped to. In response to the date that is selected by the user and that needs to be jumped to, the mobile phone may display a calendar and schedule information that correspond to the date selected by the user. When the "Subscription management" option is triggered, the mobile phone may display a subscription management interface, and the user may select, from the subscription management interface, a subscription service that the user wants to know, so that a third-party platform corresponding to the subscription service can push related content of the subscription service to the calendar view. When the "Print" option is triggered, a print preview interface may be displayed, and the user may perform a print-related operation on the calendar view in the print preview interface.

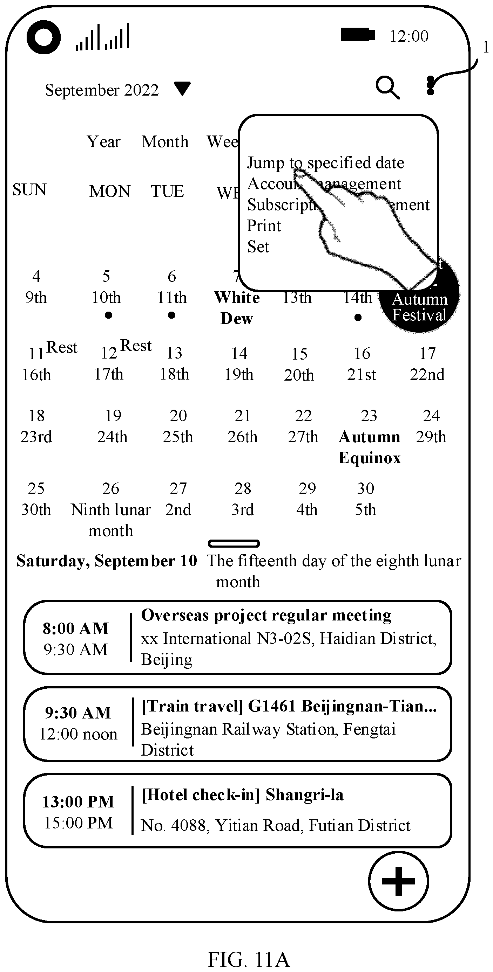

When the "Account management" option is triggered, the mobile phone may display an account management interface. The account management interface may display at least one level-1 account. A level-1 account may also be referred to as a parent account. A plurality of sub-accounts may be correspondingly displayed in each level-1 account, and each level-1 account and each sub-account can be edited by the user. For example, for the account management interface, refer to the foregoing scenario shown in FIG. 11A and FIG. 11B.

For example, referring to Table 1, a level-1 account may include a local calendar and an account of at least one third-party authorized application. For the local calendar, a corresponding sub-account in the local calendar may include "My calendar", "SMS message identification", "Recommendation", "Participant's birthday", "To-do note", and the like. Schedules in different sub-accounts have different sources. For example, a schedule in the sub-account "My calendar" may come from a local self-created calendar, a third-party inserted schedule, or an event in a note; a schedule in the sub-account "SMS message identification" comes from identification of an SMS message; a schedule in the sub-account "Recommendation" comes from a recommendation card; a schedule in the sub-account "Participant's birthday" may come from a participant application; and a schedule in the sub-account "To-do note" may come from a to-do list. For the account of the at least one third-party authorized application, a sub-account of any third-party authorized application may be a sub-account synchronized from an account of the third-party authorized application, and a schedule in each sub-account comes from a schedule obtained by the sub-account from the third-party authorized application.

**Table 1**

| Level-1 account (parent account) | Sub-account | Schedule source |
|---|---|---|
| Local calendar | My calendar | Local self-created calendar |
| | | Third-party inserted schedule/event in a note |
| | SMS message identification | Identification of an SMS message |
| | Recommendation | Recommendation card |
| | Participant's birthday | Participant application |
| | To-do note | To-do list |
| Account of an authorized application | Synchronized sub-account | Thirty party authorized to access a calendar |

It should be noted that, the level-1 account, the sub-account corresponding to the level-1 account, and the schedule source of each sub-account in the foregoing Table 1 are all examples for description, and constitute no limitation on this embodiment of this application.

In some embodiments, the mobile phone has a recommendation function, and can perceive, by using the recommendation function, a current scenario in which the user is located, to provide a corresponding service for the user. For example, in a flight travel scenario, the recommendation function can obtain a travel behavior and a flight intention of the user, proactively push information, such as flight ticket issuing, check-in, and boarding, to the user at appropriate time and place. When a corresponding service is pushed to the user, a recommendation card displayed on the home screen of the mobile phone may be used for implementation. The recommendation card is a control that is displayed on the home screen or the leftmost home screen of the mobile phone and that provides a reminder service and a recommendation service for the user. The recommendation card may display information about a service provided to the user by the recommendation function. In addition, the recommendation card can obtain content of an SMS message from an SMS message application of the mobile phone and display the content of the SMS message. When the recommendation function is accessed to the calendar application, the content of the SMS message may be obtained by using the recommendation card, and some content of the SMS message is related to a schedule of the user. Therefore, the mobile phone may identify whether a preset key field exists in content of an SMS message pushed by any recommendation card, and when the preset key field exists, create a corresponding schedule in the calendar application based on a schedule format corresponding to the preset key field.

It should be noted that, the preset key field includes a hotel, an air ticket, a train ticket, a credit card, a loan repayment, a movie ticket, and the like. Different key fields correspond to different schedule formats. The schedule format includes formats of items such as a schedule title, a place, start time, end time, first reminder time, and schedule description.

**Table 2**

| Scenario | Schedule title format | Place | Start time | End time | First reminder time | Schedule description |
|---|---|---|---|---|---|---|
| Hotel | [Hotel check-in]+hotel name | Hotel address | Hotel check-in time | End time of hotel stay | 9:00 AM the previous day | Original content of an SMS message |
| Air ticket | [Air travel]+flight+flight number | Airport terminal at a place of departure and airport terminal at a destination | Departure time | Arrival time | 9:00 AM the previous day | Original content of an SMS message |
| Train ticket | [Train travel]+train ticket number+place of departure+destination | Place of departure | Departure time | Arrival time | 9:00 AM the previous day | Original content of an SMS message |
| Credit card/ loan repayment | [Credit card repayment] bank+card number/[loan repayment] bank+card number | None | All day | All day | A week before the repayment date/9:00 AM on the repayment date | Original content of an SMS message |
| Movie ticket | [Movie viewing reminder] movie name | Movie viewing address | Movie start time | Movie end time | 9:00 AM the previous day | Original content of an SMS message |

For example, referring to Table 2, when a hotel is identified from content of an SMS message pushed by a recommendation card, the schedule may be a hotel check-in schedule. The schedule title format in the schedule format is "[hotel check-in]+hotel name". The address is a hotel address. The start time is time when hotel check-in is identified, and if there is no hotel check-in time, the hotel check-in time is displayed based on first default time, for example, the first default time is 2:00 PM of the day of check-in. The end time is time determined by the hotel check-in time and hotel stay duration, and if there is no end time, the end time is displayed based on second default time, for example, the second default time is time corresponding to the check-in time+24 hours. The first reminder time is required to be specified time. For example, the first reminder time may be 9:00 AM the previous day. The schedule description is original content of the SMS message.

Referring to Table 2, when an air ticket is identified from content of an SMS message pushed by a recommendation card, the schedule may be an air travel schedule. The schedule title format in the schedule format is "[air travel]+flight+flight number". When there is no flight information, the flight information may not be displayed. The address is an airport terminal at a place of departure and an airport terminal at a destination. The start time is departure time, and the end time is arrival time. If there is no arrival time, the end time is displayed based on third default time, for example, the third default time is time corresponding to the start time+2 hours. The first reminder time is required to be specified time. For example, the first reminder time may be 9:00 AM the previous day. The schedule description is original content of the SMS message.

Referring to Table 2, when a train ticket is identified from content of an SMS message pushed by a recommendation card, the schedule may be a train travel schedule. The schedule title format in the schedule format is "[Train travel]+train ticket number+place of departure+destination". The place of departure and the destination are optional, and when there is no place of departure and destination in the SMS message, the place of departure and the destination may not be displayed. The address the place of departure, the start time is departure time, and the end time is arrival time. If there is no arrival time, the end time is displayed based on fourth default time, and the fourth default time is time corresponding to the start time+half an hour. The first reminder time is required to be specified time. For example, the first reminder time may be 9:00 AM the previous day. The schedule description is original content of the SMS message.

Referring to Table 2, when a credit card or a loan repayment is identified from content of an SMS message pushed by a recommendation card, the schedule may be a repayment schedule. If the key field is the credit card, the schedule title format in the schedule format is "[credit card repayment] bank+card number"; or if the key field is the loan repayment, the schedule title format in the schedule format is "[loan repayment] bank+card number". Repayment is not limited by an address, and repayment can be performed at any time on the repayment date. Therefore, regardless of the credit card and the loan repayment, address information is not displayed, and the start time and the end time are set as "all day". The first reminder time is required to be specified time. For example, the first reminder time may be a week before the repayment date or 9:00 AM on the repayment date. The schedule description is original content of the SMS message.

Referring to Table 2, when a movie ticket is identified from content of an SMS message pushed by a recommendation card, the schedule may be a movie viewing schedule. The schedule title format in the schedule format is "[movie viewing reminder] movie name", the address is a movie viewing address, the start time is movie starting time, and the end time is movie end time. The first reminder time is required to be specified time. For example, the first reminder time may be 9:00 AM the previous day. The schedule description is original content of the SMS message.

It should be noted that, the key fields and the schedule format of each key field in the foregoing Table 2 are used as examples for description, and constitute no limitation in this embodiment of this application.

Step 3503: Display a setting interface in response to a tap operation on the "Set" option in the first editing box.

It should be noted that, the setting interface may display a calendar option, a national and regional holiday option, a weather forecast option, a plurality of calendar view-related options, a plurality of reminder-related options, and the like. The plurality of calendar view-related options include a schedule display style option, a display holiday work and rest information option, a display week quantity option, a week start day option, a weekend option, and a lock time zone option, and the plurality of reminder-related options include a notification option, a default reminder time option, and the like.

In some embodiments, when the schedule display style option is triggered, the mobile phone may perform an operation in the following step 3404. For other options in the setting interface, different options may be triggered to implement different functions.

For example, when the national and regional holiday option is triggered, the mobile phone may display a selection interface for the user to select a holiday in a national and regional in which the user is located. When the weather forecast option is disabled, the mobile phone does not display a weather forecast in the calendar view; and when the weather forecast option is enabled, the mobile phone displays the weather forecast in the calendar view. When the display holiday work and rest information option is disabled, the mobile phone does not display holiday work and rest information in the calendar view; and when the display holiday work and rest information option is enabled, the mobile phone displays holiday work and rest information in the calendar view. When the week quantity option is disabled, the mobile phone does not display a week quantity in the calendar view; and when the week quantity option is enabled, the mobile phone displays the week quantity in the calendar view. When the week start day option is triggered, the mobile phone may display an interface for selecting a week start day, and the user may select a specific start day of a week in the interface. When the weekend option is triggered, the mobile phone may display a weekend selection interface, and the user may select a specific day as a weekend in the weekend selection interface. When the lock time zone option is enabled, schedule time and date are locked in a selected time zone, and when a time zone in which the mobile phone is located changes, the schedule time and date do not change with a change of the time zone. When the lock time zone option is disabled, the schedule time and date are unlocked from the selected time zone, and in this case, when the time zone in which the mobile phone is located changes, the schedule time and date change with a change of the time zone.

It should be noted that, in an information bar in which the lock time zone option is located, not only the lock time zone option may be displayed, but also description of the lock time zone option may be displayed. For example, "Lock the schedule time and date in the selected time zone. When your time zone changes, the time zone of the schedule does not change" may be displayed. In an information bar in which the weather forecast option is located, not only the weather forecast option may be displayed, but also description of the weather forecast option may be displayed. For example, "Display weather information in "Schedule"" may be displayed.

Step 3504: Display a schedule view selection interface in response to a tap operation on the schedule display style option in the setting interface.

It should be noted that, in a possible implementation, the schedule view selection interface may be displayed at a bottom of the setting interface. For a specific scenario, refer to FIG. 4A to FIG. 4F or FIG. 6A to FIG. 6F.

Step 3505: In response to a tap operation on a card view option in the schedule view selection interface, switch a display form of schedule information of all schedules displayed in the calendar view from a conventional view to a card view.

It should be noted that, a display area of the card view is greater than a display area of the conventional view, and an amount of information displayed in the card view is greater than an amount of information displayed in the conventional view.

In an example, the user triggers the tap operation on the card view option in the setting interface. Therefore, in response to the tap operation on the card view option in the schedule view selection interface, the mobile phone may highlight the card view option in the schedule view selection interface, and after returning to display of a schedule view, schedule information of all schedules in the calendar view is displayed in a form of the card view. For example, for the process, refer to the operation in FIG. 4A to FIG. 4F or FIG. 6A to FIG. 6F.

In some embodiments, the user may not only switch a display form of schedule information of all schedules between a conventional view and a card view by using the foregoing step, but also may switch the display form in another manner. For example, a style switching option may be set in the calendar view, and the user may tap the style switching option. When the schedule information of all the schedules is displayed in the conventional view, the mobile phone switches the display form of the schedule information of all the schedules from the conventional view to the card view in response to the tap operation on the style switching option; and when the display form of the schedule information of all the schedules is the card view, the mobile phone switches the display form of the schedule information of all the schedules from the card view to the conventional view in response to the tap operation on the style switching option. For example, for the switching process, refer to the foregoing application scenario shown in FIG. 7A and FIG. 7B.

It should be noted that, an option shape of the style switching option corresponds to a display form of schedule information. When the schedule information is displayed in a form of a conventional view, the option shape of the style switching option is a list shape; and when the schedule information is displayed in a form of a card view, the option shape of the style switching option is a card shape. This is not specifically limited in this embodiment of this application.

In some embodiments, the user may switch a display form of schedule information at any time in a process of using the calendar application. Certainly, the user may alternatively select the display form of the schedule information when the calendar application is started for the first time after being downloading or when the calendar application is started for the first time after a version of the calendar application is updated.

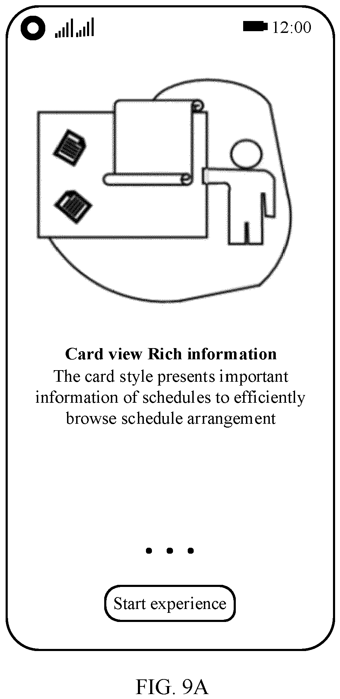

For example, when the calendar application is started for the first time after being downloading or when the calendar application is started for the first time after the version of the calendar application is updated, the mobile phone may display a calendar screen opening guidance interface. The calendar screen opening guidance interface is used to guide the user to select a display form of schedule information, and the calendar screen opening guidance interface displays an experience option. In response to a tap operation on the experience option, the mobile phone may display a first switching prompt pop-up window or a second switching prompt pop-up window at a bottom of the calendar screen opening guidance interface. The first switching prompt pop-up window is used to prompt the user whether to switch the schedule information from a conventional view to a card view. The second switching prompt pop-up window is used to prompt the user whether to switch the schedule information from the card view to the conventional view. For example, for the process of guiding, by using the calendar screen opening guidance interface, the user to select the display form of the schedule information, refer to the foregoing application scenario shown in FIG. 8A to FIG. 8C or FIG. 9A to FIG. 9C. The experience option may be displayed as "Start experience" shown in FIG. 8A or FIG. 9A.

In an embodiment, when the schedule information is displayed in a form of the conventional view by default, in response to the tap operation on the experience option, the mobile phone may display the first switching prompt pop-up window at a bottom displaying the calendar screen opening guidance interface. For example, for the process, refer to the foregoing application scenario shown in FIG. 10A to FIG. 10C. When the schedule information is displayed in a form of the card view by default, in response to the tap operation on the experience option, the mobile phone may display the second switching prompt pop-up window at the bottom displaying the calendar screen opening guidance interface.

In an embodiment, the mobile phone may not only guide the user to select the display form of the schedule information by using the calendar screen opening guidance interface, but also may prompt the user to select the display form of the schedule information in another case. For example, when the calendar view is displayed, a schedule detail interface is displayed in response to a tap operation on a view in which any schedule in the calendar view is located. The user may tap a return option in the schedule detail interface, and in response to the tap operation on the return option, the mobile phone displays the calendar view. If the schedule detail interface is displayed for the first time after the calendar application is downloaded, or is displayed for the first time after the version of the calendar application is updated, and the schedule information is displayed in a form of a conventional view by default, the mobile phone displays the first switching prompt pop-up window at a bottom of the calendar view after the calendar view is displayed. If the schedule detail interface is displayed for the first time after the calendar application is downloaded, or is displayed for the first time after the version of the calendar application is updated, and the schedule information is displayed in a form of a card view by default, the mobile phone displays the second switching prompt pop-up window at the bottom of the calendar view after the calendar view is displayed.

It should be noted that, a sliding identifier may be further displayed in the calendar screen opening guidance interface. The user may perform a sliding operation on the calendar screen opening guidance interface, and calendar screen opening guidance interfaces with different content are displayed in response to the sliding operation on the calendar screen opening guidance interface. Each calendar screen opening guidance interface displays an experience option, and the user may trigger the experience option in any calendar screen opening guidance interface.

In this embodiment of this application, in a process of using the calendar application, a user can switch a display form of schedule information at any time, thereby improving display richness of the schedule information and improving interaction with the user. In addition, a display form of schedule information may be switched from a conventional view to a card view, and a display area of the card view is relatively larger. Therefore, it is ensured that more detailed information of a schedule is displayed, and the user can learn more information without performing a tap operation on the displayed card view, thereby improving convenience and efficiency of viewing detailed information of a schedule by the user.

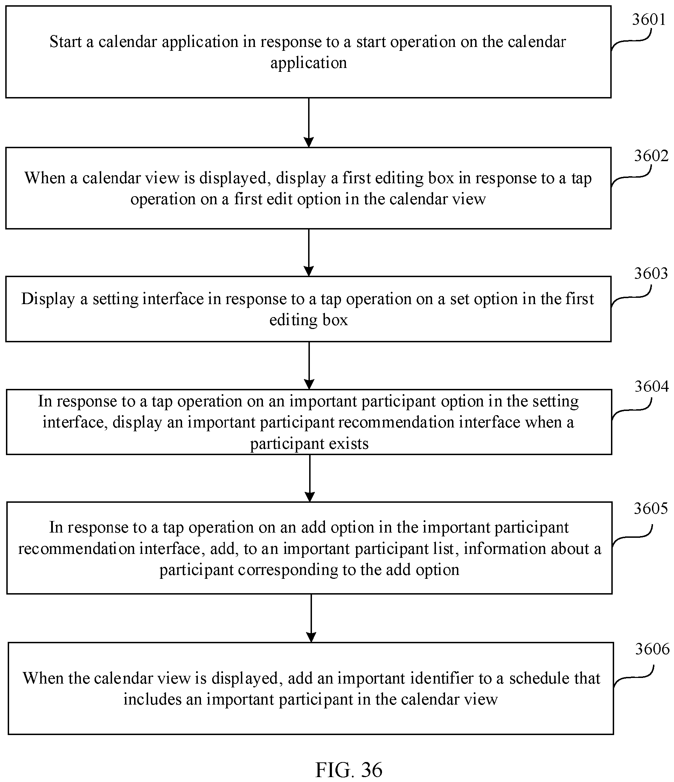

When a calendar application records a schedule, not only a display form of displaying detailed schedule information can be changed, but also an important schedule can be notified to a user. Referring to FIG. 36, FIG. 36 is a schematic flowchart of a calendar view display method according to an example. In FIG. 36, that an important identifier is set for schedule information of a schedule is used as an example for description. As an example rather than a limitation, that the method is applied to a mobile phone in which a calendar application is installed is used as an example herein for description. The method may include some or all of the following content.

Step 3601: Start the calendar application in response to a start operation on the calendar application.

Step 3602: When a calendar view is displayed, display a first editing box in response to a tap operation on a first edit option in the calendar view.

Step 3603: Display a setting interface in response to a tap operation on a set option in the first editing box.

It should be noted that, for the operations in step 3601-step 3603, refer to the operations in steps 3501-3503. Details are not described one by one again in this embodiment of this application.

Step 3604: In response to a tap operation on an important participant option in the setting interface, display an important participant recommendation interface when a participant exists.

It should be noted that the participant is a person who has participated in a schedule. The important participant recommendation interface includes a recommendation list, the recommendation list displays information about at least one participant, and an add option is displayed in an information bar that is in the recommendation list and that corresponds to information about each participant.

In an example, when a participant that a user wants to add as an important participant exists in the recommendation list, the user may tap an add option corresponding to the participant, and in response to the tap operation on the add option, the mobile phone may perform an operation in the following step 3605.

In some embodiments, the information about the at least one participant displayed in the recommendation list is information about a participant meeting a recommendation condition, and the recommendation condition may be that a quantity of times of participating in a user schedule is greater than or equal to a preset quantity of times. In addition, the recommendation list may display information about a maximum of participants whose quantity is a third quantity threshold. Therefore, when a quantity of participants meeting the recommendation condition is less than the third quantity threshold, a quantity of participants whose information is displayed may be less than the third quantity threshold.

It should be noted that, the preset quantity of times may be set in advance based on a requirement, for example, the preset quantity of times may be 5, 6, or 7. The third quantity threshold is also set in advance based on a requirement, for example, the third quantity threshold may be 5, 6, or 7. In this embodiment of this application and the accompanying drawings, that the third quantity threshold is 5 is used as an example for description.

In some embodiments, when a quantity of participants meeting the recommendation condition is less than or equal to the third quantity threshold, information about the participants meeting the recommendation condition may be directly displayed in the recommendation list. When a quantity of participants meeting the recommendation condition is greater than the third quantity threshold, information about participants that are randomly selected from the participants meeting the recommendation condition and whose quantity is the third quantity threshold is displayed in the recommendation list; or the participants meeting the recommendation condition are sorted in ascending order of quantities of times of participating in a user schedule, and information about participants whose quantity is sorted in the first third quantity threshold is displayed in the recommendation list.

In some embodiments, because a participant may not exist, in response to the tap operation on the important participant option in the setting interface, the mobile phone may display an important participant introduction interface. The important participant introduction interface displays introduction information of an important participant and an information jump option. The user may tap the information jump option, and in response to the tap operation on the information jump option, the mobile phone jumps from the important participant introduction interface to a gameplay tips interface. The gameplay tips interface is used to instruct the user to implement a related function of the mobile phone. For example, for the operation of displaying the important participant introduction interface by the mobile phone, refer to the foregoing application scenario shown in FIG. 21A and FIG. 21B.

In an example of this application, the mobile phone not only may display the important participant introduction interface when no participant exists to introduce a function related to an important participant to the user, but also may introduce, in another manner, the function related to the important participant to the user. For example, when the mobile phone displays the important participant recommendation interface, a function introduction option may be displayed in the important participant recommendation interface, and the user may tap the function introduction option. In response to the tap operation on the function introduction option, the mobile phone may display an important participant introduction pop-up window at a bottom of the important participant recommendation interface. The important participant introduction pop-up window displays introduction information of an important participant, an information jump option, and a confirm option. When the confirm option is triggered, the mobile phone no longer displays the important participant introduction pop-up window. The information jump option may be displayed as "Learn more", and the confirm option may be displayed as "OK". For example, for the process, refer to the foregoing application scenario in FIG. 23A and FIG. 23B.

Step 3605: In response to a tap operation on the add option in the important participant recommendation interface, add, to an important participant list, information about a participant corresponding to the add option.

It should be noted that, information about a participant that is displayed in the important participant list is information about an important participant, and an important identifier is set for a profile picture of each participant located in the important participant list. The important identifier may be at least one of a letter, a number, a pattern, and the like. Information about each participant newly added to the important participant list is pinned to a top of the important participant list for display.

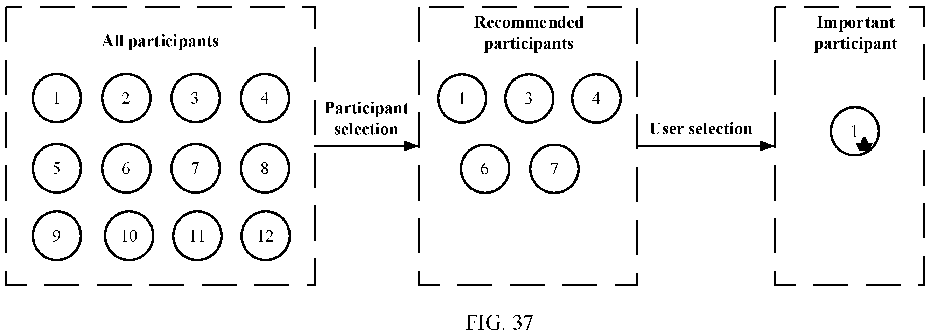

To facilitate understanding of a process of setting an important participant, referring to FIG. 37, an embodiment of this application provides a schematic diagram of selection of an important participant. In the schematic diagram, an example in which 12 participants exist, the mobile phone selects five recommended participants from the 12 participants, and the user manually selects a recommended participant from the five recommended participants as an important participant is used for description. This constitutes no limitation on this embodiment of this application.

In an example, in response to the tap operation on the add option in the important participant recommendation interface, after the information about the participant corresponding to the add option is added to the important participant list, the recommendation list may be refreshed. For example, for the process, refer to the application scenario shown in FIG. 15A and FIG. 15B.

In an example, the operation of refreshing the recommendation list by the mobile phone includes: deleting, from the recommendation list, information about a participant added to the important participant list; and/or re-obtaining a participant meeting the recommendation condition, and updating the recommendation list based on information about the participant meeting the recommendation condition.

In an example, the important participant list can display information about participants whose quantity is a second quantity threshold. When a quantity of participants whose information is in the important participant list is greater than the second quantity threshold, the information about the participant in the important participant list is displayed in a folding manner, to ensure that information about participants whose quantity is the second quantity threshold is displayed in the important participant list displayed in a current interface. For example, for the process, refer to the foregoing application scenario shown in FIG. 15A and FIG. 15B.

It should be noted that, the second quantity threshold may also be set in advance, for example, the second quantity threshold may be 5, 6, or 7.

In some embodiments, because a participant that a user wants to focus on may not exist in the recommendation list, an add another participant option may be further displayed in the important participant recommendation interface, and the user may tap the add another participant option. In response to the tap operation on the add another participant option, the mobile phone may display a participant selection interface. The participant selection interface displays a participant list, an add option, and a select all option. The user may select information about at least one participant from the participant list, and tap the add option after the selection. In response to the tap operation on the add option, the mobile phone adds information about the participant selected by the user to the important participant list. For example, for the process, refer to the foregoing application scenario shown in FIG. 16A to FIG. 16D.

It should be noted that, information about participants in the participant list does not include information about a participant recorded in the important participant list, and the information about the participants in the participant list is arranged in an initial letter order of the information about the participants.

Because the participant selection interface further includes the select all option, after the select all option is triggered, the mobile phone may select information about all participants in the participant list. If information about a participant selected by the user from the participant list includes information about a participant in the recommendation list, after adding, to the important participant list, the information about the participant selected by the user from the participant list, the mobile phone updates the recommendation list. After the recommendation list is updated, the information about the participant added to the important participant list is no longer displayed.

In an example of this application, the mobile phone not only may enter the important participant recommendation interface from the setting interface through a user operation, but also may further display the important participant recommendation interface in another manner. For example, when a monthly view is displayed, an addition prompt box may be displayed in the monthly view. The addition prompt box is used to prompt the user to add an important participant, and an add now option is disposed in the addition prompt box. The user may tap the add now option, and in response to the tap operation on the add now option, the mobile phone may display the important participant recommendation interface. For example, for the process, refer to the foregoing application scenario shown in FIG. 19A and FIG. 19B.

In some embodiments, an important participant set in the setting interface is an important participant set for all schedules in a calendar, and the user not only may set an important participant in the setting interface, but also may set, for any schedule, an important participant for the any schedule.

For example, when a schedule detail interface of a first schedule is displayed, the user may tap a participant setting option in the schedule detail interface. In response to the tap operation on the participant setting option, the mobile phone may display a participant editing box corresponding to the first schedule. The participant editing box may display an information bar of an inviter of the first schedule, another participant list, and a participant editing option. If the user wants to invite more participants, the user may tap the participant editing option. In response to the tap operation on the participant editing option, the participant editing box switches to an editable state. When the participant editing box is in the editable state, information about each participant may be selected by the user through a selection operation. After the user selects the information about the participant, an information box in which the information about the selected participant is located is highlighted. The user may tap an add option displayed in the participant editing box in the editable state. In response to the tap operation on the add option, an important identifier is set for a profile picture of the participant selected by the user, to indicate that the participant is set as an important participant. For example, for a process of adding an important participant to a target schedule, refer to the foregoing application scenario shown in FIG. 18A to FIG. 18F.

In an embodiment, when adding information about an important participant, the user may further remove the added information about the important participant. For example, when the important participant recommendation interface is displayed, the important participant list is displayed in the important participant recommendation interface, and a corresponding remove option is displayed in an information bar in which information about each important participant in the important participant list is located. The user may tap the remove option corresponding to information about an important participant that needs to be removed. In response to the tap operation on the remove option, the mobile phone may remove the information about the participant corresponding to the remove option from the current interface, and display, in the participant list, the information about the participant corresponding to the remove option.

In an embodiment, the mobile phone may further display a removal confirmation pop-up window in response to the tap operation on the remove option. The removal confirmation pop-up window is used to prompt the user whether to remove information about a selected important participant and consequences of removing the information about the important participant, and the removal confirmation pop-up window displays a cancel option and a remove option. The user taps the remove option when confirming to remove the information about the selected important participant; and the user may tap the cancel option when the user cancels removal of the information about the selected important participant. In response to the tap operation on the cancel option, the mobile phone no longer displays the removal confirmation pop-up window. For example, for the foregoing process, refer to the application scenario shown in FIG. 20A to FIG. 20C.

Step 3606: When the calendar view is displayed, add an important identifier to a schedule that includes an important participant in the calendar view.

To enable the user to quickly learn which schedule is an important schedule, when the calendar view is displayed, the mobile phone identifies whether a participant of each schedule displayed in the calendar view includes an important participant, and when identifying that a participant of the first schedule includes an important participant, adds an important identifier to a view in which schedule information of the first schedule is located. A schedule including the important identifier is determined as an important schedule.

In an example of this application, not only the mobile phone may set an important schedule based on whether a participant of a schedule includes an important participant, but also the user may manually set an important schedule. A schedule manually set by the user includes a schedule that does not include an important participant, and/or a schedule for which an important participant has not been set.

In an embodiment, when the calendar view is displayed, if schedule information of a schedule in the calendar view is displayed in a form of a conventional view, the user may touch and hold a view in which schedule information of a second schedule is located. The second schedule is any one of at least one schedule. In response to the touch and hold operation on the view in which the schedule information of the second schedule is located, the mobile phone displays a quick schedule preview interface. The quick schedule preview interface displays schedule information displayed in a card view and an editing bar, and the editing bar displays a "Mark as important" option, a "Share" option, an "Ignore" option, and a "Delete" option. The user may tap the "Mark as important" option, and in response to the tap operation on the "Mark as important" option, the mobile phone returns to the calendar view, and adds an important identifier to the second schedule, to mark the second schedule as an important schedule. For example, for the process, refer to the foregoing application scenario shown in FIG. 24A to FIG. 24C.

In an embodiment, when the calendar view is displayed, if schedule information of a schedule in the calendar view is displayed in a form of a card view, and a second edit option is displayed in a card view of each schedule, the user may tap the second edit option corresponding to the second schedule. In response to the tap operation on the second edit option, the mobile phone may display a second editing box of the card view in which the schedule information of the second schedule is located. The second editing box displays a "Mark as important" option, a "Share" option, an "Ignore" option, and a "Delete" option. The user may tap the "Mark as important" option, and in response to the tap operation on the "Mark as important" option, the mobile phone no longer displays the second editing box of the card view corresponding to the second schedule, and adds an important identifier to the second schedule, to mark the second schedule as an important schedule. For example, for the process, refer to the foregoing application scenario shown in FIG. 25A to FIG. 25C.

In an embodiment, when a schedule detail interface of the second schedule is displayed, an important option is displayed in the schedule detail interface, and the user may tap the important option. In response to the tap operation performed by the user on the important option, the mobile phone may highlight the important option, and then the user may trigger a return option. In response to the triggering operation on the return option, the mobile phone returns to the calendar view, and the important identifier is displayed in the second schedule marked as an important schedule in the calendar view. For example, for the foregoing process, refer to the foregoing application scenario shown in FIG. 26A to FIG. 26D.

In an embodiment, the user not only may set an existing common schedule as an important schedule, but also may directly set a newly created schedule as an important schedule in a process of creating a new schedule. For example, the user may tap a "Create new schedule" option displayed in the calendar view, and in response to the tap operation on the "Create new schedule" option, the mobile phone may display a new schedule creation interface. An important option is displayed in the new schedule creation interface, and the user may tap the important option. In response to the tap operation on the important option, the important option is highlighted, and a newly created schedule is determined as an important schedule. When the newly created schedule is displayed in the calendar view after the schedule is established, a view in which schedule information of the newly created schedule is located carries an important identifier. For example, for the process, refer to the foregoing application scenario shown in FIG. 27A to FIG. 27C.

In an embodiment, the user not only may set a common schedule (non-important schedule) as an important schedule, but also may set an important schedule as a common schedule. For example, when the mobile phone displays schedule information in a form of a card view, if the first schedule is an important schedule, the user may tap a second edit option displayed in the card view of the first schedule. In response to the tap operation on the second edit option, the mobile phone displays a corresponding second editing box. The second editing box displays a "Cancel important identifier" option, a "Share" option, an "Ignore" option, and a "Delete" option. The user may tap the "Cancel important identifier" option, and in response to the tap operation on the "Cancel important identifier" option, the mobile phone no longer displays the second editing box, and no longer displays the important identifier in the first schedule, to set the first schedule from the important schedule to a common schedule. For example, for the process, refer to the foregoing application scenario shown in FIG. 26A to FIG. 26D.

Because an important schedule carries an important identifier, the user may learn a specific important schedule by using the displayed important identifier. Certainly, to help the user quickly learn a specific important schedule, the mobile phone may further select the important schedules to display only the important schedule in the schedule view.

In an example of this application, when the mobile phone displays the setting interface, a schedule display range option is displayed in the setting interface, and the user may tap the schedule display range option. In response to the tap operation on the schedule display range option, a schedule display range pop-up window is displayed at a bottom of the setting interface. The schedule display range pop-up window displays an "All schedules" option and an "Only important schedules" option. When the "All schedules" option is triggered, all schedules may be displayed in the calendar view and a home screen card. When the "Only important schedules" option is triggered, only important schedules are displayed in the calendar view and home screen card. For example, for the process, refer to the foregoing application scenario shown in FIG. 30A to FIG. 30D.

In some embodiments, selection results between different calendar views are not interconnected, that is, a selection result in a monthly view is not interconnected to a selection result in a schedule view.

In this embodiment of this application, when an important participant can be set for any schedule, and a participant of the schedule includes the important participant, an important identifier can be displayed in a view that displays schedule information of the schedule, and the mobile phone can also select a schedule based on the important identifier to display the important schedule, thereby increasing a speed of searching for the important schedule by the user, and also improving interaction with the user and convenience of using the calendar application by the user.

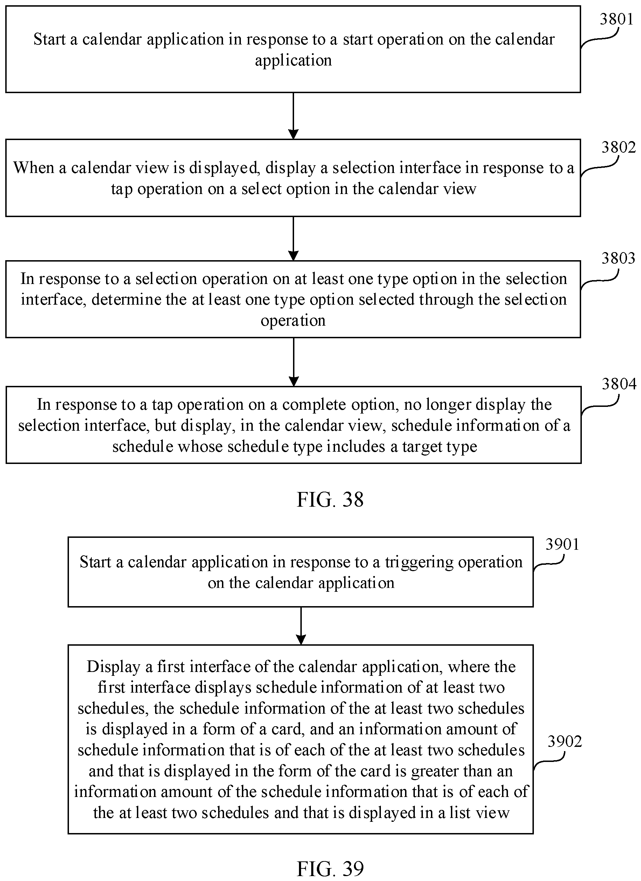

In the embodiments of this application, a mobile phone not only can select a schedule based on an important identifier, but also may select a schedule based on a schedule type of a schedule. Referring to FIG. 38, FIG. 38 is a schematic flowchart of a calendar view display method according to an example. As an example rather than a limitation, that the method is applied to a mobile phone in which a calendar application is installed is used as an example herein for description. The method may include some or all of the following content.

Step 3801: Start the calendar application in response to a start operation on the calendar application.

It should be noted that, for the operation in step 3801, refer to the operation in step 3501. Details are not described one by one again in this embodiment of this application.

Step 3802: When a calendar view is displayed, display a selection interface in response to a tap operation on a select option in the calendar view.

It should be noted that, the selection interface may be displayed, through covering, at a bottom of the calendar view, and the selection interface displays a plurality of type options, for example, may display an "All" option, an "Office" option, a "Flight" option, a "Hotel" option, a "High-speed train" option, a "Finance" option, a "Show ticket" option, a "Study" option, an "Exercise" option, and a "Live stream reservation" option.

In some embodiments, the displayed selection interface may further include a reset option. When the reset option is triggered, a type option selected by a user in the selection interface is cleared.

In some embodiments, the user may perform a sliding operation of sliding the calendar view upwards and downwards. During sliding of the calendar view, the select option presents a ceiling effect, that is, regardless of a currently displayed interface, the select option is always displayed in the currently displayed interface.

Step 3803: In response to a selection operation on at least one type option in the selection interface, determine the at least one type option selected through the selection operation.

To successfully select a schedule subsequently, the mobile phone needs to determine a type option selected by the user.

Step 3804: In response to a tap operation on a complete option, skip displaying the selection interface, and display, in the calendar view, schedule information of a schedule whose schedule type includes a target type.

It should be noted that, the target type is a type corresponding to any one of the at least one type option selected through the selection operation of the user.

In some embodiments, the user taps at least one type option from the plurality of type options, and after completing the selection, the user may tap the complete option in the selection interface. In response to the tap operation on the complete option, the mobile phone no longer displays the selection interface, and displays, in the calendar view, schedule information of a schedule whose schedule type includes the target type. For example, for the process, refer to the foregoing application scenario shown in FIG. 33A to FIG. 33C or FIG. 34A to FIG. 34C.

In some embodiments, because the user may select a plurality of type options, schedule information of a schedule corresponding to each of a plurality of types may be displayed in the calendar view. Therefore, to avoid a schedule confusion, the mobile phone may sort the displayed schedule information of the schedules in an order of schedule start time from early to late, and display the schedule information based on a sorting result.

In some embodiments, a schedule type may be set in a process of creating a new schedule. For example, when a new schedule creation interface is displayed, a classify option is displayed in the new schedule creation interface, the classify option may display the following: A schedule type of the newly created schedule is "unclassified". The user may tap the classify option, and in response to the tap operation on the classify option, the mobile phone may display a classification interface, and the user may tap a select option corresponding to a reference type displayed in the classification interface, where the reference type is any type displayed in the classification interface. In response to the tap operation on a select option corresponding to the reference type, the mobile phone no longer displays the classification interface, and displays the newly created schedule interface. In the new schedule creation interface, a schedule type displayed in a classify option of the newly created schedule is changed from "unclassified" to the reference type. For example, for the process, refer to the foregoing application scenario shown in FIG. 32A to FIG. 32C.

In some embodiments, the user not only can set a type of a newly created schedule in a process of creating the new schedule, but also can set or change a type of an existing schedule. For example, when a schedule detail interface of a first schedule is displayed, a classify option is displayed in the schedule detail interface, and the user taps the classify option. In response to the tap operation on the classify option, a classification interface is displayed. The classification interface includes a classification list and a cancel option, the classification list includes various schedule types, and each schedule type corresponds to a select option. For example, the classification list includes types such as "office", "flight", "hotel", "high-speed train", "finance", "show ticket", "study", "exercise", "live stream reservation", and "unclassified", and a select option corresponding to a type to which a schedule currently belongs can be highlighted. The user may tap a select option of a schedule type that needs to be set. In response to the tap operation on the select option, the mobile phone no longer displays the classification interface, and displays the schedule detail interface of the first schedule. In the schedule detail interface, a schedule type displayed in a classify option of the schedule is changed to the schedule type corresponding to the select option. For example, for the foregoing process, refer to the foregoing application scenario shown in FIG. 31A to FIG. 31C.

It should be noted that, when the cancel option is triggered, the mobile phone cancels the current classification operation on the schedule, and no longer displays the classification interface, to return to the schedule detail interface of the first schedule.

In this embodiment of this application, displayed schedule information of a schedule can be selected based on a schedule type of a schedule, which helps the user quickly find a specific type of schedule that the user wants to view, thereby improving efficiency of viewing a schedule by the user and improving interaction with the user.

Referring to FIG. 39, FIG. 39 is a schematic flowchart of a calendar view display method according to an example. As an example rather than a limitation, that the method is applied to an electronic device in which a calendar application is installed is used as an example herein for description. The method may include some or all of the following content.

Step 3901: Start the calendar application in response to a triggering operation on the calendar application.

In an example, when a user wants to view or establish a schedule in a process of using the electronic device, the user may tap an application identifier of the calendar application displayed on a home screen of the electronic device, or tap a calendar card on the home screen or a leftmost home screen, to start the calendar application. In response to the start operation performed by the user on the calendar application, the electronic device starts the calendar application.

It should be noted that, the application identifier is used to uniquely identify a corresponding application, and the application identifier may be at least one of an icon, a name, a version number, and the like.

Step 3902: Display a first interface of the calendar application, where the first interface displays schedule information of at least two schedules, the schedule information of the at least two schedules is displayed in a form of a card, and for schedule information of each of the at least two schedules, an amount of information displayed in the form of the card is greater than an amount of information displayed in a list view.

For example, for an application scenario in which schedule information of at least two schedules is displayed in a form of a card, refer to the foregoing application scenario shown in FIG. 4F, FIG. 5A to FIG. 5G, FIG. 6F, FIG. 7B, FIG. 12A and FIG. 12B, FIG. 21A and FIG. 21B, FIG. 25A to FIG. 25C, FIG. 26A or FIG. 26D, FIG. 27A to FIG. 27C, FIG. 33A or FIG. 33C, or FIG. 34A to FIG. 34C.

It should be noted that, the display form of the list view may be the display form of the conventional view described in the foregoing embodiment, and the form of the card may be the display form of the card view described in the foregoing embodiment. The first interface may be a first calendar view in the foregoing embodiment, or certainly may be another interface. This is not specifically limited in this embodiment of this application.

In some embodiments, the card displays basic information and target information that are of a corresponding schedule, the target information is information that cannot be displayed in the list view, and the target information includes one or more of a schedule source, a schedule classification, a schedule inviter, and a schedule participant. The basic information may include a schedule title, time, and address.

It should be noted that, the information that cannot be displayed in the list view can be displayed by using the card, so that when information about a schedule is displayed in a form of the card, a user can learn more information about the schedule to reduce operations of viewing information by the user, thereby improving information display efficiency and efficiency of viewing information by the user.

In some embodiments, a title region, a first operation region, an information display region, and a second operation region are disposed in the card. The title region is used to display the schedule source, the first operation region is used to display an edit option for performing an editing operation on schedule information in the card, the information display region is used to display basic information and target information that are of a corresponding schedule, and the second operation region is used to display a dedicated operation option for schedule information displayed in the card.

It should be noted that, different content can be displayed in different regions in the card, so that richness and beauty of information display are ensured, and convenience of information identification by a user is ensured.

In some embodiments, a hot card region is disposed in the card, a third-party interface can be displayed after information displayed in the hot card region is triggered, and the third-party interface is another interface different from the first interface in the calendar application, or the third-party interface is an interface of a third-party application. To be specific, the user may trigger the information displayed in the hot card region, and in response to the triggering operation performed by the user on the information displayed in the hot card region, the electronic device may perform connection jump, or pop up a dialog box or the like, to display the third-party interface.

For example, referring to FIG. 5A, the hot card region may be disposed at a display location of a schedule address, a location at which an operation option is located, a display location of a schedule title, and the like. When the address is triggered, the electronic device may display an application interface of a map application; and when the title is triggered, the electronic device may display an account management interface in the calendar application.

It should be noted that, the third-party interface can be displayed after the information in the hot card region is triggered, thereby improving display richness and interaction richness.

After starting the calendar application, the electronic device may not directly display the first interface, but first display another interface. Then, after the user performs some operations based on a requirement on the calendar application, the electronic device displays the first interface. A manner in which the electronic device displays the first interface includes at least the following several manners.

In a possible implementation, the operation of displaying, by the electronic device, the first interface of the calendar application includes: displaying a second interface of the calendar application, where the second interface displays schedule information of at least two schedules that is displayed in a form of a list view; and switching a display form of the schedule information of the at least two schedules from the list view to the form of the card in response to a triggering operation on a style switching option in the second interface, to display the first interface. For example, for the process, refer to the foregoing application scenario shown in FIG. 7A and FIG. 7B.

When schedule information of a schedule is displayed in the form of the card, rich content can be displayed. However, a person with a relatively low schedule requirement may be more accustomed to using a list view display manner. Therefore, the electronic device may also provide a display form of the list view, and when a user has a requirement, the user may switch the display form of the list view to the display form of the card through some operations.

It should be noted that, the second interface may be a second calendar view in the foregoing embodiment, or certainly may be another interface. This is not specifically limited in this embodiment of this application. The triggering operation on the style switching option may be a tap operation, a double-tap operation, a touch and hold operation, or the like.

It should be noted that, switching between the second interface and the first interface can be implemented by using the style switching option in the second interface, thereby improving interface switching efficiency.

In another possible implementation, the electronic device displays a second interface of the calendar application, where the second interface displays schedule information of at least two schedules that is displayed in a form of a list view; displays a first editing box in response to a triggering operation on a first edit option in the second interface; and displays a setting interface in response to a triggering operation on a set option in the first editing box; and displays the first interface in response to a setting operation in the setting interface.

It should be noted that, a display form of schedule information may be set in the setting interface, so that not only a schedule information display manner is switched, but also richness of setting the schedule information display form is increased.

In an example, the operation of displaying, by the electronic device, the first interface in response to the setting operation in the setting interface includes: displaying a schedule view selection interface in response to a triggering operation on a schedule display style option in the setting interface; switching a display form of the schedule information of the at least two schedules from the list view to the form of the card in response to a triggering operation on a card view option in the schedule view selection interface; and displaying the first interface is displayed in response to a triggering operation on a return option in the setting interface. For example, for the process, refer to the foregoing application scenario shown in FIG. 4A to FIG. 4F or FIG. 6A to FIG. 6F.

It should be noted that, the triggering operation on the schedule display style option may be a tap operation, a double-tap operation, a touch and hold operation, or the like. The triggering operation on the card view option may also be a tap operation, a double-tap operation, a touch and hold operation, or the like. The triggering operation on the return option in the setting interface may also be a tap operation, a double-tap operation, a touch and hold operation, or the like.

It should be noted that, the schedule view selection interface is displayed in the setting interface, so that interface display richness and interaction richness are increased.

In an example, the operation of displaying, by the electronic device, the first interface in response to the setting operation in the setting interface not only may include the foregoing manner, but also may include another manner. For example, a card view option and a list view option are displayed in the setting interface of the electronic device. The user may tap the card view option, and in response to the tap operation performed by the user on the card view option in the setting interface, the display form of the schedule information of the at least two schedules is switched from the list view to the form of the card; and the first interface is displayed in response to a triggering operation on a return option in the setting interface.

In another possible implementation, the operation of displaying, by the electronic device, the first interface of the calendar application includes: If the calendar application is started for the first time after being downloaded or the calendar application is started for the first time after version update, and schedule information of at least two schedules is displayed in a form of a list view by default, the electronic device displays a first switching prompt pop-up window in the calendar application, where the first switching prompt pop-up window is used to prompt the user to switch a display form of the schedule to a form of a card; and the electronic device displays the first interface in response to a triggering operation on a switch to card view option in the first switching prompt pop-up window.

It should be noted that, the electronic device may directly display the first switching prompt pop-up window, or may display the first switching prompt pop-up window in the manner in the foregoing application scenario shown in FIG. 8A to FIG. 8C. This is not specifically limited in this embodiment of this application. In addition, the triggering operation on the switch to card view option may be a tap operation, a double-tap operation, a touch and hold operation, or the like.

In another possible implementation, the operation of displaying, by the electronic device, the first interface of the calendar application includes: If the calendar application is started for the first time after being downloaded or the calendar application is started for the first time after version update, and schedule information of at least two schedules is displayed in a card view by default, displaying a second switching prompt pop-up window in the calendar application, where the second switching prompt pop-up window is used to prompt the user to switch a display form of the schedule to a list view; and displaying the first interface in response to a triggering operation on a cancel switching option in the second switching prompt pop-up window.

It should be noted that, the electronic device may directly display the second switching prompt pop-up window, or may display the second switching prompt pop-up window in the manner in the foregoing application scenario shown in FIG. 9A to FIG. 9C. This is not specifically limited in this embodiment of this application. In addition, the triggering operation on the cancel switching option may be a tap operation, a double-tap operation, a touch and hold operation, or the like.

In another possible implementation, the operation of displaying, by the electronic device, the first interface of the calendar application includes: displaying a second interface of the calendar application, where the second interface displays schedule information of at least two schedules that is displayed in a form of a list view; in response to a triggering operation on schedule information of a target schedule, displaying a schedule detail interface corresponding to the target schedule, where the target schedule is any one of the at least two schedules; in response to a triggering operation on a return option in the schedule detail interface of the target schedule, displaying a first switching prompt pop-up window if the schedule detail interface of the target schedule is displayed for the first time after the calendar application is downloaded or is displayed for the first time after a version of the calendar application is updated, where the first switching prompt pop-up window is used to prompt the user to switch a display form of the schedule to a form of a card; and displaying the first interface in response to a triggering operation on a switch to card view option in the first switching prompt pop-up window. For example, for the process, refer to the foregoing application scenario shown in FIG. 10A to FIG. 10C.

Some schedules are schedules to which a user attaches importance, for example, a schedule having an important participant is an important schedule. The important participant may be preset by the electronic device based on an operation of the user. For an operation of setting an important participant by the electronic device based on an operation of the user, refer to the following manner.

In some embodiments, when displaying the setting interface, the electronic device may further receive a first user operation; in response to the first user operation, determine a first important participant, add the first important participant to an important participant list; and display a third interface of the calendar application in response to a second user operation, where if a first schedule whose participant includes the first important participant exists in the at least two schedules in the third interface, a card of the first schedule includes an important identifier.

In an example, for the operation in which the electronic device receives the first user operation when displaying the setting interface, and determines the first important participant in response to the first user operation, refer to the operation in the foregoing application scenario shown in FIG. 14A to FIG. 14F or FIG. 16A to FIG. 16D. Certainly, the electronic device may alternatively determine the first important participant in another manner. For example, when displaying the setting interface, the electronic device may further receive a tap operation performed by the user on an important participant option in the setting interface; and in response to the tap operation on the important participant option, the electronic device may display an important participant recommendation interface, where the important participant recommendation interface may display a plurality of participants, and the plurality of participants are participants who have participated in a historical schedule of the user, and the plurality of participants do not overlap important participants in an important participant list. The user may select at least one participant from the plurality of participants, and in response to the selection operation performed by the user on the at least one participant, the at least one participant is determined as the first important participant, and the first important participant is added to the important participant list.

It should be noted that, the important participant list may be displayed in the important participant recommendation interface, or may be displayed in another interface different from the important participant recommendation interface. This is not specifically limited in this embodiment of this application.

It should be noted that, schedule importance can be improved by setting an important participant. In addition, for a schedule including the important participant, a card of the schedule can include an important identifier, so that a user can learn importance of the schedule by using the important identifier, thereby improving schedule reminding efficiency.

After setting the important participant, the user may further adjust the important participant that is set, for example, may delete some important participants. In this case, card display of the schedule changes.

In some embodiments, after displaying the third interface, the electronic device may further delete the first important participant from the important participant list in response to a third user operation; and display a fourth interface in response to a fourth user operation, where in the fourth interface, the important identifier in the card of the first schedule disappears.

In an example, for the operation in which the electronic device deletes the first important participant from the important participant list in response to the third user operation, refer to the operation in the foregoing application scenario shown in FIG. 20A to FIG. 20C. Certainly, the electronic device may alternatively delete the first important participant from the important participant list in another manner. For example, after displaying the third interface, the electronic device displays the important participant list in the third interface or displays the important participant list in a preview interface form in response to a tap operation on an important participant display button displayed in the third interface; and in response to a tap operation on a delete option corresponding to the first important participant in the important participant list, the electronic device deletes the first important participant from the important participant list.

In an example, the operation in which the electronic device displays the fourth interface in response to the fourth user operation includes: when the important participant recommendation interface is displayed, returning to the setting interface in response to a tap operation on a return option in the important participant recommendation interface; and displaying the fourth interface in response to the tap operation on the return option in the setting interface.

In an example, the operation in which the electronic device displays the fourth interface in response to the fourth user operation includes: exiting the calendar application in response to an exit operation on the calendar application; and in response to a start operation on the calendar application, starting the calendar application and displaying the fourth interface.

In an example, the operation in which the electronic device displays the fourth interface in response to the fourth user operation includes: when the important participation list is displayed in the third interface or the important participant list is displayed in a preview interface form, in response to a disabling operation on the important participant list, canceling display of the important participant list and displaying the fourth interface.

It should be noted that, a deletion operation may be performed on an important participant recorded in the important participant list, so that flexibility of setting an important participant is improved, and interaction with a user is improved.

The user not only may set an important participant in the foregoing manner, but also may set an important participants in another manner.

In some embodiments, the electronic device displays a schedule detail interface of the first schedule in response to a triggering operation on schedule information of the first schedule, where the first schedule is any one of the at least two schedules; displays a participant editing box in response to a triggering operation on a participant setting option in the schedule detail interface of the first schedule, where the participant editing box includes information about at least one participant participating in the first schedule; in response to a selection operation on information about a participant in the participant editing box, sets a participant corresponding to the information of the selected participant as an important participant; and displays an important identifier in the schedule information of the first schedule in response to a triggering operation on a return option in the participant editing box, where the important identifier is used to identify that a corresponding schedule is an importance schedule. For example, for the process, refer made to the operation in the foregoing application scenario shown in FIG. 18A to FIG. 18F.

It should be noted that, an important participant in a participant of any schedule is set, so that importance of the schedule can be improved, and richness of setting an important participant can be improved.

It should be noted that, the user not only may set an important participant to improve importance of a schedule, but also may set a non-important schedule (for example, a common schedule) as an important schedule in another manner.

In a possible implementation, the electronic device displays a schedule detail interface of a second schedule in response to the fourth user operation on schedule information of the second schedule, where the second schedule is any one of the at least two schedules; sets the second schedule as an important schedule in response to a triggering operation on an important option in the schedule detail interface of the second schedule; and displays an important identifier in the schedule information of the second schedule in response to a triggering operation on a return option in the schedule detail interface of the second schedule, where the important identifier is used to identify that a corresponding schedule is an important schedule.

It should be noted that, the fourth user operation may be a tap operation performed on the schedule information of the second schedule. For example, for the process, refer to the foregoing application scenario shown in FIG. 26A to FIG. 26D.

It should be noted that, schedule importance is set in the schedule detail interface, to provide a plurality of channels for setting schedule importance, thereby improving setting diversity.

In another possible implementation, the electronic device displays a second editing box in response to a triggering operation on a second edit button in schedule information of a second schedule, where the second schedule is any one of the at least two schedules; and displays an important identifier in schedule information of the second schedule in response to a triggering operation on an important option in the second editing box, where the important identifier is used to identify that a corresponding schedule is an important schedule. For example, for the process, refer to the foregoing application scenario shown in FIG. 25A to FIG. 25C.

It should be noted that, importance of the second schedule may be set when the second schedule is displayed, thereby improving setting convenience.

In another possible implementation, the electronic device displays a quick schedule preview interface in response to a fifth user operation on schedule information of a second schedule, where the quick schedule preview interface displays a third editing box, and the second schedule is any one of the at least two schedules; and displays an important identifier in the schedule information of the second schedule in response to a triggering operation on an important option in the third editing box, where the important identifier is used to identify that a corresponding schedule is an important schedule.

It should be noted that, the fifth user operation on the schedule information of the second schedule may be a touch and hold operation, a sliding operation, or the like on the schedule information of the second schedule. For example, for the process, refer to the foregoing application scenario shown in FIG. 24A to FIG. 24C.

It should be noted that, schedule importance is set in different manners, thereby improving diversity of setting schedule importance.

Because a user may have a relatively large quantity of schedules, the user may also select an important schedule to facilitate viewing of the important schedule. Similarly, the user may also select a schedule other than the important schedule.

In some embodiments, after displaying the third interface, the electronic device displays, in the third interface, a schedule other than the first schedule in the at least two schedules in response to a third user operation.

It should be noted that, when the electronic device displays the third interface, two types of schedules may be displayed in the third interface. One type is an important schedule, and the other type is another schedule different from the important schedule, that is, a non-important schedule. In addition, the first schedule may be an important schedule. That the electronic device displays, in the third interface, a schedule other than the first schedule in the at least two schedules may be that the electronic device displays, in the third interface, the schedule other than the important schedule.

In an example, the operation in which the electronic device displays, in the third interface, a schedule other than the first schedule in the at least two schedules in response to a third user operation includes: The electronic device displays a setting interface in response to a sixth user operation; displays a schedule display range setting pop-up window in response to a tap operation on a display range option in the setting interface; and displays, in the third interface, the schedule other than the first schedule in the at least two schedules in response to a tap operation on a non-important schedule option in the schedule display range pop-up window. Alternatively, the setting interface displays a non-important schedule option; and in response to a tap operation on the non-important schedule option in the setting interface, the schedule other than the first schedule in the at least two schedules is displayed in the third interface.

Similarly, the electronic device displays a setting interface in response to a sixth user operation; displays a schedule display range setting pop-up window in response to a tap operation on a display range option in the setting interface; and displays, in the third interface, an important schedule in the at least two schedules that includes the first schedule. Alternatively, the setting interface displays an important schedule option; and in response to a tap operation on the important schedule option in the setting interface, a schedule in the at least two schedules that includes the first schedule is displayed in the third interface. In other words, a schedule with an important identifier is displayed in a card displayed in the third interface.

It should be noted that, a corresponding schedule can be displayed based on schedule importance, which helps a user quickly learn a specific important schedule from a plurality of displayed schedules, thereby improving schedule reminding efficiency.

The electronic device not only may set importance of a schedule through a user operation, but also may set a schedule type of a schedule.

In some embodiments, the electronic device displays a schedule detail interface of the first schedule in response to a triggering operation on schedule information of the first schedule, where the first schedule is any schedule recorded in the calendar application; displays a classification interface in response to a triggering operation on a classify option in the schedule detail interface; and in response to a selection operation on a type option in the classification interface, sets a schedule type corresponding to the selected type option as a schedule type of the first schedule. For example, for the process, refer to the foregoing application scenario shown in FIG. 32A to FIG. 32C.

In an example, the electronic device not only sets the schedule type of the schedule of the first schedule by referring to the manner in the foregoing application scenario shown in FIG. 32A to FIG. 32C, but also may set the schedule type in another manner. For example, the schedule information of the first schedule displays a schedule type; a classification interface is displayed in response to a tap operation on the schedule type of the first schedule; and in response to a selection operation on a type option in the classification interface, a schedule type corresponding to the selected type option is set as the schedule type of the first schedule.

It should be noted that, the electronic device can set a schedule type of a schedule through a user operation, so that setting flexibility is ensured.

Because the electronic device can set a schedule type of a schedule through a user operation, the user may only not display a schedule based on schedule importance, but also may display a schedule in another manner, for example, display a corresponding schedule based on a schedule type.

In some embodiments, when displaying the first interface or the second interface, the electronic device receives a selection operation on a schedule type control; and displays, in the first interface or the second interface in response to the selection operation, a schedule in the at least two schedules that has a schedule type the same as that corresponding to the selection operation.

In an example, for the operation in which the electronic device displays, in the first interface or the second interface in response to the selection operation, a schedule in the at least two schedules that has a schedule type the same as that corresponding to the selection operation, refer to the operation in the application scenario shown in FIG. 33A to FIG. 33C or FIG. 34A to FIG. 34C. Certainly, the electronic device may alternatively implement the operation in another manner. For example, the electronic device can display a prompt box in response to a selection operation, where the prompt box displays a confirm option and a cancel option; and displays, in the first interface or the second interface in response to a tap operation on the confirm option, a schedule in the at least two schedules that has a schedule type the same as that corresponding to the selection operation.

It should be noted that, the schedule type control may be a select option described in the foregoing embodiment, or may be a schedule type selection button displayed in the first interface or the second interface.

It should be noted that, a corresponding schedule can be displayed based on a schedule type selected by a user, thereby improving schedule display richness and interaction with the user.

In this embodiment of this application, in a process of using the calendar application, a user can switch a display form of schedule information at any time, thereby improving display richness of the schedule information and improving interaction with the user. In addition, the display form of the schedule information may be switched from the list view to the form of the card, and the card has a relatively large display area and can display information that cannot be displayed in the list view. Therefore, it is ensured that more detailed information of a schedule is displayed, and the user can learn more information without performing a tap operation on the displayed card, thereby improving convenience and efficiency of viewing detailed information of a schedule by the user.

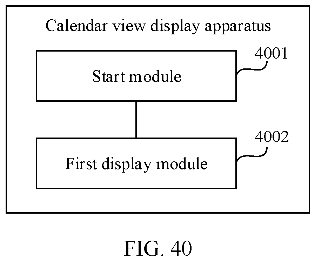

FIG. 40 is a schematic diagram of a structure of a calendar view display apparatus according to an embodiment of this application. The apparatus may be implemented as a part or all of an electronic device by using software, hardware, or a combination thereof. The electronic device may be the electronic device shown in FIG. 2. Referring to FIG. 40, the apparatus includes a start module 4001 and a first display module 4002.

The start module 4001 is configured to start a calendar application in response to a triggering operation on the calendar application.

The first display module 4002 is configured to display a first interface of the calendar application, where the first interface displays schedule information of at least two schedules, the schedule information of the at least two schedules is displayed in a form of a card, and for schedule information of each of the at least two schedules, an amount of information displayed in the form of the card is greater than an amount of information displayed in a list view.

In an example of this application, the card displays basic information and target information that are of a corresponding schedule, the target information is information that cannot be displayed in the list view, and the target information includes one or more of a schedule source, a schedule classification, a schedule inviter, and a schedule participant.

In an example of this application, a title region, a first operation region, an information display region, and a second operation region are disposed in the card.

The title region is used to display the schedule source, the first operation region is used to display an edit option for performing an editing operation on schedule information in the card, the information display region is used to display basic information and target information that are of a corresponding schedule, and the second operation region is used to display a dedicated operation option for schedule information displayed in the card.

In an example of this application, a hot card region is disposed in the card, a third-party interface can be displayed after information displayed in the hot card region is triggered, and the third-party interface is another interface different from the first interface in the calendar application, or the third-party interface is an interface of a third-party application.

In an example of this application, the first display module 4002 is configured to:
display a second interface of the calendar application, where the second interface displays schedule information of at least two schedules that is displayed in a form of the list view; and
switch a display form of the schedule information of the at least two schedules from the list view to the form of the card in response to a triggering operation on a style switching option in the second interface, to display the first interface.

In an example of this application, the first display module 4002 is configured to:
display a second interface of the calendar application, where the second interface displays schedule information of at least two schedules that is displayed in a form of the list view;
display a first editing box in response to a triggering operation on a first edit option in the second interface;
display a setting interface in response to a triggering operation on a set option in the first editing box; and
display the first interface in response to a setting operation in the setting interface.

In an example of this application, the first display module 4002 is configured to:
display a schedule view selection interface in response to a triggering operation on a schedule display style option in the setting interface;
switch a display form of the schedule information of the at least two schedules from the list view to the form of the card in response to a triggering operation on a card view option in the schedule view selection interface; and
display the first interface in response to a triggering operation on a return option in the setting interface.

In an example of this application, the apparatus further includes:
a receiving module, configured to receive a first user operation when the setting interface is displayed;
a first determining module, configured to: determine a first important participant in response to the first user operation, and add the first important participant to an important participant list; and
a second display module, configured to display a third interface of the calendar application in response to a second user operation, where if a first schedule whose participant includes the first important participant exists in the at least two schedules in the third interface, a card of the first schedule includes an important identifier.

In an example of this application, the apparatus further includes:
a deletion module, configured to: after the third interface is displayed, delete the first important participant from the important participant list in response to a third user operation; and
a third display module, configured to display a fourth interface in response to a fourth user operation, where in the fourth interface, the important identifier in the card of the first schedule disappears.

In an example of this application, the apparatus further includes:
a fourth display module, configured to: after the third interface is displayed, display, in the third interface, a schedule other than the first schedule in the at least two schedules in response to a third user operation.

In an example of this application, the apparatus further includes:
a fifth display module, configured to display a schedule detail interface of the first schedule in response to a triggering operation on schedule information of the first schedule, where the first schedule is any one of the at least two schedules;
a sixth display module, configured to display a participant editing box in response to a triggering operation on a participant setting option in the schedule detail interface of the first schedule, where the participant editing box includes information about at least one participant participating in the first schedule;
a first setting module, configured to: in response to a selection operation on participant information in the participant editing box, set a participant corresponding to the selected participant information as an important participant; and
a seventh display module, configured to display an important identifier in the schedule information of the first schedule in response to a triggering operation on a return option in the participant editing box, where the important identifier is used to identify that a corresponding schedule is an important schedule.

In an example of this application, the apparatus further includes:
an eighth display module, configured to display a schedule detail interface of a second schedule in response to the fourth user operation on schedule information of the second schedule, where the second schedule is any one of the at least two schedules;
a second setting module, configured to set the second schedule as an important schedule in response to a triggering operation on an important option in the schedule detail interface of the second schedule; and
a ninth display module, configured to display an important identifier in the schedule information of the second schedule in response to a triggering operation on a return option in the schedule detail interface of the second schedule, where the important identifier is used to identify that a corresponding schedule is an important schedule.

In an example of this application, the apparatus further includes:
a tenth display module, configured to display a second editing box in response to a triggering operation on a second edit button in schedule information of a second schedule, where the second schedule is any one of the at least two schedules; and
an eleventh display module, configured to display an important identifier in the schedule information of the second schedule in response to a triggering operation on an important option in the second editing box, where the important identifier is used to identify that a corresponding schedule is an important schedule.

In an example of this application, the apparatus further includes:
a twelfth display module, configured to display a quick schedule preview interface in response to a fifth user operation on schedule information of a second schedule, where the quick schedule preview interface displays a third editing box, and the second schedule is any one of the at least two schedules; and
a thirteenth display module, configured to display an important identifier in the schedule information of the second schedule in response to a triggering operation on an important option in the third editing box, where the important identifier is used to identify that a corresponding schedule is an important schedule.

In an example of this application, the apparatus further includes:
a fourteenth display module, configured to display a schedule detail interface of the first schedule in response to a triggering operation on schedule information of the first schedule, where the first schedule is any schedule recorded in the calendar application;
a fifteenth display module, configured to display a classification interface in response to a triggering operation on a classify option in the schedule detail interface; and
a third setting module, configured to: in response to a selection operation on a type option in the classification interface, set a schedule type corresponding to the selected type option as a schedule type of the first schedule.

In an example of this application, the apparatus further includes:
a receiving module, configured to receive a selection operation on a schedule type control when the first interface or the second interface is displayed, where the second interface displays schedule information of at least two schedules that is displayed in a form of the list view; and
a sixteenth display module, configured to display, in the first interface or the second interface in response to the selection operation, a schedule in the at least two schedules that has a schedule type the same as that corresponding to the selection operation.

In this embodiment of this application, in a process of using the calendar application, a user can switch a display form of schedule information at any time, thereby improving display richness of the schedule information and improving interaction with the user. In addition, the display form of the schedule information may be switched from the list view to the form of the card, and the card has a relatively large display area and can display information that cannot be displayed in the list view. Therefore, it is ensured that more detailed information of a schedule is displayed, and the user can learn more information without performing a tap operation on the displayed card, thereby improving convenience and efficiency of viewing detailed information of a schedule by the user.

It should be noted that, when the calendar view display apparatus provided in the foregoing embodiment displays a calendar view, division of the foregoing functional modules is merely used as an example for description. In actual application, the foregoing functions may be allocated to different functional modules based on a requirement for completion, to be specific, an internal structure of the apparatus is divided into different functional modules, to complete all or some of the functions described above.

Functional units and modules in the foregoing embodiments may be integrated into one processing unit, or each of the units may exist alone physically, or two or more units may be integrated into one unit. The integrated unit may be implemented in a form of hardware, or may be implemented in a form of a software functional unit. In addition, specific names of the functional units and modules are merely for the purpose of distinguishing between each other, and are not used to limit the protection scope of the embodiments of this application.

The calendar view display apparatus provided in the foregoing embodiment belongs to a same concept as the embodiment of the calendar view display method. For specific working processes and achieved technical effects of the units and the modules in the foregoing embodiment, refer to the method embodiment. Details are not described herein again.

All or some of the foregoing embodiments may be implemented by using software, hardware, firmware, or any combination thereof. When the software is used for implementation, some or all of the embodiments may be implemented in a form of a computer program product. The computer program product includes one or more computer instructions. When the computer instructions are loaded and executed on a computer, all or some of procedures or functions according to the embodiments of this application are produced. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired manner (for example, a coaxial cable, an optical fiber, or a digital subscriber line (digital subscriber line, DSL)) or a wireless manner (for example, infrared, wireless, or microwave). The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital versatile disc (Digital Versatile Disc, DVD)), or a semiconductor medium (for example, a solid state disk (Solid State Disk, SSD)).

The foregoing descriptions are merely optional embodiments provided in this application, but are not intended to limit this application. Any modification, equivalent replacement, and improvement made within the technical scope disclosed in this application shall fall within the protection scope of this application.

## Claims

1. A calendar view display method, wherein the method comprises:
starting a calendar application in response to a triggering operation on the calendar application;
displaying a second interface of the calendar application, wherein the second interface displays schedule information of at least two schedules that is displayed in a form of a list view; and
displaying a first interface of the calendar application in response to a display form switching operation, wherein the first interface comprises schedule information that is of a schedule and that is displayed in a form of a card, and for the schedule information of the schedule, an amount of information displayed in the form of the card is greater than an amount of information displayed in the list view.

2. The method according to claim 1, wherein the method further comprises:
displaying an important identifier in a card of a second schedule in response to an operation on the card of the second schedule, wherein the important identifier is used to identify that a corresponding schedule is an important schedule, and the second schedule is any schedule that is in the first interface and whose schedule information is displayed in the form of the card.

3. The method according to claim 2, wherein the displaying an important identifier in a card of a second schedule in response to an operation on the card of the second schedule comprises:
in response to a triggering operation on the card of the second schedule, displaying an editing box comprising an important option; and
displaying the important identifier in the card of the second schedule in response to a triggering operation on the important option.

4. The method according to claim 2, wherein the displaying an important identifier in a card of a second schedule in response to an operation on the card of the second schedule comprises:
displaying a schedule detail interface of the second schedule in response to a fourth user operation on the card of the second schedule; and
displaying the important identifier in the card of the second schedule in response to a triggering operation on an important option in the schedule detail interface of the second schedule.

5. The method according to any one of claims 2-4, wherein the card of the second schedule displays the important identifier, and the method further comprises:
canceling display of the important identifier in the card of the second schedule in response to a display cancellation operation on the important identifier in the card of the second schedule.

6. The method according to claim 5, wherein the canceling display of the important identifier in the card of the second schedule in response to a display cancellation operation on the important identifier in the card of the second schedule comprises:
in response to a triggering operation on the card of the second schedule, displaying an editing box comprising a cancel important option; and
canceling display of the important identifier in the card of the second schedule in response to a triggering operation on the cancel important option.

7. The method according to claim 5, wherein the canceling display of the important identifier in the card of the second schedule in response to a display cancellation operation on the important identifier in the card of the second schedule comprises:
displaying the schedule detail interface of the second schedule in response to the fourth user operation on the card of the second schedule; and
canceling display of the important identifier in the card of the second schedule in response to a triggering operation on a cancel important option in the schedule detail interface of the second schedule.

8. The method according to claim 1, wherein the method further comprises:
displaying, in response to a selection operation on an important schedule when the first interface or the second interface is displayed, a schedule whose schedule type is an important schedule; and
displaying all schedules in response to a display restoration operation on all the schedules.

9. The method according to claim 8, wherein the displaying, in response to a selection operation on an important schedule when the first interface or the second interface is displayed, a schedule whose schedule type is an important schedule comprises:
displaying a selection interface in response to a selection operation when the first interface or the second interface is displayed; and
in response to a selection operation on a schedule type in the selection interface, displaying, when the schedule type selected through the selection operation is an important type, a schedule whose schedule type is an important schedule.

10. The method according to claim 8, wherein the displaying, in response to a selection operation on an important schedule when the first interface or the second interface is displayed, a schedule whose schedule type is an important schedule comprises:
displaying a setting interface in response to a sixth user operation when the first interface or the second interface is displayed;
displaying a schedule display range setting pop-up window in response to a tap operation on a display range option in the setting interface; and
displaying an important schedule in the first interface or the second interface in response to a tap operation on an important schedule option in the display range setting pop-up window.

11. The method according to claim 1, wherein when the first interface is displayed, one card displays schedule information of one schedule, schedule information of different types of schedules has different layouts in corresponding cards, and card styles of the cards corresponding to the different types of schedules are different.

12. The method according to claim 1, wherein the card displays basic information and target information that are of a corresponding schedule, the target information is information that cannot be displayed in the list view, and the target information comprises one or more of a schedule source, a schedule classification, a schedule inviter, and a schedule participant.

13. The method according to claim 12, wherein a title region, a first operation region, an information display region, and a second operation region are disposed in the card; and
the title region is used to display the schedule source, the first operation region is used to display an edit option for performing an editing operation on schedule information in the card, the information display region is used to display basic information and target information that are of a corresponding schedule, and the second operation region is used to display a dedicated operation option for schedule information displayed in the card.

14. The method according to claim 12, wherein a hot card region is disposed in the card, a third-party interface can be displayed after information displayed in the hot card region is triggered, and the third-party interface is another interface different from the first interface in the calendar application, or the third-party interface is an interface of a third-party application.

15. A calendar view display method, wherein the method comprises:
starting a calendar application in response to a triggering operation on the calendar application; and
displaying a first interface of the calendar application, wherein the first interface displays schedule information of at least two schedules, the schedule information of the at least two schedules is displayed in a form of a card, and for schedule information of each of the at least two schedules, an amount of information displayed in the form of the card is greater than an amount of information displayed in a list view.

16. The method according to claim 15, wherein the card displays basic information and target information that are of a corresponding schedule, the target information is information that cannot be displayed in the list view, and the target information comprises one or more of a schedule source, a schedule classification, a schedule inviter, and a schedule participant.

17. The method according to claim 16, wherein a title region, a first operation region, an information display region, and a second operation region are disposed in the card; and
the title region is used to display the schedule source, the first operation region is used to display an edit option for performing an editing operation on schedule information in the card, the information display region is used to display basic information and target information that are of a corresponding schedule, and the second operation region is used to display a dedicated operation option for schedule information displayed in the card.

18. The method according to claim 16, wherein a hot card region is disposed in the card, a third-party interface can be displayed after information displayed in the hot card region is triggered, and the third-party interface is another interface different from the first interface in the calendar application, or the third-party interface is an interface of a third-party application.

19. The method according to claim 15, wherein the displaying a first interface of the calendar application comprises:
displaying a second interface of the calendar application, wherein the second interface displays schedule information of at least two schedules that is displayed in a form of the list view; and
switching a display form of the schedule information of the at least two schedules from the list view to the form of the card in response to a triggering operation on a style switching option in the second interface, to display the first interface.

20. The method according to claim 15, wherein the displaying a first interface of the calendar application comprises:
displaying a second interface of the calendar application, wherein the second interface displays schedule information of at least two schedules that is displayed in a form of the list view;
displaying a first editing box in response to a triggering operation on a first edit option in the second interface;
displaying a setting interface in response to a triggering operation on a set option in the first editing box; and
displaying the first interface in response to a setting operation in the setting interface.

21. The method according to claim 20, wherein the displaying the first interface in response to a setting operation in the setting interface comprises:
displaying a schedule view selection interface in response to a triggering operation on a schedule display style option in the setting interface;
switching a display form of the schedule information of the at least two schedules from the list view to the form of the card in response to a triggering operation on a card view option in the schedule view selection interface; and
displaying the first interface in response to a triggering operation on a return option in the setting interface.

22. The method according to claim 20, wherein the method further comprises:
receiving a first user operation when the setting interface is displayed;
determining a first important participant in response to the first user operation, and adding the first important participant to an important participant list; and
displaying a third interface of the calendar application in response to a second user operation, wherein if a first schedule whose participant comprises the first important participant exists in the at least two schedules in the third interface, a card of the first schedule comprises an important identifier.

23. The method according to claim 22, wherein the method further comprises:
after the third interface is displayed, deleting the first important participant from the important participant list in response to a third user operation; and
displaying a fourth interface in response to a fourth user operation, wherein in the fourth interface, the important identifier in the card of the first schedule disappears.

24. The method according to claim 22, wherein the method further comprises:
after the third interface is displayed, displaying, in the third interface, a schedule other than the first schedule in the at least two schedules in response to a third user operation.

25. The method according to any one of claims 15-24, wherein the method further comprises:
displaying a schedule detail interface of the first schedule in response to a triggering operation on schedule information of the first schedule, wherein the first schedule is any one of the at least two schedules;
displaying a participant editing box in response to a triggering operation on a participant setting option in the schedule detail interface of the first schedule, wherein the participant editing box comprises information about at least one participant participating in the first schedule;
in response to a selection operation on participant information in the participant editing box, setting a participant corresponding to the selected participant information as an important participant; and
displaying an important identifier in the schedule information of the first schedule in response to a triggering operation on a return option in the participant editing box, wherein the important identifier is used to identify that a corresponding schedule is an important schedule.

26. The method according to any one of claims 15-24, wherein the method further comprises:
displaying a schedule detail interface of a second schedule in response to the fourth user operation on schedule information of the second schedule, wherein the second schedule is any one of the at least two schedules;
setting the second schedule as an important schedule in response to a triggering operation on an important option in the schedule detail interface of the second schedule; and
displaying an important identifier in the schedule information of the second schedule in response to a triggering operation on a return option in the schedule detail interface of the second schedule, wherein the important identifier is used to identify that a corresponding schedule is an important schedule.

27. The method according to any one of claims 15-24, wherein the method further comprises:
displaying a second editing box in response to a triggering operation on a second edit button in schedule information of a second schedule, wherein the second schedule is any one of the at least two schedules; and
displaying an important identifier in the schedule information of the second schedule in response to a triggering operation on an important option in the second editing box, wherein the important identifier is used to identify that a corresponding schedule is an important schedule.

28. The method according to any one of claims 15-24, wherein the method further comprises:
displaying a quick schedule preview interface in response to a fifth user operation on schedule information of a second schedule, wherein the quick schedule preview interface displays a third editing box, and the second schedule is any one of the at least two schedules; and
displaying an important identifier in the schedule information of the second schedule in response to a triggering operation on an important option in the third editing box, wherein the important identifier is used to identify that a corresponding schedule is an important schedule.

29. The method according to any one of claims 15-24, wherein the method further comprises:
displaying a schedule detail interface of the first schedule in response to a triggering operation on schedule information of the first schedule, wherein the first schedule is any schedule recorded in the calendar application;
displaying a classification interface in response to a triggering operation on a classify option in the schedule detail interface; and
in response to a selection operation on a type option in the classification interface, setting a schedule type corresponding to the selected type option as a schedule type of the first schedule.

30. The method according to any one of claims 15-24, wherein the method further comprises:
receiving a selection operation on a schedule type control when the first interface or the second interface is displayed, wherein the second interface displays schedule information of at least two schedules that is displayed in a form of the list view; and
displaying, in the first interface or the second interface in response to the selection operation, a schedule in the at least two schedules that has a schedule type the same as that corresponding to the selection operation.

31. An electronic device, wherein the electronic device comprises a processor and a memory; the memory is configured to store a program that supports the electronic device in performing the method provided in any one of claims 1-14 or 15-30, and store data used to implement the method according to any one of claims 1-14 or 15-30; and the processor is configured to perform the program stored in the memory.

32. A computer-readable storage medium, wherein the computer-readable storage medium stores instructions, and when the instructions are run on a computer, the computer is enabled to perform the method according to any one of claims 1-14 or 15-30.
